(19) Europäisches Patentamt
European Patent Office
Office européen des brevets

(11) **EP 4 531 321 A1**

(12) **EUROPEAN PATENT APPLICATION**

(43) Date of publication:
**02.04.2025 Bulletin 2025/14**

(21) Application number: **24202966.8**

(22) Date of filing: **26.09.2024**

(51) International Patent Classification (IPC):
**H04L 5/00** $^{(2006.01)}$ **H04L 1/08** $^{(2006.01)}$

(52) Cooperative Patent Classification (CPC):
**H04L 5/0023; H04L 1/08; H04L 5/0044;**
**H04L 5/0094;** H04L 5/0051

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **26.09.2023 US 202363540418 P**

(71) Applicant: **Comcast Cable Communications, LLC**
**Philadelphia, PA 19103 (US)**

(72) Inventors:
• **CIRIK, Ali Cagatay**
**Philadelphia, 19103 (US)**
• **ZHOU, Hua**
**Philadelphia, 19103 (US)**
• **DINAN, Esmael Hejazi**
**Philadelphia, 19103 (US)**
• **JEON, Hyoungsuk**
**Philadelphia, 19103 (US)**

(74) Representative: **V.O.**
**P.O. Box 87930**
**2508 DH Den Haag (NL)**

(54) **ENERGY SAVING FOR REFERENCE SIGNALS**

(57) A wireless device may communicate with a base station using different configurations. The use of the different configurations may be indicated by a field in a control message, or alternatively, an absence of the field may indicate the use of the different configurations. Based on receiving the control message, the wireless device may use the different configurations to communicate with a base station. A same modulation order may be used for the first configuration and the second configuration.

Receive, by a wireless device, one or more messages comprising:
a repetition scheme parameter indicating a frequency domain scheme; and
a downlink-or-joint transmission configuration indication (TCI) state list parameter indicating a list of TCI states for both uplink transmissions and downlink reception;
2610

Receive downlink control information (DCI) configured to schedule a physical downlink shared channel (PDSCH) reception with a number of resource blocks (RBs);
2620

Based on a TCI selection field in the DCI indicating to use two TCI states for the PDSCH reception or based on a TCI selection field not being configured in the DCI:
receive, using a first TCI state of the two TCI states, one or more first RBs of the number of the RBs of the PDSCH reception; and
receive, using a second TCI state of the two TCI states, one or more second RBs of the number of the RBs of the PDSCH reception.
2630

**FIG. 26A**

# EP 4 531 321 A1

**Description**

CROSS-REFERENCE TO RELATED APPLICATIONS

This application claims the benefit of U.S. Provisional Application No. 63/540,418 filed on September 26, 2023. The above-referenced application is hereby incorporated by reference in its entirety.

BACKGROUND

A wireless device communicates with a base station. The wireless device receives configuration parameters for communicating via a cell. The configuration parameters include scheduling information.

SUMMARY

The following summary presents a simplified summary of certain features. The summary is not an extensive overview and is not intended to identify key or critical elements.

A base station may communicate with a wireless device. The wireless device may send and/or receive signals using at least two different configurations. A field indicating to use two different configurations may be sent via a control message, or an absence of a field in the control message may indicate to use two different configurations. Based on receiving the field or determining an absence of the field in the control message, two different configurations may be used by the wireless device to receive signals from the base station. For example, a modulation order may be used to receive signals via a first configuration, and the same modulation order may be used to receive signals via a second figuration. Additionally or alternatively, in examples where both of the two configurations may or may not be required, such as if a base station dynamically activates or deactivates a specific transmission/reception point to conserve energy, a control parameter may be used to indicate which transmission/reception point will be activated or deactivated so that a wireless device may use the corresponding configuration(s).

These and other features and advantages are described in greater detail below.

BRIEF DESCRIPTION OF THE DRAWINGS

Examples of several of the various embodiments of the present disclosure are described herein with reference to the drawings.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

FIG. 10B shows example group of cells.

FIG. 11A shows an example mapping of one or more synchronization signal/physical broadcast channel (SS/PBCH) blocks.

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein

FIG. 16A, FIG. 16B, FIG. 16C, and FIG. 16D show examples of uplink and downlink signal transmission.

FIG. 17 shows an example of discontinuous transmission (DTX) and/or discontinuous reception (DRX).

FIG. 18 shows an example of a transmission configuration indicator (TCI) state activation command.

FIG. 19A shows an example of a control command.

FIG. 19B shows an example of a control command.

FIG. 20 shows an example of a channel state information (CSI) report configuration.

FIG. 21 shows an example of a sounding reference signal (SRS) configuration.

FIG. 22A shows an example of DTX and/or DRX.

FIG. 22B shows an example of DTX and/or DRX.

FIG. 23A shows an example of DTX and/or DRX.

FIG. 23B shows an example of DTX and/or DRX.

FIG. 24A shows an example method of energy saving for CSI reference signal (CSI-RS) communication.

FIG. 24B shows an example method of energy saving for CSI reference signal (CSI-RS) communication.

FIG. 25A shows an example method of energy saving for SRS communication.

FIG. 25B shows an example method of energy saving for SRS communication.

FIG. 26A shows an example method of scheduling communications using at least two TCI states.

EP 4 531 321 A1

FIG. 26B shows an example method of scheduling communications using at least two TCI states.

FIG. 27A shows an example method of scheduling communications using at least two TCI states.

FIG. 27B shows an example method of scheduling communications using at least two TCI states.

## DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

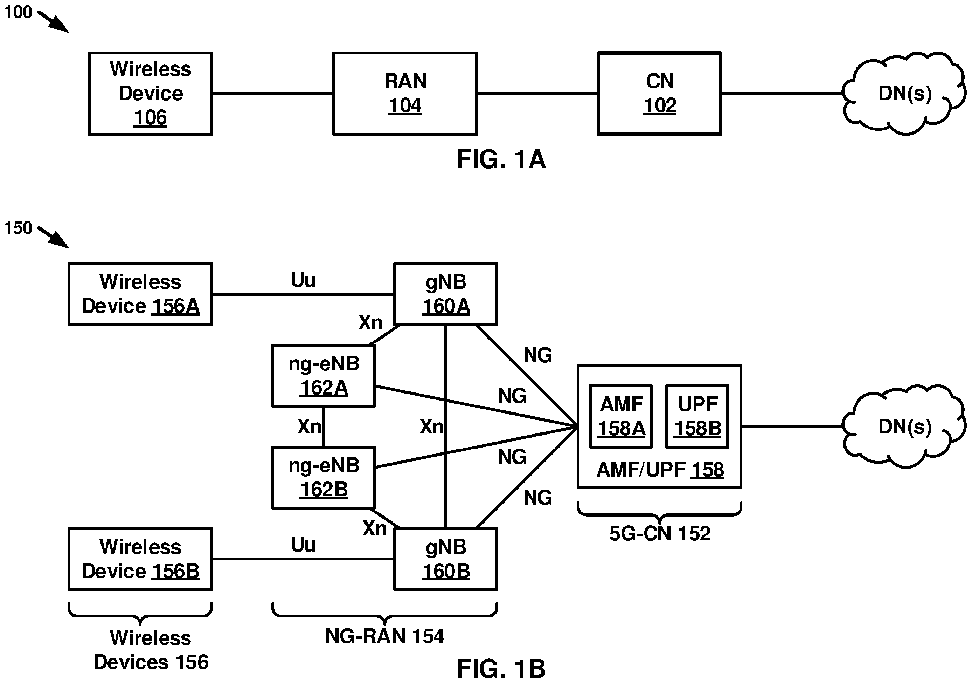

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e. g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMFIUPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

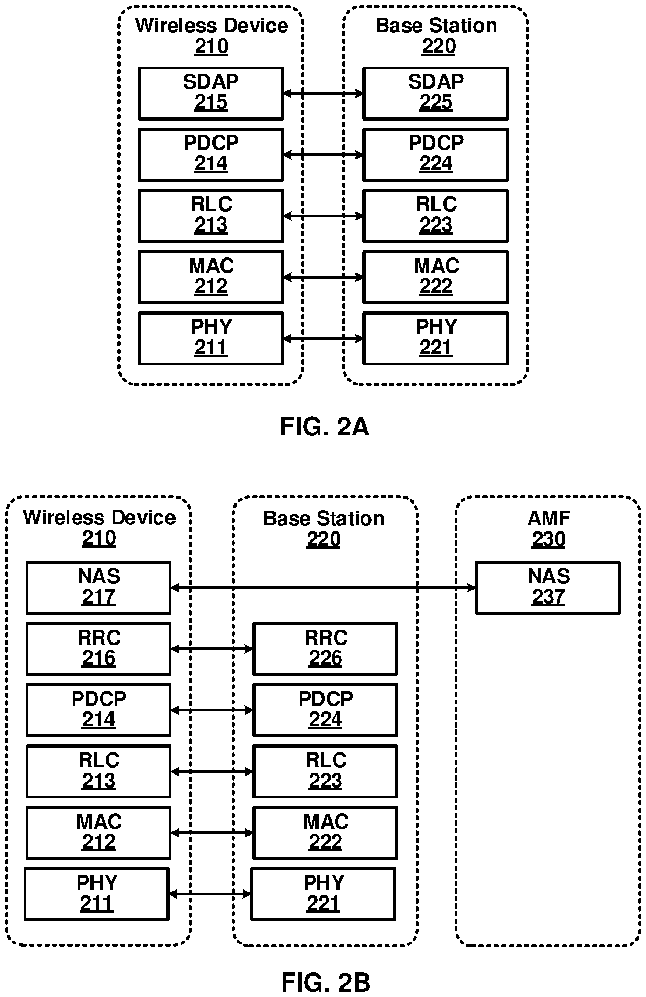

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

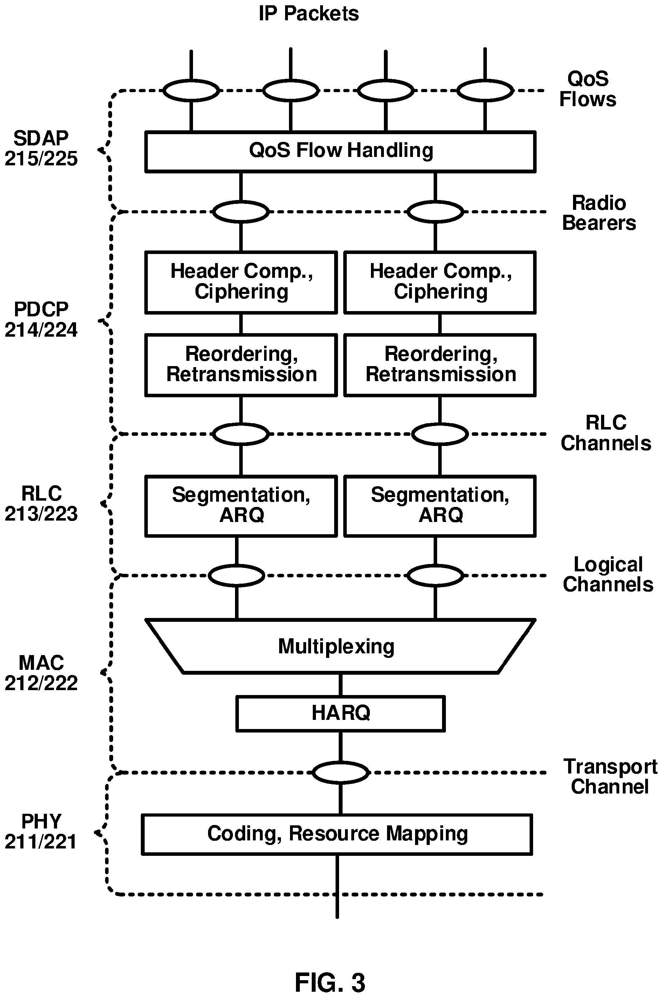

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/demapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)). The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

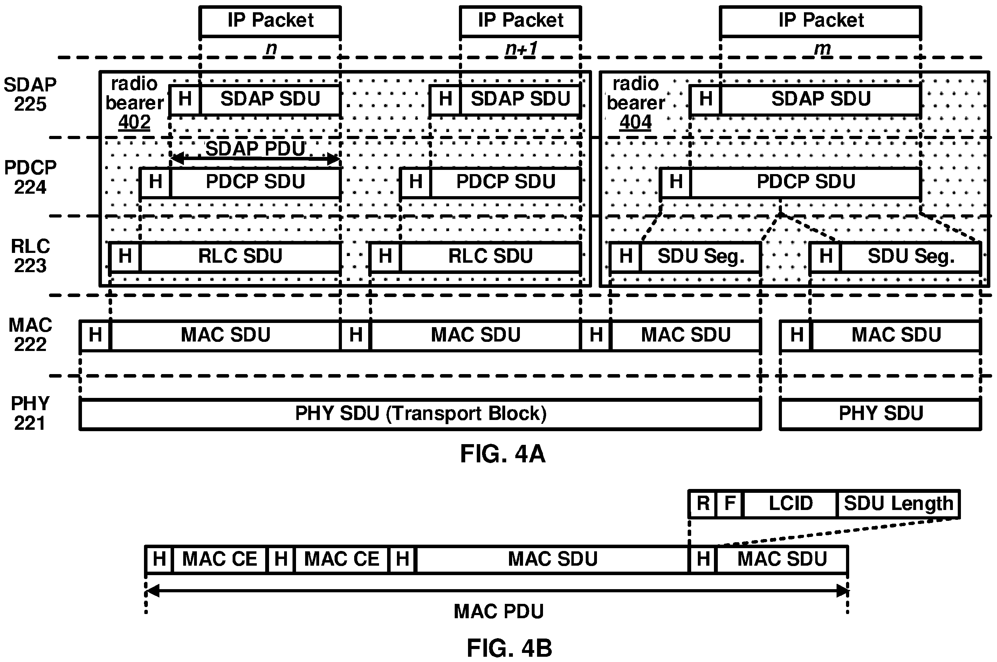

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a quantity/-number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

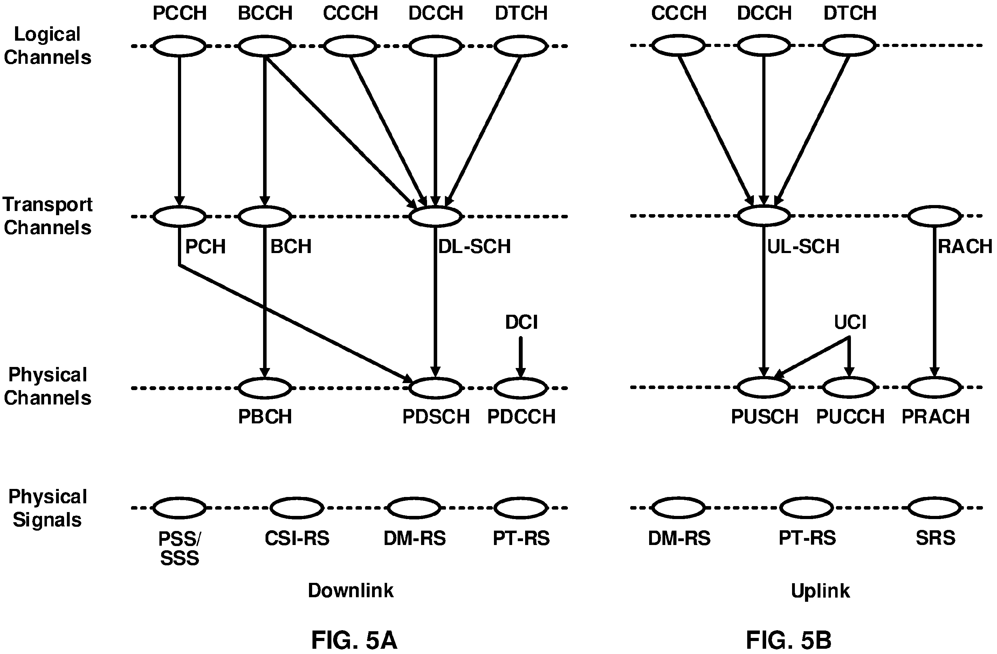

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless device).

A logical channel may be defined by the type of information it carries. The set of logical channels (e.g., in an NR configuration) may comprise one or more channels described below. A paging control channel (PCCH) may comprise/-carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT-RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

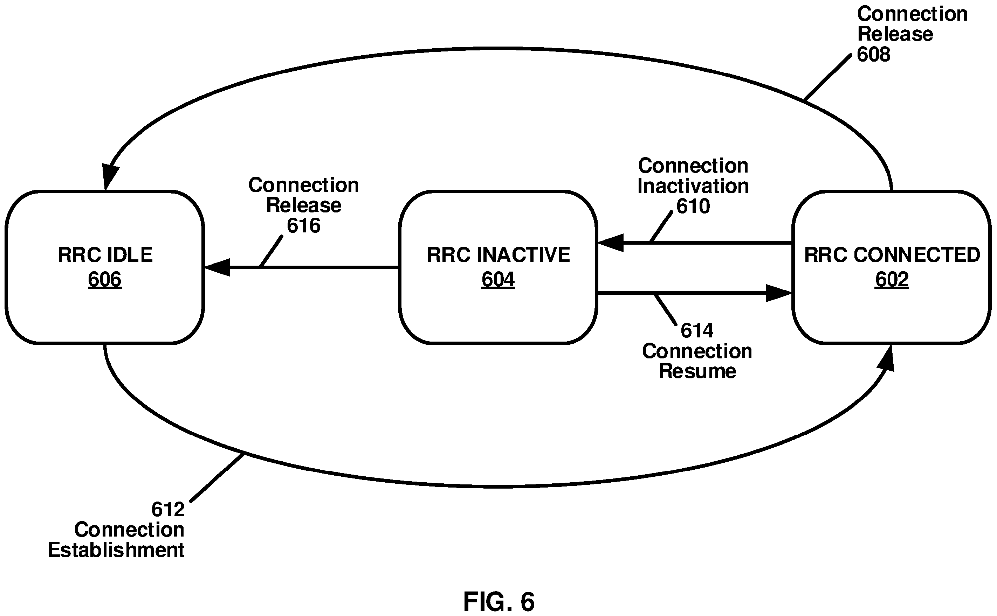

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split in two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

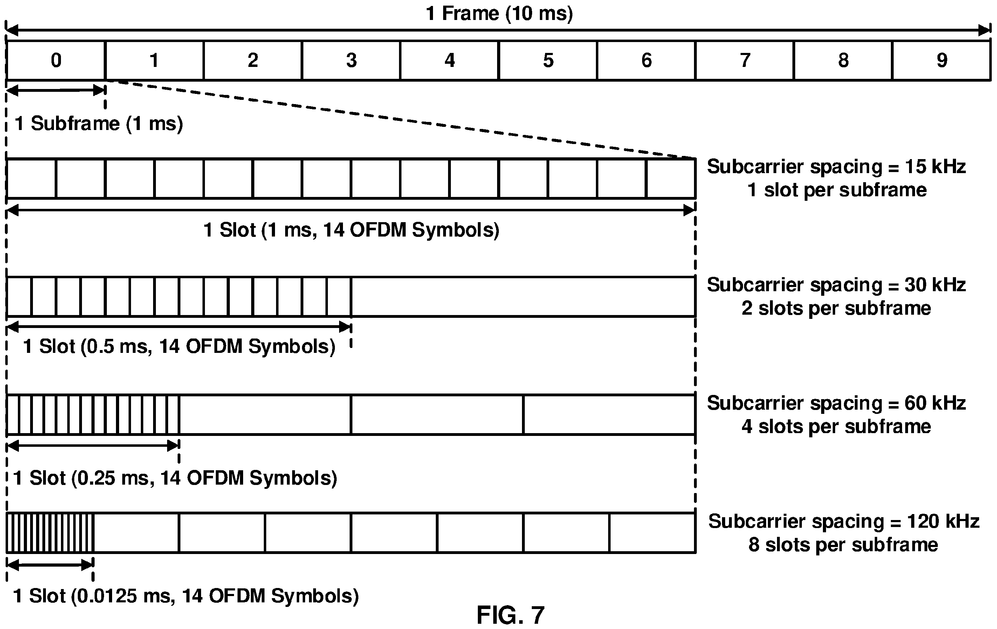

FIG. 7 shows an example configuration of a frame. The frame may comprise, for example, an NR radio frame into which OFDM symbols may be grouped. A frame (e.g., an NR radio frame) may be identified/indicated by a system frame quantity/number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 μs, for example, for a numerology in an NR configuration or any other radio configurations. Numerologies may be defined with the following subcarrier spacing/cyclic prefix duration combinations: 15 kHz/4.7 μs; 30 kHz/2.3 μs; 60 kHz/1.2 μs; 120 kHz/0.59 μs; 240 kHz/0.29 μs, and/or any other subcarrier spacing/cyclic prefix duration combinations.

A slot may have a fixed quantity/number of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

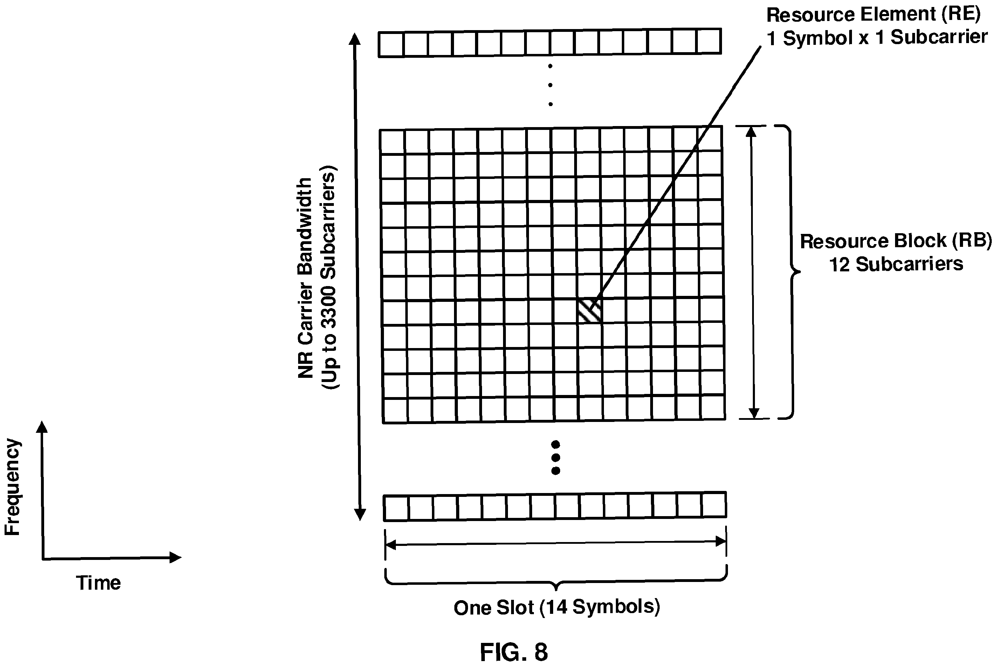

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or $275 \times 12 = 3300$ subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e. g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/-detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access

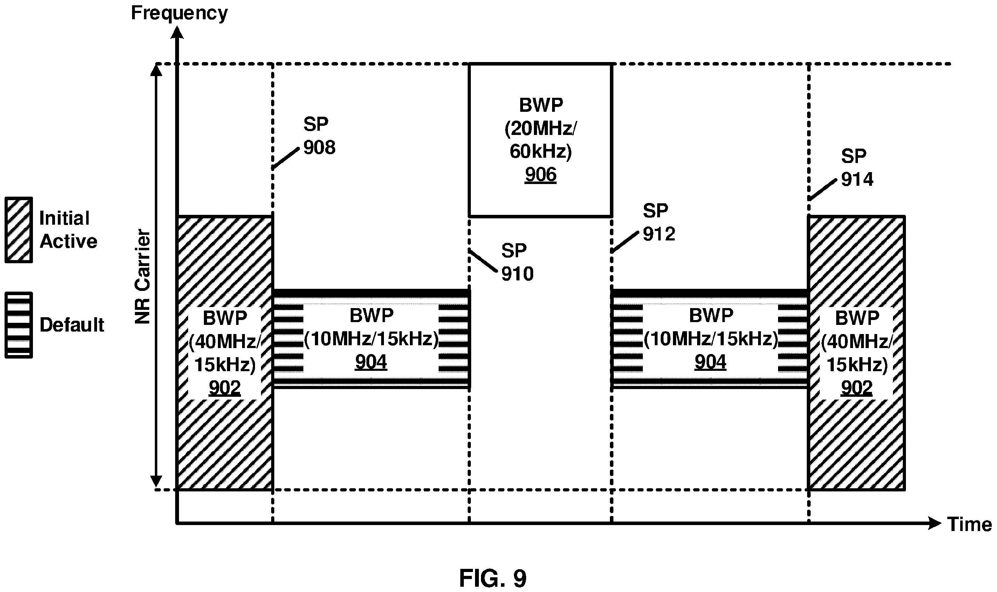

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating BWP 904 as the active BWP. The wireless device may switch at a switching point 910 from an active BWP 904 to the BWP 906, for example, after or in response receiving DCI indicating BWP 906 as a new active BWP. The wireless device may switch at a switching point 912 from an active BWP 906 to the BWP 904, for example, a based on (e.g., after or in response to) an expiry of a BWP inactivity timer. The wireless device may switch at the switching point 912 from an active BWP 906 to the BWP 904, for example, after or in response receiving DCI indicating BWP 904 as a new active BWP. The wireless device may switch at a switching point 914 from an active BWP 904 to the BWP 902, for example, after or in response receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a quantity/number of serving cells for the wireless device (e.g., one serving cell for a CC), for example, if CA is configured/used. The CCs may have multiple configurations in the frequency domain.

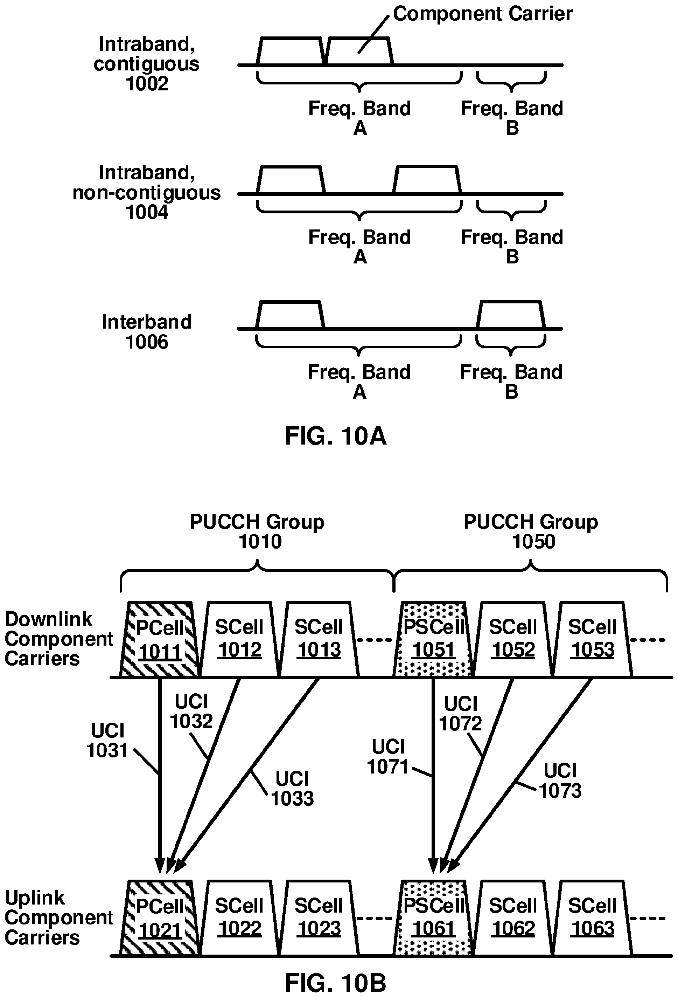

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/-configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger quantity/number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (orPSCell) 1051 (e.g., a DL SCC), an SCell 1052 (e.g., aDL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

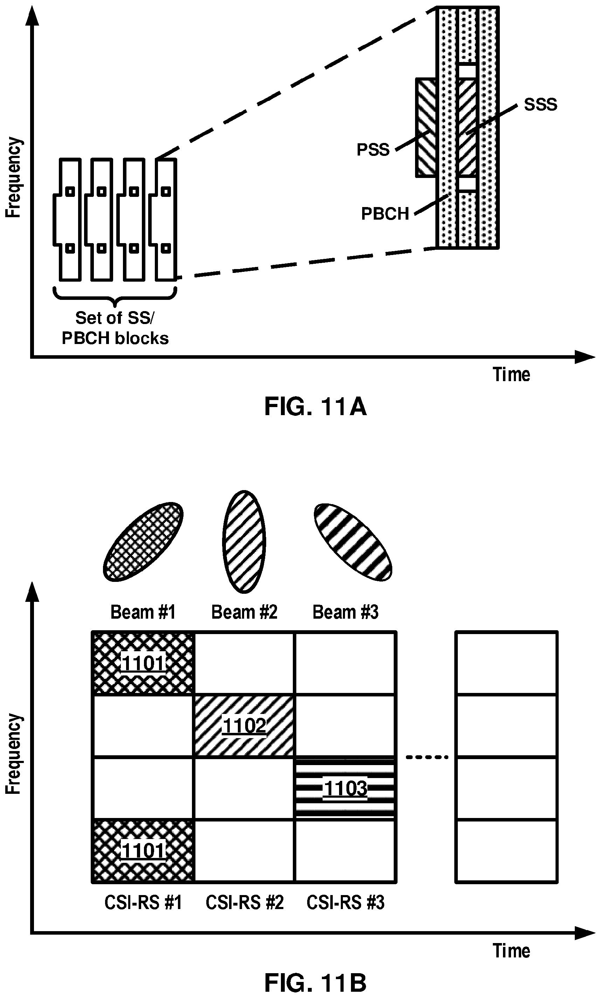

FIG. 11A shows an example mapping of one or more SS/PBCH blocks. A burst of SS/PBCH blocks may comprise one or more SS/PBCH blocks (e.g., 4 SS/PBCH blocks, as shown in FIG. 1 1A). Bursts may be sent/transmitted periodically (e.g., every 2 frames, 20 ms, or any other durations). A burst may be restricted to a half-frame (e.g., a first half-frame having a duration of 5 ms). Such parameters (e.g., the quantity/number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame quantity/number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell.

The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB1.The wireless device may be pointed to a frequency, for example, based on the PBCH indicating the absence of SIB1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a quantity/number (e.g. a maximum quantity/number) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO).A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DM-RSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a quantity/number (e.g., the maximum quantity/number) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DM-RSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in an SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: an SRS resource configuration identifier; a quantity/number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a quantity/number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of : a CSI-RS resource configuration identity, a quantity/number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., QCL-scramblingidentity, crs-portscount, mbsfn-subframeconfiglist, csi-rs-configZPid, qcl-csi-rs-configNZPid), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication/indicator (TCI) states comprising a quantity/number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

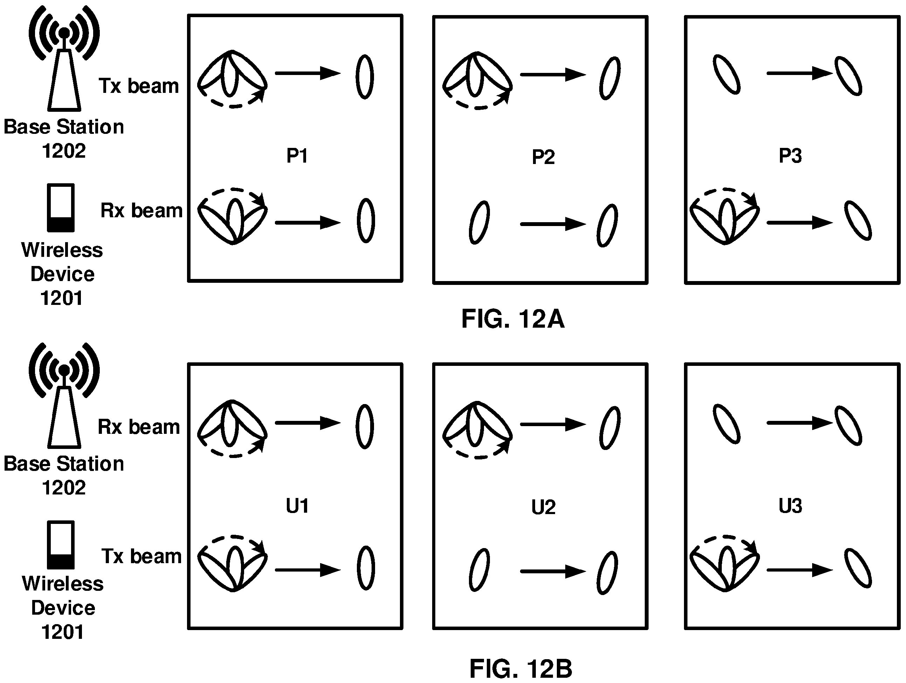

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station 1202 and the Rx beams of a wireless device 1201 are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device 1201) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device 1201 and/or the base station 1202 may perform procedure P2, for example, using a smaller set of beams than the set of beams used in procedure P1, or using narrower beams than the beams used in procedure P1. Procedure P2 may be referred to as a beam refinement. The wireless device 1201 may perform procedure P3 for an Rx beam determination, for example, by using the same Tx beam(s) of the base station 1202 and sweeping Rx beam(s) of the wireless device 1201.

FIG. 12B shows examples of uplink beam management procedures. One or more uplink beam management procedures (e.g., uplink beam management procedures U1, U2, and U3) may be performed. Procedure U1 may be used to enable a base station 1202 to perform a measurement on Tx beams of a wireless device 1201 (e.g., to support a selection of one or more Tx beams of the wireless device 1201 and/or Rx beams of the base station 1202). The Tx beams of the wireless device 1201 and the Rx beams of the base station 1202 are shown as ovals in the top row of U1 and bottom row of U1, respectively). Beamforming (e.g., at the wireless device 1201) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station 1202) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station 1202 to adjust its Rx beam, for example, if the wireless device 1201 (e.g., UE) uses a fixed Tx beam. The wireless device 1201 and/or the base station 1202 may perform procedure U2, for example, using a smaller set of beams than the set of beams used in procedure P1, or using narrower beams than the beams used in procedure P1. Procedure U2 may be referred to as a beam refinement. The wireless device 1201 may perform procedure U3 to adjust its Tx beam, for example, if the base station 1202 uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

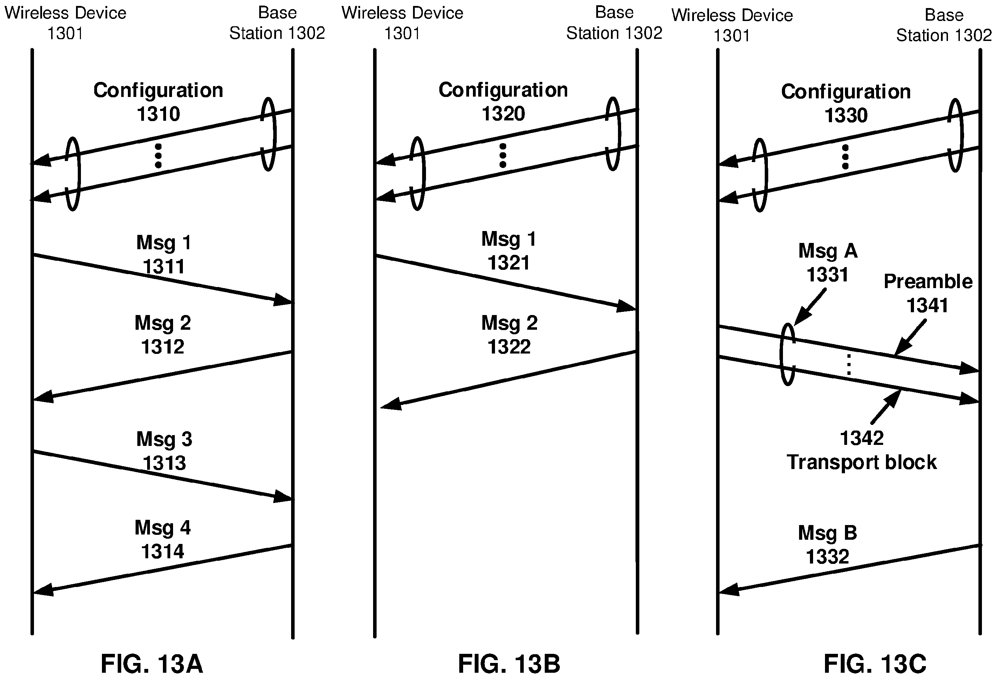

FIG. 13A shows an example four-step random access procedure. The four-step random access procedure may comprise a four-step contention-based random access procedure. A base station 1302 may send/transmit a configuration message 1310 to a wireless device 1301, for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device 1301. The one or more RACH parameters may comprise at least one of: general parameters for one or more random access procedures (e.g., RACH-configGeneral); cell-specific parameters (e.g., RACH-ConfigCommon); and/or dedicated parameters (e.g., RACH-configDedicated). The base station 1302 may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device 1301 in an RRC connected (e.g., an RRC_CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device 1301 may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device 1301 may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device 1301 may determine the preamble group, for example, based on a pathloss measurement and/or a size of the third message (e.g., Msg 3 1313). The wireless device 1301 may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The wireless device 1301 may select at least one preamble associated with the one or more reference signals and/or a selected preamble group, for example, if the association between the one or more preambles and the at least one reference signal is configured by an RRC message.

The wireless device 1301 may determine the preamble, for example, based on the one or more RACH parameters provided/configured/comprised in the configuration message 1310. The wireless device 1301 may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station 1302 may use the one or more RACH parameters to configure the wireless device 1301 with an association between one or more preambles and one or more reference signals (e.g., SSBs and/or CSI-RSs). The wireless device 1301 may determine the preamble to be comprised in first message (e.g., Msg 1 1311), for example, based on the association if the association is configured. The first message (e.g., Msg 1 1311) may be sent/transmitted to the base station 1302 via one or more PRACH occasions. The wireless device 1301 may use one or more reference signals (e.g., SSBs and/or CSI-RSs) for selection of the preamble and for determining of the PRACH occasion. One or more RACH parameters (e.g., ra-ssb-OccasionMskIndex and/or ra-OccasionList) may indicate an association between the PRACH occasions and the one or more reference signals.

The wireless device 1301 may perform a preamble retransmission, for example, if no response is received based on (e.g., after or in response to) a preamble transmission (e.g., for a period of time, such as a monitoring window for monitoring an RAR). The wireless device 1301 may increase an uplink transmit power for the preamble retransmission. The wireless device 1301 may select an initial preamble transmit power, for example, based on a pathloss measurement and/or a target received preamble power configured by the network. The wireless device 1301 may determine to resend/retransmit a preamble and may ramp up the uplink transmit power. The wireless device 1301 may receive one or more RACH parameters (e.g., PREAMBLE_POWER_RAMPING_STEP) indicating a ramping step for the preamble retransmission. The ramping step may be an amount of incremental increase in uplink transmit power for a retransmission. The wireless device 1301 may ramp up the uplink transmit power, for example, if the wireless device 1301 determines a reference signal (e.g., SSB and/or CSI-RS) that is the same as a previous preamble transmission. The wireless device 1301 may count the quantity/number of preamble transmissions and/or retransmissions, for example, using a counter parameter (e.g., PREAMBLE_TRANSMISSION_COUNTER). The wireless device 1301 may determine that a random access procedure has been completed unsuccessfully, for example, if the quantity/number of preamble transmissions exceeds a threshold configured by the one or more RACH parameters (e.g., preambleTransMax) without receiving a successful response (e.g., an RAR).

The second message (e.g., Msg 2 1312) (e.g., received by the wireless device 1301) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station 1302. The second message (e.g., Msg 2 1312) may comprise a time-alignment command that may be used by the wireless device 1301 to adjust the transmission timing of the wireless device 1301, a scheduling grant for transmission of the third message (e.g., Msg 3 1313), and/or a Temporary Cell RNTI (TC-RNTI). The wireless device 1301 may determine/start a time window (e.g., ra-ResponseWindow) to monitor a PDCCH for the second message (e. g., Msg 2 1312), for example, after sending/transmitting the first message (e.g., Msg 1 1311) (e.g., a preamble). The wireless device 1301 may determine the start time of the time window, for example, based on a PRACH occasion that the wireless device 1301 uses to send/transmit the first message (e.g., Msg 1 1311) (e.g., the preamble). The wireless device 1301 may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device 1301 may identify/determine the RAR, for example, based on an RNTI. Radio network temporary identifiers (RNTIs) may be used depending on one or more events initiating/starting the random access procedure. The wireless device 1301 may use a RA-RNTI, for example, for one or more communications associated with random access or any other purpose. The RA-RNTI may be associated with PRACH occasions in which the wireless device 1301 sends/transmits a preamble. The wireless device 1301 may determine the RA-RNTI, for example, based on at least one of: an OFDM symbol index; a slot index; a frequency domain index; and/or a UL carrier indicator of the PRACH occasions. An example RA-RNTI may be determined as follows:

$$RA\text{-}RNTI = 1 + s\_id + 14 \times t\_id + 14 \times 80 \times f\_id + 14 \times 80 \times 8 \times ul\_carrier\_id$$

where s_id may be an index of a first OFDM symbol of the PRACH occasion (e.g., $0 \leq$ s_id < 14), t_id may be an index of a first slot of the PRACH occasion in a system frame (e.g., $0 \leq$ t_id < 80), f_id may be an index of the PRACH occasion in the frequency domain (e.g., $0 \leq$ f_id < 8), and ul_carrier_id may be a UL carrier used for a preamble transmission (e.g., 0 for an NUL carrier, and 1 for an SUL carrier).

The wireless device 1301 may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station 1302, and the base station 1302 may send/transmit an RAR that corresponds to a wireless device 1301. Collisions may occur, for example, if the plurality of wireless device 1301 interpret the RAR as corresponding to themselves. Contention resolution (e.g., using the third message (e.g., Msg 3 1313) and the fourth message (e.g., Msg 4 1314)) may be used to increase the likelihood that the wireless device 1301 does not incorrectly use an identity of another the wireless device 1301. The wireless device 1301 may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station 1302 may address the wireless on the PDCCH (e.g., the base station 1302 may send the PDCCH to the wireless device 1301) using a C-RNTI, for example, If the C-RNTI was included in the third message (e.g., Msg 3 1313). The random access procedure may be determined to be successfully completed, for example, if the unique C RNTI of the wireless device 1301 is detected on the PDCCH (e.g., the PDCCH is scrambled by the C-RNTI). fourth message (e.g., Msg 4 1314) may be received using a DL-SCH associated with a TC RNTI, for example, if the TC RNTI is comprised in the third message (e.g., Msg 3 1313) (e.g., if the wireless device 1301 is in an RRC idle (e.g., an RRC_IDLE) state or not otherwise connected to the base station 1302). The wireless device 1301 may determine that the contention resolution is successful and/or the wireless device 1301 may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device 1301 may be configured with an SUL carrier and/or an NUL carrier. An initial access (e.g., random access) may be supported via an uplink carrier. A base station 1302 may configure the wireless device 1301 with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device 1301 may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device 1301 may switch an uplink carrier during the random access procedure (e.g., between the Msg 1 1311 and the Msg 3 1313). The wireless device 1301 may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station 1302 may, prior to initiation of the procedure, send/transmit a configuration message 1320 to the wireless device 1301. The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station 1302 may indicate, or assign to, the wireless device 1301 a preamble to be used for the first message (e.g., Msg 1 1321). The wireless device 1301 may receive, from the base station 1302 via a PDCCH and/or an RRC, an indication of the preamble (e.g., ra-PreambleIndex).

The wireless device 1301 may start a time window (e.g., ra-ResponseWindow) to monitor a PDCCH for the RAR, for example, based on (e.g., after or in response to) sending/transmitting the preamble. The base station 1302 may configure the wireless device 1301 with one or more beam failure recovery parameters, such as a separate time window and/or a separate PDCCH in a search space indicated by an RRC message (e.g., recoverySearchSpaceId). The base station 1302 may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device 1301 may monitor for a PDCCH transmission addressed to a Cell RNTI (C-RNTI) on the search space. During the two-step (e.g., contention-free) random access procedure, the wireless device 1301 may determine that a random access procedure is successful, for example, based on (e.g., after or in response to) sending/transmitting first message (e.g., Msg 1 1321) and receiving a corresponding second message (e.g., Msg 2 1322). The wireless device 1301 may determine that a random access procedure has successfully been completed, for example, if a PDCCH transmission is addressed to a corresponding C-RNTI. The wireless device 1301 may determine that a random access procedure has successfully been completed, for example, if the wireless device 1301 receives an RAR comprising a preamble identifier corresponding to a preamble sent/transmitted by the wireless device 1301 and/or the RAR comprises a MAC sub-PDU with the preamble identifier. The wireless device 1301 may determine the response as an indication of an acknowledgement for an SI request.

FIG. 13C shows an example two-step random access procedure. Similar to the random access procedures shown in FIGS. 13A and 13B, a base station 1302 may, prior to initiation of the procedure, send/transmit a configuration message 1330 to the wireless device 1301. The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1320 may be sent/transmitted in an uplink transmission by the wireless device 1301. Msg A 1320 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device 1301 may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device 1301 may start/initiate the two-step random access procedure (e.g., the two-step random access procedure shown in FIG. 13C) for a licensed spectrum and/or an unlicensed spectrum. The wireless device 1301 may determine, based on one or more factors, whether to start/initiate the two-step random access procedure. The one or more factors may comprise at least one of: a radio access technology in use (e.g., LTE, NR, and/or the like); whether the wireless device 1301 has a valid TA or not; a cell size; the RRC state of the wireless device 1301; a type of spectrum (e.g., licensed vs. unlicensed); and/or any other suitable factors.

The wireless device 1301 may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device 1301 to determine a reception timing and a downlink channel for monitoring for and/or receiving second message (e.g., Msg B 1332).

The transport block 1342 may comprise data (e.g., delay-sensitive data), an identifier of the wireless device 1301, security information, and/or device information (e.g., an International Mobile Subscriber Identity (IMSI)). The base station 1302 may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device 1301 may determine that the two-step random access procedure is successfully completed, for example, if a preamble identifier in the second message (e.g., Msg B 1332) corresponds to, or is matched to, a preamble sent/transmitted by the wireless device 1301 and/or the identifier of the wireless device 1301 in second message (e.g., Msg B 1332) corresponds to, or is matched to, the identifier of the wireless device 1301 in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a quantity/number of contiguous control channel elements (CCEs), for example, based on a payload size of the DCI and/or a coverage of the base station. The quantity/number of the contiguous CCEs (referred to as aggregation level) may be 1, 2, 4, 8, 16, and/or any other suitable quantity/number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

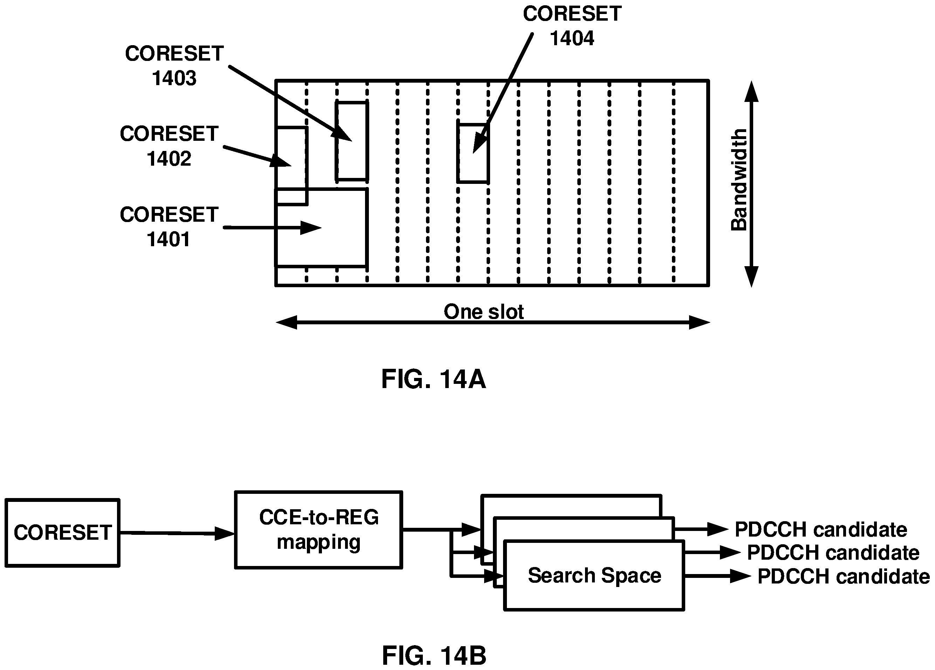

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different quantity/number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a quantity/number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a quantity/number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the quantity/number of CCEs, the quantity/number of PDCCH candidates in common search spaces, and/or the quantity/number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The may send/transmit uplink control signaling (e.g., UCI) to a base station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a quantity/number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a quantity/number of OFDM symbols (e.g., between four and fourteen OFDM symbols) and may comprise two or fewer bits. The wireless device may use PUCCH format 1, for example, if the transmission is over/via four or more symbols and the quantity/number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a quantity/number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a quantity/number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a quantity/number (e.g. a maximum quantity/number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

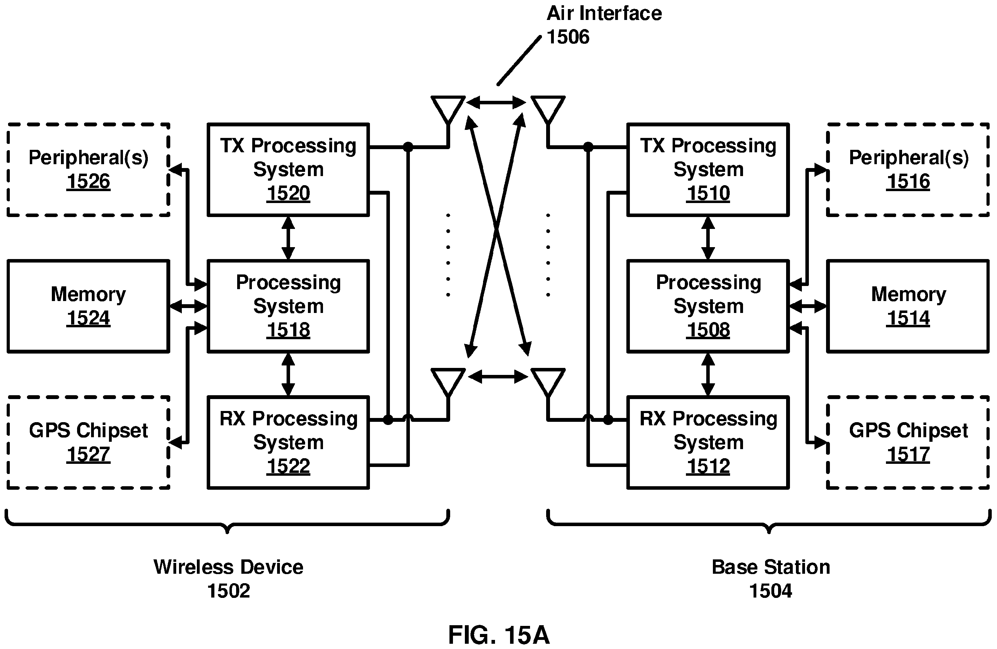

FIG. 15A shows an example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/-transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

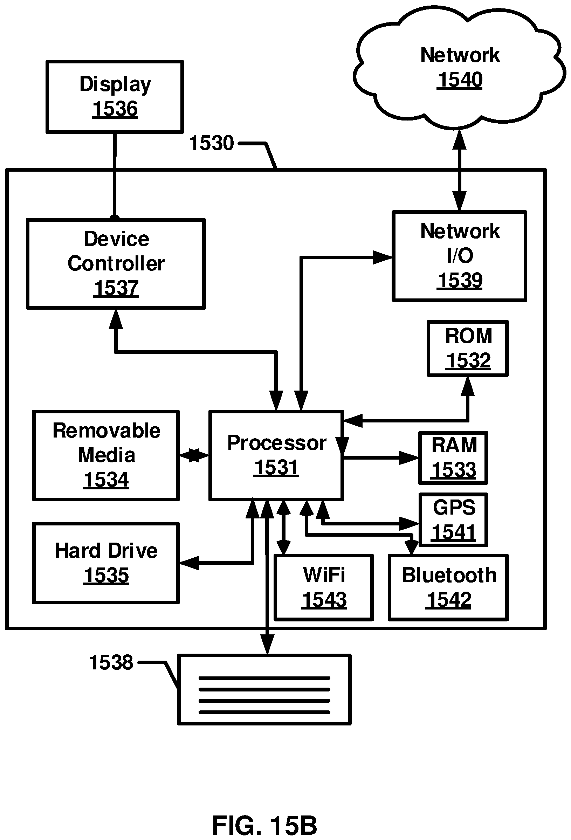

FIG. 15B shows example elements of a computing device that may be used to implement any of the various devices described herein, including, for example, the base station 160A, 160B, 162A, 162B, 220, 1202, 1302, and/or 1702, the wireless device 106, 156A, 156B, 210, 1201, 1301, and/or 1701, or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

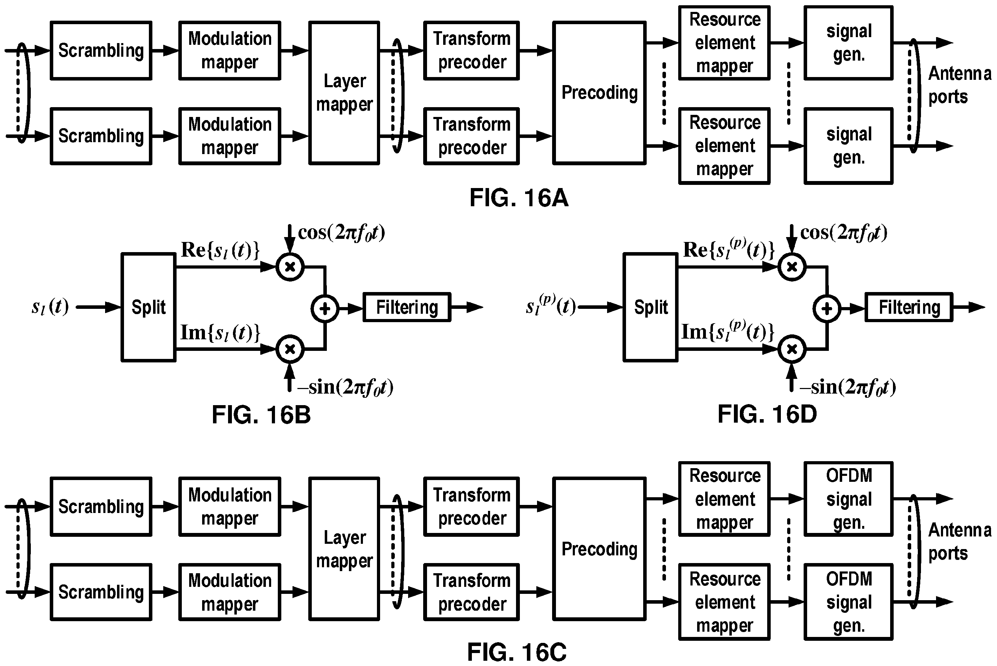

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, once it is started and continue running until it is stopped or until it expires. A timer may be started, for example, if it is not running or restarted if it is running. A timer may be associated with a value (e.g., the timer may be started or restarted from a value or may be started from zero and expire once it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

In at least some wireless communications, a wireless device may receive radio resource control (RRC) configuration parameters indicating a frequency domain repetition scheme. The wireless device may receive a downlink control information (DCI) scheduling a physical downlink shared channel (PDSCH) reception in a number of resource blocks (RBs). For example, the DCI may comprise a transmission configuration indicator (TCI) field. If the frequency domain repetition scheme is configured and the TCI field of the DCI indicates two TCI states for the PDSCH reception, the wireless device may receive the PDSCH reception using a first TCI state of the two TCI states in the first half of the number of RBs in a first PDSCH transmission occasion and using a second TCI state of the two TCI states in the second half of the number of RBs in a second PDSCH transmission occasion. If the first PDSCH transmission occasion and the second PDSCH transmission occasion are different, the wireless device may determine a modulation order for the first PDSCH transmission occasion, and may use/apply the same modulation order to both the first PDSCH transmission occasion and the second PDSCH transmission occasion. For example, the same DCI may schedule the PDSCH reception and indicate the two TCI states for the PDSCH reception by the TCI field.

However, in at least some other wireless communications, the wireless device may receive first DCI with a TCI field indicating two unified TCI states comprising a first unified TCI state and a second unified TCI state, and the wireless device may receive second DCI scheduling a PDSCH reception. The second DCI may have a TCI selection field indicating to use/apply the first unified TCI state only, the second unified TCI state only, or both of the two unified TCI states to the PDSCH reception. For example, the TCI selection field may be different from a TCI field. The second DCI may also have a TCI field or may not have a TCI field. The TCI selection field may indicate which TCI state(s) among the already indicated two unified TCI states to use for the PDSCH reception, whereas the TCI field may indicate new unified TCI state(s). If the TCI selection field is absent, the wireless device may use both of the two unified TCI states as a default to the PDSCH reception. For example, which TCI state(s) or how many TCI state(s) to use for a PDSCH reception may not be determined based on the TCI field, but based on the TCI selection field or absence of the TCI selection field. For example, different DCIs may schedule the PDSCH reception and/or indicate the two unified TCI states.

The wireless device may determine the number of TCI states to use for a PDSCH reception, for example, based on the value of the TCI selection field in a scheduling DCI or absence of the TCI selection field in the DCI. If the frequency domain repetition scheme is configured, determining to receive the first half of the number of RBs using the first TCI state and the second half of the number RBs using the second TCI state, or determining to use the same modulation order for two PDSCH transmission occasions of a PDSCH reception, based on the number of indicated TCI states by the TCI field, may not be efficient. For example, the frequency domain repetition scheme may not be useful if the TCI selection field or absence of the TCI selection field is used to indicate TCI state(s) to use for a PDSCH reception instead of a TCI field.

As described herein, a wireless device may receive data (e.g., PDSCH) more efficiently. For example, in a different TCI state framework, if a wireless device is configured with a frequency domain repetition scheme and receives DCI that may schedule/activate a PDSCH reception, the wireless device may use a first TCI state to receive a first half of a number of RBs of the PDSCH reception and use a second TCI state to receive a second half of the number RBs of the PDSCH reception. For example, a value of a TCI selection field in the scheduling DCI may indicate to use two TCI states for the PDSCH reception. For example, a TCI selection field may be absent in the scheduling DCI.

As described herein, in a different TCI state framework, if a wireless device is configured with a frequency domain repetition scheme and receives a DCI that may schedule/activate a PDSCH reception, the wireless device may determine a modulation order for a first PDSCH transmission occasion that may be associated with a first TCI state and use the same modulation order for both the first PDSCH transmission occasion and a second PDSCH transmission occasion that may be associated with a second TCI state. This may occur, for example, if a value of a TCI selection field in the scheduling DCI may indicate to use both the first TCI state and the second TCI state for the PDSCH reception, or if a TCI selection field may be absent in the scheduling DCI. The wireless device may use a first redundancy version (RV) value, determined using the RV value indicated by the scheduling DCI with n=0 in an RV table, for the first PDSCH transmission occasion, and a second RV value, determined using the RV value indicated by the scheduling DCI with n=1 in the RV table, for the second PDSCH transmission occasion.

In at least some wireless communications, a wireless device may not receive periodic or semi-persistent CSI-RS during a cell discontinuous transmission (DTX) non-active duration and/or may not send (e.g., transmit) periodic or semi-persistent SRS during a cell discontinuous reception (DRX) non-active duration. Dynamic transmission and reception point (TRP) adaptation may be used for network energy saving. For example, a TRP can be dynamically switched on and off. At least two TCI states (e.g., two unified TCI states) may be indicated to a wireless device. For example, a first unified TCI state may be associated with TRP 1 and a second unified TCI state may be associated with TRP 2. For example, since the wireless device may not know which one of the two unified TCI states to use for a periodic/semi-persistent CSI-RS and/or for an SRS resource set, a parameter may be used to indicate which one to use. For example, if the parameter is set to 'first' or 'second', the wireless device may receive the periodic/semi-persistent CSI-RS and/or may send (e.g., transmit) via the SRS resource set using the first unified TCI state of TRP 1 or the second unified TCI state of TRP 2, respectively. However, the wireless device may not use any of the two unified TCI states for a periodic/semi-persistent CSI-RS or for a periodic/semi-persistent SRS resource set, for example, if the parameter is not configured for the periodic/semi-persistent CSI-RS or the periodic/semi-persistent SRS resource set, respectively. For the periodic/semi-persistent CSI-RS and/or periodic/semi-persistent SRS resource sets, a base station may have flexibility to indicate which TCI state the wireless device should use.

If a parameter of a periodic/semi-persistent CSI-RS and/or of a periodic/semi-persistent SRS resource set is set to 'first' or 'second', the wireless device may know that the periodic/semi-persistent CSI-RS and/or the periodic/semi-persistent SRS resource set may belong to TRP 1 and TRP 2, respectively. However, if a parameter of a periodic/semi-persistent CSI-RS or a periodic/semi-persistent SRS resource set is not configured, the wireless device may not know if the periodic/semi-persistent CSI-RS or the periodic/semi-persistent SRS resource set may belong to TRP 1 or TRP 2. For example, the wireless device may not know whether to stop receiving the periodic/semi-persistent CSI-RS, for example, during a non-active time/period/duration of a first DTX configuration of TRP 1 or a non-active time/period/duration of a second DTX configuration of TRP 2; and/or whether to stop sending (e.g., transmitting) via the periodic/semi-persistent SRS resource set, for example, during a non-active time/period/duration of a first DRX configuration of TRP 1 or a non-active time/period/duration of a second DRX configuration of TRP 2.

As described herein, a wireless device may avoid sending or receiving signals, for example, if any of TRPs may be turned off. For example, if two DTX configurations are configured (e.g., one per TRP) and a parameter (e.g., a parameter indicating which TCI to use) is not configured for a CSI report configuration, a new control parameter may be used for the CSI report configuration. For example, a first value of the new control parameter may indicate that the wireless device may use a first DTX configuration of TRP 1 for periodic/semi-persistent CSI-RSs in the CSI report configuration, and/or a second value of the new control parameter may indicate that the wireless device may use a second DTX configuration of TRP 2 for periodic/semi-persistent CSI-RSs in the CSI report configuration. If the new control parameter is set to a first value, the wireless device may stop receiving the CSI-RS if the TRP 1 is switched off. If the new control parameter is set to a second value, the wireless device may stop receiving the CSI-RS if the TRP 2 is switched off. By aligning CSI-RS receptions with DTX (e.g., first DTX and/or the second DTX), channel measurement and/or channel estimation may be more accurate, scheduling decisions (e.g., less transmission power, less interference) may be better, and/or energy consumption may be reduced.

As described herein, if two DRX configurations are configured (e.g., one per TRP) and a parameter (e.g., a parameter indicating which TCI to use) is not configured for an SRS resource set, a new control parameter may be configured for the SRS resource set. For example, a first value of the new control parameter may indicate that the wireless device may use a first DRX configuration of TRP 1 for the SRS resource set, and/or a second value of the new control parameter may indicate that the wireless device may use a second DRX configuration of TRP 2 to the SRS resource set. If the new control parameter is set to a first value, the wireless device may stop sending (e.g., transmitting) the SRS if the TRP 1 is switched off. If the new control parameter is set to a second value, the wireless device may stop sending (e.g., transmitting) the SRS if the TRP 2 is switched off. By aligning SRS transmissions with DRX (e.g., first DRX and/or second DRX), channel measurement and/or channel estimation may be more accurate, scheduling decisions may be improved (e.g., less transmission power, less interference), and/or energy consumption may be reduced.

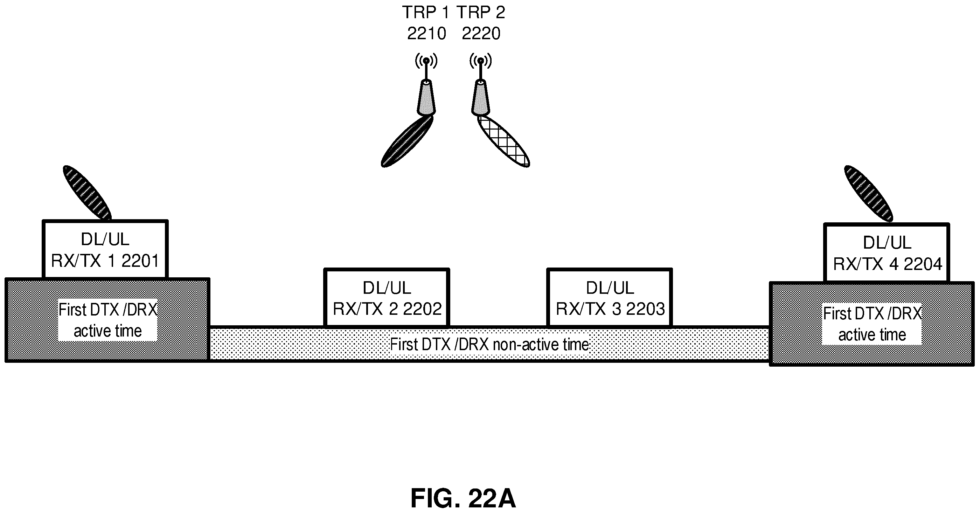

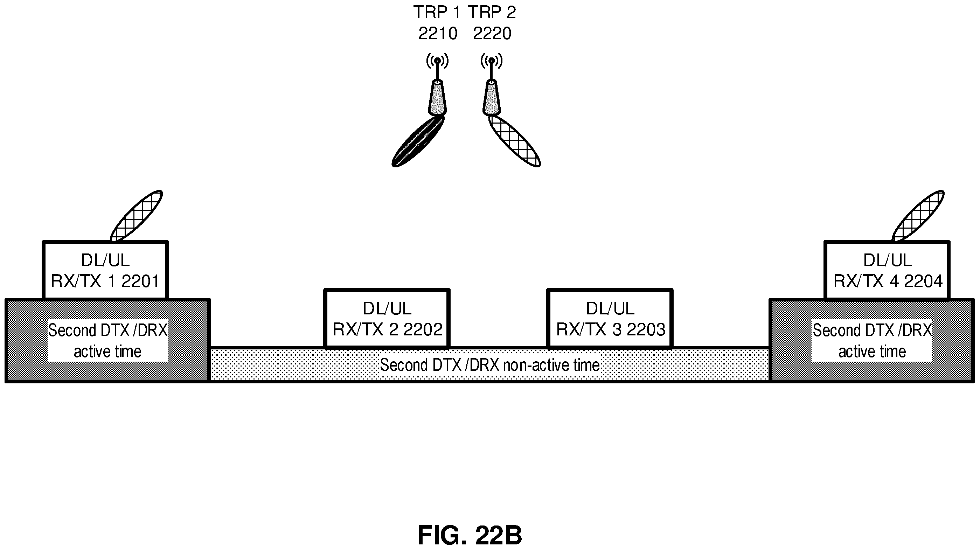

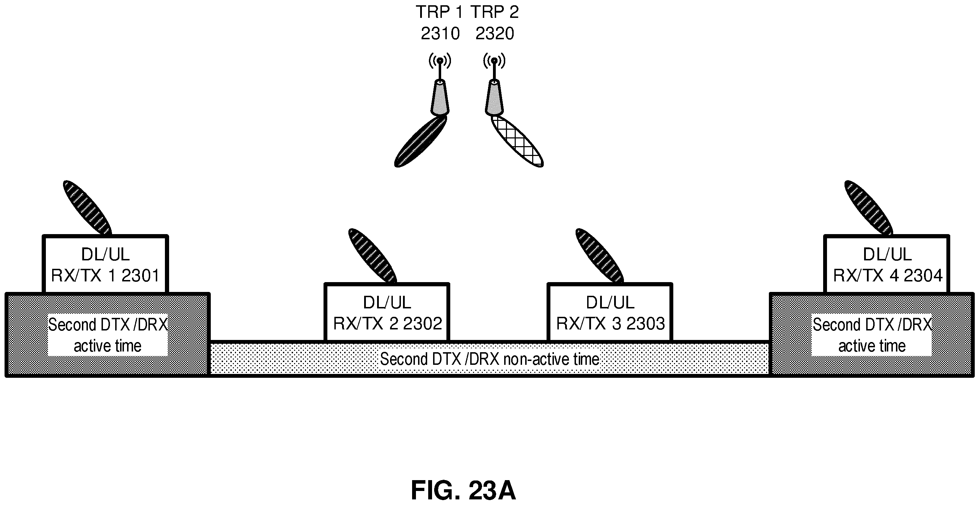

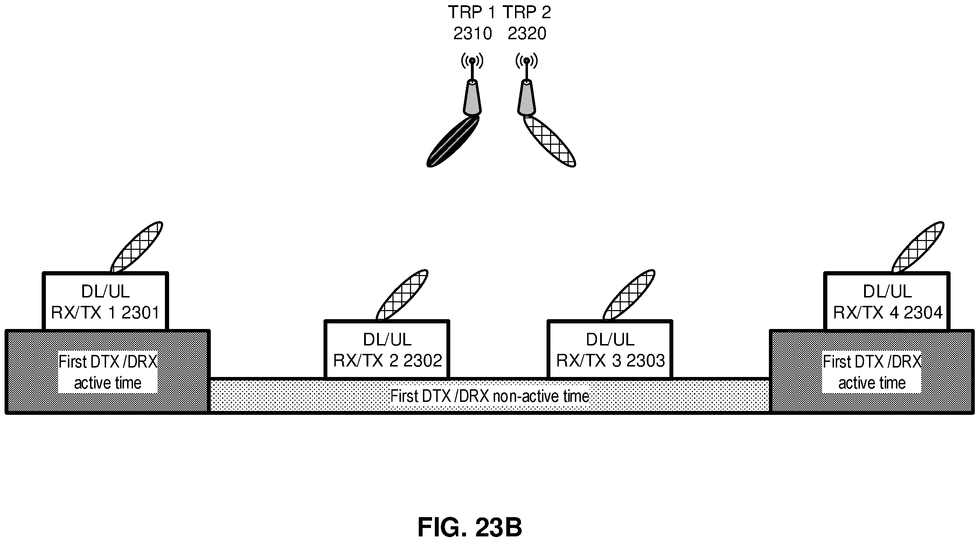

A wireless device may receive, for example, from a base station, one or more messages comprising one or more configuration parameters of a cell. In at least some wireless communications, the wireless device may not receive a CSI-RS (e.g., a periodic CSI-RS or a semi-persistent CSI-RS) during a non-active time/duration/period of a DTX of the cell. For example, the cell may be associated with (or served by) two TRPs. The one or more configuration parameters may indicate, for the cell, at least two DTXs for an energy saving of the cell. For example, a first DTX of the at least two DTXs may be for a first TRP (e.g., TRP 1 2210 in FIG. 22A and FIG. 22B, and/or TRP 1 2310 in FIG. 23A and FIG. 23B) and/or a second DTX of the at least two DTXs may be for a second TRP (e.g., TRP 2 2220 in FIG. 22A and FIG. 22B, and/or TRP 2 2320 in FIG. 23A and FIG. 23B).

The wireless device may not have information on whether a CSI-RS may be associated with (or configured for or served/used by) the first TRP or the second TRP. The wireless device may not have information on whether to receive or not receive the CSI-RS during a non-active time/duration/period of the first DTX. The wireless device may not have information on whether to receive or not receive the CSI-RS during a non-active time/duration/period of the second DTX. If the wireless device and the base station are not aligned on CSI-RS reception behavior of the wireless device during the non-active time/duration/period of the first DTX and/or the non-active time/duration/period of the second DTX, channel measurement/estimation may not be accurate and/or scheduling decisions (e.g., high transmission power, high interference) may be wrong. For example, the base station may send (e.g., transmit), to the wireless device, the CSI-RS, for example, when the wireless device is not receiving the CSI-RS. This misalignment may result in the missing of the CSI-RS. For example, the base station may not send (e.g., transmit), to the wireless device, the CSI-RS, for example, when the wireless device is expecting to receive the CSI-RS. This misalignment may result in increased energy consumption at the wireless device.

As described herein, CSI-RS receptions may be enhanced. For example, CSI-RS receptions may be enhanced, for example, if/when at least two DTXs may be configured/indicated for a cell. A wireless device may receive, for example, from a base station, one or more messages comprising one or more configuration parameters of a cell. The one or more configuration parameters may comprise an apply-DTX parameter of/for the CSI-RS (or a CSI report configuration comprising/indicating the CSI-RS or an CSI-RS resource set comprising the CSI-RS). For example, the apply-DTX parameter may indicate which DTX of the at least two DTXs to use/apply to the CSI-RS. For example, if the apply-DTX parameter is set to a first value (e.g., 0, 'first'), the wireless device may use/apply the first DTX to the CSI-RS. The wireless device may not receive the CSI-RS during/in a non-active time/duration/period of the first DTX. The wireless device may receive the CSI-RS during/in an active time/duration/period of the first DTX. For example, if the apply-DTX parameter is set to a second value (e.g., 1, 'second'), the wireless device may use/apply the second DTX to the CSI-RS. The wireless device may not receive the CSI-RS during/in a non-active time/duration/period of the second DTX. The wireless device may receive the CSI-RS during/in an active time/duration/period of the second DTX.

The one or more configuration parameters may not comprise an apply-DTX parameter of/for the CSI-RS (or a CSI report configuration comprising/indicating the CSI-RS or an CSI-RS resource set comprising the CSI-RS). For example, the apply-DTX parameter may be absent (or not present) in the one or more configuration parameters. For example, if the apply-DTX parameter is absent, the wireless device may use/apply the first DTX to the CSI-RS. The wireless device may not receive the CSI-RS during/in a non-active time/duration/period of the first DTX. The wireless device may receive the CSI-RS during/in an active time/duration/period of the first DTX. For example, if the apply-DTX parameter is present (or is enabled), the wireless device may use/apply the second DTX to the CSI-RS. The wireless device may not receive the CSI-RS during/in a non-active time/duration/period of the second DTX. The wireless device may receive the CSI-RS during/in an active time/duration/period of the second DTX.

The wireless device may receive a MAC-CE that may indicate/activate a TCI state for the CSI-RS. The MAC-CE may comprise a field (e.g., apply-DTX field) indicating which DTX of the at least two DTXs to use/apply to the CSI-RS. For example, if the field is set to a first value (e.g., 0), the wireless device may use/apply the first DTX to the CSI-RS. The wireless device may not receive the CSI-RS during/in a non-active time/duration/period of the first DTX. The wireless device may receive the CSI-RS during/in an active time/duration/period of the first DTX. For example, if the field is set to a second value (e.g., 1), the wireless device may use/apply the second DTX to the CSI-RS. The wireless device may not receive the CSI-RS during/in a non-active time/duration/period of the second DTX. The wireless device may receive the CSI-RS during/in an active time/duration/period of the second DTX. By aligning CSI-RS receptions with DTX (e.g., first DTX and/or the second DTX), channel measurement and/or channel estimation may be more accurate, scheduling decisions (e.g., less transmission power, less interference) may be better, and/or energy consumption may be reduced.

A wireless device may receive, for example, from a base station, one or more messages comprising one or more configuration parameters of a cell. In at least some wireless communications, the wireless device may not send (e.g., transmit) an SRS (e.g., a periodic SRS or a semi-persistent SRS), for example, during a non-active time/duration/period of a DRX of the cell. For example, the cell may be associated with (or served by) two TRPs. The one or more configuration parameters may indicate, for the cell, at least two DRXs for energy saving of the cell. For example, a first DRX of the at least two DRXs may be for a first TRP (e.g., TRP 1 2210 in FIG. 22A and FIG. 22B, and/or TRP 1 2310 in FIG. 23A and FIG. 23B) and a second DRX of the at least two DRXs may be for a second TRP (e.g., TRP 2 2220 in FIG. 22A and FIG. 22B, and/or TRP 2 2320 FIG. 23A and FIG. 23B).

The wireless device may not have information on whether an SRS is associated with (or configured for or served/used by) the first TRP or the second TRP. The wireless device may not have information whether to send (e.g., transmit) or not send (e.g., transmit) the SRS, for example, during a non-active time/duration/period of the first DRX. The wireless device may not have information whether to send (e.g., transmit) or not send (e.g., transmit) the SRS, for example, during a non-active time/duration/period of the second DRX. If the wireless device and the base station are not aligned on SRS transmission behavior of the wireless device, for example, during the non-active time/duration/period of the first DRX and/or the non-active time/duration/period of the second DRX, channel measurement results may not be accurate leading to inaccurate channel estimation and/or wrong (e.g., erroneous) scheduling decisions (e.g., high transmission power, high interference, etc.). For example, the base station may expect to receive, from the wireless device, the SRS, for example, when the wireless device is not sending (e.g., transmitting) the SRS. This misalignment may result in increased energy consumption at the base station. For example, the base station may not expect to receive, from the wireless device, the SRS, for example, when the wireless device is sending (e.g., transmitting) the SRS. This misalignment between the base station's expectation and the wireless device's transmission behavior may lead to the missing of the SRS at the base station.

As described herein, SRS transmissions may be enhanced. For example, SRS transmissions may be enhanced, for example, if/when at least two DRXs may be configured/indicated for a cell. A wireless device may receive, for example, from a base station, one or more messages comprising one or more configuration parameters of a cell. The one or more configuration parameters may comprise an apply-DRX parameter of/for an SRS resource set comprising an SRS resource. The apply-DRX parameter may indicate which DRX of the at least two DRXs to use/apply to the SRS resource set. For example, if the apply-DRX parameter is set to a first value (e.g., 0, 'first'), the wireless device may use/apply the first DRX to the SRS resource set. The wireless device may not send (e.g., transmit) an SRS in the SRS resource set (or via an SRS resource in the SRS resource set) during/in a non-active time/duration/period of the first DRX. The wireless device may send (e.g., transmit) an SRS in the SRS resource set during/in an active time/duration/period of the first DRX. For example, if the apply-DRX parameter is set to a second value (e.g., 1, 'second'), the wireless device may use/apply the second DRX to the SRS resource set. The wireless device may not send (e.g., transmit) an SRS in the SRS resource set during/in a non-active time/duration/period of the second DRX. The wireless device may send (e.g., transmit) an SRS in the SRS resource set during/in an active time/duration/period of the second DRX.

The one or more configuration parameters may not comprise an apply-DRX parameter of/for the SRS resource set. For example, the apply-DRX parameter may be absent (or not present) in the one or more configuration parameters. For example, if the apply-DRX parameter is absent, the wireless device may use/apply the first DRX to the SRS resource set. The wireless device may not send (e.g., transmit) an SRS in the SRS resource set during/in a non-active time/-duration/period of the first DRX. The wireless device may send (e.g., transmit) an SRS in the SRS resource set during/in an active time/duration/period of the first DTX. For example, if the apply-DRX parameter is present (or is enabled), the wireless device may use/apply the second DRX to the SRS resource set. The wireless device may not send (e.g., transmit) an SRS in the SRS resource set during/in a non-active time/duration/period of the second DRX. The wireless device may send (e.g., transmit) an SRS in the SRS resource set during/in an active time/duration/period of the second DRX.

The wireless device may receive a MAC-CE that may indicate/activate a TCI state for the SRS resource set (or for one or more SRS resources in the SRS resource set). The MAC-CE may comprise a field (e.g., apply-DRX field) indicating which DRX of the at least two DRXs to use/apply to the SRS resource set. For example, if the field is set to a first value (e.g., 0), the wireless device may use/apply the first DRX to the SRS resource set. The wireless device may not send (e.g., transmit) an SRS in the SRS resource set during/in a non-active time/duration/period of the first DRX. The wireless device may send (e.g., transmit) an SRS in the SRS resource set during/in an active time/duration/period of the first DRX. For example, if the field is set to a second value (e.g., 1), the wireless device may use/apply the second DRX to the SRS resource set. The wireless device may not send (e.g., transmit) an SRS in the SRS resource set during/in a non-active time/duration/period of the second DRX. The wireless device may send (e.g., transmit) an SRS in the SRS resource set during/in an active time/duration/period of the second DRX. By aligning SRS transmissions with DRX (e.g., first DRX and/or second DRX), channel measurement and/or channel estimation may be more accurate, scheduling decisions may be improved (e.g., less transmission power, less interference), and/or energy consumption may be reduced.

A wireless device may receive, for example, from a base station (or a network), one or more messages (e.g., RRC messages, RRC reconfiguration messages) that may comprise one or more configuration parameters. The one or more configuration parameters may comprise one or more MAC cell group configuration parameters (e.g., *MAC-CellGroup-Config*) of a cell group comprising a cell. The one or more MAC cell group configuration parameters may comprise, for example, one or more cell discontinuous-transmission (DTX) configuration parameters (e.g., *celldtx-Config)* used to configure/indicate a cell DTX of the cell. The one or more MAC cell group configuration parameters may comprise, for example, one or more cell discontinuous-reception (DRX) configuration parameters (e.g., *celldrx-Config)* used to configure/indicate a cell DRX of the cell.

The one or more configuration parameters may comprise one or more serving cell configuration parameters (e.g., *ServingCellConfig*) of a cell. The one or more serving cell configuration parameters may comprise, for example, one or more cell DTX configuration parameters (e.g., *celldtx-Config)* that may be used to configure/indicate a cell DTX of the cell. The one or more serving cell configuration parameters may comprise, for example, one or more cell DRX configuration parameters (e.g., *celldrx-Config*) used to configure/indicate a cell DRX of the cell.

The Cell DTX may be activated implicitly if configured by the base station, for example, based on sending (e.g., transmitting) the one or more cell DTX configuration parameters. The Cell DTX may be activated implicitly by the wireless device if configured by the base station, for example, based on receiving the one or more cell DTX configuration parameters. The one or more cell DTX configuration parameters may indicate an on-duration timer (e.g., *celldtx-onDurationTimer*) for the cell DTX. The one or more cell DTX configuration parameters may indicate an offset for a cycle start of the cell DTX (e.g., *celldtx-CycleStartOffset)*. The one or more cell DTX configuration parameters may indicate a slot offset (e.g., *celldtx-SlotOffset)* for the cell DTX. The one or more cell DTX configuration parameters may comprise a joint cell DTX-DRX configuration parameter (e.g., *jointCellDTXDRXconfig*). The wireless device may use/apply the one or more cell DTX configuration parameters to a cell DRX, for example, if the joint cell DTX-DRX configuration parameter is set to a particular value / indication (e.g., set to true). The wireless device may use/apply a cell DRX configuration with the same parameters as in *CellDTX-Config,* for example, if the joint cell DTX-DRX configuration parameter is set to the particular value / indication (e.g., set to true). The Cell DTX may be deactivated by the wireless device, for example, based on releasing the one or more cell DTX configuration parameters.

The Cell DRX may be activated implicitly if configured by the base station, for example, based on sending (e.g., transmitting) the one or more cell DRX configuration parameters. The Cell DRX may be activated implicitly by the wireless device if configured by the base station, for example, based on receiving the one or more cell DRX configuration parameters. The one or more cell DRX configuration parameters may indicate an on-duration timer (e.g., *celldrx-onDurationTimer*) for the cell DRX. The one or more cell DRX configuration parameters may indicate an offset for a cycle start of the cell DRX (e.g., *celldrx-CycleStartOffset)*. The one or more cell DRX configuration parameters may indicate a slot offset (e.g., *celldrx-SlotOffset)* for the cell DRX. The Cell DRX may be deactivated by the wireless device, for example, based on releasing the one or more cell DRX configuration parameters.

An offset for a cycle start may be common between the cell DTX and the cell DRX, for example, if the one or more configuration parameters comprise both the one or more cell DTX configuration parameters and the one or more cell DRX configuration parameters. The offset for the cycle start of the cell DRX may be signaled in the one or more cell DTX configuration parameters. The offset for the cycle start of the cell DTX may indicate the offset for the cycle start of the cell DRX, for example, if the joint cell DTX-DRX configuration parameter is set to a particular value / indication (e.g., set to true). The offset for the cycle start of the cell DTX may be the offset for the cycle start of both the cell DTX and the cell DRX, for example, if the joint cell DTX-DRX configuration parameter is set to the particular value / indication (e.g., set to true).

An on-duration timer may be common between the cell DTX and the cell DRX, for example, if the one or more configuration parameters comprise both the one or more cell DTX configuration parameters and the one or more cell DRX configuration parameters. The on-duration timer of the cell DRX may be signaled in the one or more cell DTX configuration parameters. The on-duration timer of the cell DTX may indicate the on-duration timer of the cell DRX, for example, if the joint cell DTX-DRX configuration parameter is set to a particular value / indication (e.g., set to true). The on-duration timer of the cell DTX may be the on-duration timer of both the cell DTX and the cell DRX, for example, if the joint cell DTX-DRX configuration parameter is set to the particular value / indication (e.g., set to true).

A slot offset may be common between the cell DTX and the cell DRX, for example, if the one or more configuration parameters comprise both the one or more cell DTX configuration parameters and the one or more cell DRX configuration parameters. The slot offset of the cell DRX may be signaled in the one or more cell DTX configuration parameters. The slot offset of the cell DTX may indicate the slot offset of the cell DRX, for example, if the joint cell DTX-DRX configuration parameter is set to a particular value / indication (e.g., set to true). The slot offset of the cell DTX may be the slot offset of both the cell DTX and the cell DRX, for example, if the joint cell DTX-DRX configuration parameter is set to the particular value / indication (e.g., set to true).

A wireless device may be configured, by the base station, with a cell DTX/DRX of a cell (e.g., by *CellDTX-Config, CellDRX-Config*), for example, to facilitate reducing downlink transmission/uplink reception activity time of a base station (e.g., a gNB). The cell DTX/DRX of the cell may have a periodic cell DTX/DRX pattern (i.e., active and non-active periods). The periodic cell DTX/DRX pattern may be common for one or more wireless devices, that are configured with a cell DTX/DRX, in the cell. The periodic cell DTX pattern and the periodic cell DRX pattern may be configured and activated separately. For example, if the cell DTX is configured and/or activated for the cell, the wireless device may not monitor PDCCH or SPS occasions during a non-active duration of the cell DTX, for example, unless there is a pending retransmission, or unless a random-access timer/window (e.g., *ra-ResponseWindow, ra-ContentionResolutionTimer*) is running, or unless an SR is sent (e.g., transmitted) and is pending. For example, if the cell DRX is configured and/or activated for the cell, the wireless device may not send (e.g., transmit) on/via configured grant (CG) resources or may not send (e.g., transmit) an SR, for example, if comprising a non-active duration of the cell DRX. A cell DTX/DRX may be used (e.g., applicable) to wireless devices in an RRC_CONNECTED state. The cell DTX/DRX may not impact at least: Random Access procedure, SSB transmission, paging, and/or system information broadcasting.

The Cell DTX/DRX may be activated/deactivated by RRC signaling or layer 1 (L1) group common signaling (e.g., DCI). The one or more configuration parameters may comprise a parameter indicating whether activation/deactivation of the Cell DTX/DRX is, for example, based on the RRC signaling or the L1 group common signaling. The base station and/or the wireless device may activate/deactivate the Cell DTX/DRX, for example, based on the RRC signaling, for example, if the parameter is set to a first value (e.g., 0, 'RRC'). The wireless device may activate the Cell DTX/DRX, for example, based on receiving the RRC signaling (e.g., *CellDTX-Config, CellDRX-Config*). The base station and/or the wireless device may activate/deactivate the Cell DTX/DRX, for example, based on the L1 group common signaling, for example, if the parameter is set to a second value (e.g., 1, 'DCI', or 'L1'). The wireless device may activate the Cell DTX/DRX, for example, based on receiving DCI (e.g., DCI format 2_9). The wireless device may not activate the Cell DTX/DRX, for example, based on receiving the RRC signaling (e.g., *CellDTX-Config, CellDRX-Config*), for example, if the parameter is set to the second value. The wireless device may not activate the Cell DTX/DRX, for example, until receiving the DCI (e.g., DCI format 2_9), for example, if the parameter is set to the second value.

The Cell DTX/DRX may be characterized by active duration during which the wireless device may wait for (or may monitor) to receive PDCCHs or SPS occasions and/or send (e.g., transmit) SR or CG. During the active duration, the transmission/reception of PDCCH, SPS, SR and CG by the base station may not be impacted for the purpose of network energy saving. The Cell DTX/DRX may be characterized by cycle that may specify the periodic repetition of the active duration that may be followed by a period of non-active duration. The Active duration and/or cycle parameters may be common between the cell DTX and the cell DRX, for example, if both cell DTX and the cell DRX are configured.

The network may ensure that there is no impact to the emergency call or public safety related service (e.g., the base station may release or deactivate the cell DTX/DRX), for example, if the base station recognizes there is an emergency call or public safety related service (e.g., MPS or MCS). The base station may ensure that there is at least partial overlapping between an on-duration of a connected mode DRX of the wireless device and an active duration of a cell DTX/DRX (e.g., a periodicity of the connected mode DRX of the wireless device is a multiple of a periodicity of the cell DTX/DRX).

The wireless device may receive the downlink reception regardless of the downlink reception overlapping (or being in) an active duration/time/period or a non-active duration/time/period of the cell DTX, for example, if a wireless device receives a DCI scheduling a downlink reception (e.g., PDSCH, aperiodic CSI-RS) during the cell DTX. The DCI may comprise/indicate a dynamic grant for the downlink reception. The wireless device may send (e.g., transmit) a HARQ-ACK information feedback of the downlink reception regardless of the transmission of the HARQ-ACK information overlapping (or being in) an active duration/time/period or a non-active duration/time/period of the cell DRX, for example, after the downlink reception.

A wireless device may send (e.g., transmit) the uplink transmission regardless of the uplink transmission overlapping (or being in) an active duration/time/period or a non-active duration/time/period of the cell DRX, for example, if the wireless device receives a DCI scheduling an uplink transmission (e.g., PUSCH, PUCCH, aperiodic SRS) during the cell DRX. The DCI may comprise/indicate a dynamic grant for the uplink transmission. The wireless device may receive a PDCCH reception (e.g., DCI, a response to/of the uplink transmission) from the base station regardless of the transmission of the PDCCH reception overlapping (or being in) an active duration/time/period or a non-active duration/time/period of the cell DTX, for example, after the uplink transmission. The wireless device may monitor PDCCH for a DCI (or for a response to/of the uplink transmission) from the base station regardless of the transmission of the PDCCH with the DCI overlapping (or being in) an active duration/time/period or a non-active duration/time/period of the cell DTX, for example, after the uplink transmission.

A non-active period/time/duration of the cell DTX may comprise/include the time outside an active period/-time/duration of the cell DTX. A non-active period/time/duration of the cell DRX may comprise/include the time outside an active period/time/duration of the cell DRX.

A wireless device may receive, from a base station, one or more messages (e.g., RRC message(s)). The one or more messages may configure/indicate a periodic cell DTX and/or a cell DRX pattern (i.e., an active period and a non-active period) for a cell DTX and/or a cell DRX of a cell (e.g., a serving cell, a non-serving cell, a candidate cell, a target cell). The cell DTX (or a cell DTX functionality) may control monitoring activity of PDCCH and configured downlink assignments (e.g., SPS PDSCH) by the wireless device in an RRC_CONNECTED mode. The wireless device may monitor PDCCH and configured downlink assignments via the cell using the cell DTX (or a cell DTX operation), for example, for the cell configured and/or activated with the cell DTX.

The wireless device may monitor PDCCH and configured downlink assignments using the cell DTX (or a cell DTX operation), for example, for all activated cells (e.g., activated serving cells) that may be configured with a cell DTX. The wireless device may monitor PDCCH and configured downlink assignments using the cell DTX (or a cell DTX operation), for example, for each activated cell (e.g., each activated serving cell) configured and activated with cell DTX. The cell DRX (or a cell DRX functionality) may control transmission activity of scheduling request (SR) and configured uplink grant by the wireless device in an RRC_CONNECTED.

The wireless device may send (e.g., transmit) scheduling request and configured uplink grant via the cell using the cell DRX (or a cell DRX operation), for example, for the cell configured and activated with the cell DRX. The wireless device may send (e.g., transmit) scheduling request and configured uplink grant using the cell DRX (or a cell DRX operation), for example, for all activated cells (e.g., activated serving cells) configured with a cell DRX. The wireless device may send (e.g., transmit) scheduling request and configured uplink grant using the cell DRX (or a cell DRX operation), for example, for each activated cell (e.g., each activated serving cell) configured and activated with cell DRX.

The one or more messages (e.g., the RRC message(s)) may control the cell DTX (or the cell DTX operation) by configuring/indicating/comprising the following parameters in the one or more cell DTX configuration parameters (e.g., *CellDTX-Config*): *celldtx-onDurationTimer:* an active duration at the beginning of a cycle of the cell DTX (or a cell DTX cycle); *celldtx-StartOffset*: defines the subframe where the cycle of the cell DTX (or the cell DTX cycle) starts; *celldtx-SlotOffset*: the delay before starting the on-duration timer of the cell DTX (e.g., *celldtx-onDur$\alpha$tionTimer*); and/or *celldtx-Cycle:* the period of the cycle of the cell DTX (or a cell DTX cycle period).

The one or more messages (e.g., the RRC message(s)) may control the cell DRX (or the cell DRX operation) by configuring/indicating/comprising the following parameters in the one or more cell DRX configuration parameters (e.g., *CellDRX-Config*): *celldrx-onDurationTimer:* an active duration at the beginning of a cycle of the cell DRX (or a cell DRX cycle); *celldrx-StartOffset*: defines the subframe where the cycle of the cell DRX (or the cell DRX cycle) starts; *celldrx-SlotOffset*: the delay before starting the on-duration timer of the cell DRX (e.g., *celldrx-onDurationTimer*); and/or *celldrx-Cycle*: the period of the cycle of the cell DRX (or a cell DRX cycle period).

The one or more configuration parameters may comprise one or more cell DTX configuration parameters (e.g., *CellDTX-Config*). The one or more cell DTX configuration parameters may indicate/configure a cell DTX of a cell (e.g., a serving cell). The cell DTX may comprise an active period/time/duration (or a cell DTX active period/time/duration), for example, if the one or more cell DTX configuration parameters indicates/configures the cell DTX. The active period/-time/duration (or the cell DTX active period/time/duration) may comprise/include the time, for example, if an on-duration timer (e.g., *celldtx-onDurationTimer*) is running for the cell. The active period/time/duration (or the cell DTX active period/time/duration) may comprise/include the time, for example, if a cell DTX deactivation indication (e.g., DCI format 2_9 or RRC signaling) is received, by the wireless device, for the cell.

The one or more configuration parameters may comprise one or more cell DRX configuration parameters (e.g., *CellDRX-Config*). The one or more cell DRX configuration parameters may indicate/configure a cell DRX of a cell (e.g., a serving cell). The cell DRX may comprise an active period/time/duration (or a cell DRX active period/time/duration), for example, if the one or more cell DRX configuration parameters indicates/configures the cell DRX. The active period/time/duration (or the cell DRX active period/time/duration) may comprise/include the time, for example, if an on-duration timer (e.g., *celldrx-onDurationTimer*) is running for the cell. The active period/time/duration (or the cell DRX active period/time/duration) may comprise/include the time, for example, if a cell DRX deactivation indication (e.g., DCI format 2_9 or RRC signaling) has been received, by the wireless device, for the cell.

The wireless device may start the on-duration timer (e.g., *celldtx-onDurationTimer*) for the cell after the slot offset (e.g., *celldtx-SlotOffset*) from the beginning of a subframe. The wireless device may start the on-duration timer (e.g., *celldtx-onDurationTimer*) for the cell after the slot offset (e.g., *celldtx-SlotOffset*) from the beginning of a subframe, for example, based on receiving a cell DTX activation indication (e.g., by DCI format 2_9 or by RRC signaling) for the cell DTX of the cell. The wireless device may start the on-duration timer (e.g., *celldtx-onDurationTimer*) for the cell after the slot offset (e.g., *celldtx-SlotOffset*) from the beginning of a subframe, for example, based on receiving an indication (e.g., by DCI format 2_9 or by RRC signaling) indicating activation of the cell DTX of the cell.

The wireless device may stop the on-duration timer (e.g., *celldtx-onDurationTimer*), for example, if running. The wireless device may stop the on-duration timer (e.g., *celldtx-onDurationTimer*), for example, if running, for example, based on receiving a cell DTX deactivation indication (e.g., by DCI format 2_9 or by RRC signaling) for the cell DTX of the cell. The wireless device may stop the on-duration timer (e.g., *celldtx-onDurationTimer*), if running, for example, based on receiving an indication (e.g., by DCI format 2_9 or by RRC signaling) indicating deactivation of the cell DTX of the cell.

The wireless device may start the on-duration timer (e.g., *celldrx-onDurationTimer*) for the cell after the slot offset (e.g., *celldrx-SlotOffset*) from the beginning of a subframe. The wireless device may start the on-duration timer (e.g., *celldrx-onDurationTimer*) for the cell after the slot offset (e.g., *celldrx-SlotOffset*) from the beginning of a subframe, for example, based on receiving a cell DRX activation indication (e.g., by DCI format 2_9 or by RRC signaling) for the cell DRX of the cell. The wireless device may start the on-duration timer (e.g., *celldrx-onDurationTimer*) for the cell after the slot offset (e.g., *celldrx-SlotOffset*) from the beginning of a subframe, for example, based on receiving an indication (e.g., by DCI format 2_9 or by RRC signaling) indicating activation of the cell DRX of the cell.

The wireless device may stop the on-duration timer (e.g., *celldrx-onDurationTimer*), for example, if running. The wireless device may stop the on-duration timer (e.g., *celldrx-onDurationTimer*), for example, if running, for example, based on receiving a cell DRX deactivation indication (e.g., by DCI format 2_9 or by RRC signaling) for the cell DRX of the cell. The wireless device may stop the on-duration timer (e.g., *celldrx-onDurationTimer*), for example, if running, for example, based on receiving an indication (e.g., by DCI format 2_9 or by RRC signaling) indicating deactivation of the cell DRX of the cell.

In at least some instances, a MAC layer/entity of the wireless device may not instruct a physical layer/entity of the wireless device to receive a transport block on a DL-SCH, for example, according to (or based on or for) a configured downlink assignment (e.g., SPS). A MAC layer/entity of the wireless device may not instruct a physical layer/entity of the wireless device to receive a transport block on a DL-SCH, for example, according to (or based on or for) a configured downlink assignment (e.g., SPS), for example, if the cell is not in an active duration/time/period of the cell DTX (or if the cell is not in the cell DTX active period or if the cell is in a non-active duration/time/period of the cell DTX).

A MAC layer/entity of the wireless device may instruct a physical layer/entity of the wireless device to receive a transport block on a DL-SCH, for example, according to (or based on or for) a configured downlink assignment (e.g., SPS). A MAC layer/entity of the wireless device may instruct a physical layer/entity of the wireless device to receive a transport block on a DL-SCH, for example, according to (or based on or for) a configured downlink assignment (e.g., SPS), for example, if the cell is in an active duration/time/period of the cell DTX (or if the cell is in the cell DTX active period or if the cell is not in a non-active duration/time/period of the cell DTX).

In at least some instances, a MAC layer/entity of the wireless device may not indicate a presence of any configured downlink assignment and may not deliver a stored HARQ information to a HARQ entity. A MAC layer/entity of the wireless device may not indicate a presence of any configured downlink assignment and may not deliver a stored HARQ information to a HARQ entity, for example, if the cell is not in an active duration/time/period of the cell DTX (or if the cell is not in the cell DTX active period or if the cell is in a non-active duration/time/period of the cell DTX).

A MAC layer/entity of the wireless device may indicate a presence of a configured downlink assignment and may deliver a stored HARQ information to a HARQ entity. A MAC layer/entity of the wireless device may indicate a presence of a configured downlink assignment and may deliver a stored HARQ information to a HARQ entity, for example, if the cell is in an active duration/time/period of the cell DTX (or if the cell is in the cell DTX active period or if the cell is not in a non-active duration/time/period of the cell DTX).

In at least some instances, the wireless device may not monitor PDCCH for an RNTI. The wireless device may not monitor PDCCH for an RNTI, for example, if the cell is not in an active duration/time/period of the cell DTX (or if the cell is not in the cell DTX active period or if the cell is in a non-active duration/time/period of the cell DTX). In at least some instances, the wireless device may not monitor PDCCH for DCI scrambled with the RNTI. The RNTI may be/comprise, for example, at least one of: C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, AI-RNTI, SL-RNTI, SLCS-RNTI and SL Semi-Persistent Scheduling V-RNTI.

The wireless device may monitor PDCCH for the RNTI, for example, if a retransmission timer (e.g., *drx-RetransmissionTimerDL*, *drx-RetransmissionTimerUL,* or *drx-RetransmissionTimerSL*) is running on at least one cell in the DRX group. The wireless device may monitor PDCCH for the RNTI, for example, if a retransmission timer (e.g., *drx-RetransmissionTimerDL*, *drx-RetransmissionTimerUL* or *drx-RetransmissionTimerSL*) is running on at least one cell in the DRX group, for example, if the cell in a DRX group is not in an active duration/time/period of the cell DTX (or if the cell is not in the cell DTX active period or if the cell is in a non-active duration/time/period of the cell DTX).

In at least some instances, the wireless device may not monitor PDCCH for the RNTI, for example, if a retransmission timer (e.g., *drx-RetransmissionTimerDL*, *drx-RetransmissionTimerUL,* or *drx-RetransmissionTimerSL*) is not running on any cell in the DRX group. The wireless device may not monitor PDCCH for the RNTI, for example, if a retransmission timer (e.g., *drx-RetransmissionTimerDL*, *drx-RetransmissionTimerUL,* or *drx-RetransmissionTimerSL*) is not running on any cell in the DRX group, for example, if the cell in a DRX group is not in an active duration/time/period of the cell DTX (or if the cell is not in the cell DTX active period or if the cell is in a non-active duration/time/period of the cell DTX).

The wireless device may monitor PDCCH for the RNTI, for example, if a random-access timer (*ra-Contention-ResolutionTimer,* or *ra-ResponseWindow,* or *msgB-ResponseWindow*) is running. The wireless device may monitor PDCCH for the RNTI, for example, if a random-access timer (*ra-ContentionResolutionTimer,* or *ra-ResponseWindow,* or *msgB-ResponseWindow*) is running, for example, if the cell is not in an active duration/time/period of the cell DTX (or if the cell is not in the cell DTX active period or if the cell is in a non-active duration/time/period of the cell DTX).

In at least some instances, the wireless device may not monitor PDCCH for the RNTI, for example, if a random-access timer (e.g., *ra-ContentionResolutionTimer,* and *ra-ResponseWindow,* and *msgB-ResponseWindow*) is not running. The wireless device may not monitor PDCCH for the RNTI, for example, if a random-access timer (e.g., *ra-ContentionResolutionTimer,* and *ra-ResponseWindow,* and *msgB-ResponseWindow*) is not running, for example, if the cell is not in an active duration/time/period of the cell DTX (or if the cell is not in the cell DTX active period or if the cell is in a non-active duration/time/period of the cell DTX).

The wireless device may monitor PDCCH for the RNTI, for example, based on sending (e.g., transmitting) a scheduling request (e.g., on PUCCH) and/or the scheduling request being pending. The wireless device may monitor PDCCH for the RNTI, for example, based on sending (e.g., transmitting) a scheduling request (e.g., on PUCCH) and/or the scheduling request being pending, for example, if the cell is not in an active duration/time/period of the cell DTX (or if the cell is not in the cell DTX active period or if the cell is in a non-active duration/time/period of the cell DTX).

The wireless device may monitor PDCCH for the RNTI, for example, if a scheduling request is sent (e.g., on PUCCH) by the wireless device and/or the scheduling request is pending. The wireless device may monitor PDCCH for the RNTI, for example, if a scheduling request is sent (e.g., on PUCCH) by the wireless device and/or the scheduling request is pending, for example, if the cell is not in an active duration/time/period of the cell DTX (or if the cell is not in the cell DTX active period or if the cell is in a non-active duration/time/period of the cell DTX).

In at least some instances, the wireless device may not monitor PDCCH for the RNTI, for example, based on not sending (e.g., transmitting) a scheduling request (e.g., on PUCCH) and/or the scheduling request not being pending. The wireless device may not monitor PDCCH for the RNTI, for example, based on not sending (e.g., transmitting) a scheduling request (e.g., on PUCCH) and/or the scheduling request not being pending, for example, if the cell is not in an active duration/time/period of the cell DTX (or if the cell is not in the cell DTX active period or if the cell is in a non-active duration/time/period of the cell DTX).

In at least some instances, the wireless device may not monitor PDCCH for the RNTI, for example, if a scheduling request is not sent/transmitted (e.g., on PUCCH) by the wireless device and/or the scheduling request is not pending. The wireless device may not monitor PDCCH for the RNTI, for example, if a scheduling request is not sent/transmitted (e.g., on PUCCH) by the wireless device and/or the scheduling request is not pending, for example, if the cell is not in an active duration/time/period of the cell DTX (or if the cell is not in the cell DTX active period or if the cell is in a non-active duration/time/period of the cell DTX).

The wireless device may monitor PDCCH for the RNTI, for example, based on not receiving, after a successful reception of a random-access response of/for a contention-free random-access procedure, DCI indicating a new transmission addressed to the C-RNTI of the wireless device (or the MAC entity of the wireless device). The wireless device may monitor PDCCH for the RNTI, for example, based on not receiving, after a successful reception of a random-access response of/for a contention-free random-access procedure, DCI indicating a new transmission addressed to the C-RNTI of the wireless device (or the MAC entity of the wireless device), for example, if the cell is not in an active duration/time/period of the cell DTX (or if the cell is not in the cell DTX active period or if the cell is in a non-active duration/time/period of the cell DTX). The wireless device may not select, for the contention-free random-access procedure, a random-access preamble among one or more random-access preambles used/configured for a contention-based random-access procedure.

In at least some instances, the wireless device may not monitor PDCCH for the RNTI, for example, based on receiving, after a successful reception of a random-access response of/for a contention-free random-access procedure, DCI indicating a new transmission addressed to the C-RNTI of the wireless device (or the MAC entity of the wireless device). The wireless device may not monitor PDCCH for the RNTI, for example, based on receiving, after a successful reception of a random-access response of/for a contention-free random-access procedure, DCI indicating a new transmission addressed to the C-RNTI of the wireless device (or the MAC entity of the wireless device), for example, if the cell is not in an active duration/time/period of the cell DTX (or if the cell is not in the cell DTX active period or if the cell is in a non-active duration/time/period of the cell DTX). The wireless device may not select, for the contention-free random-access procedure, a random-access preamble among one or more random-access preambles used/configured for a contention-based random-access procedure.

In at least some instances, a MAC layer/entity of the wireless device may not instruct a physical layer/entity of the wireless device to send/transmit/signal a scheduling request on a PUCCH resource. A MAC layer/entity of the wireless device may not instruct a physical layer/entity of the wireless device to send/transmit/signal a scheduling request on a PUCCH resource, for example, if the cell is not in an active duration/time/period of the cell DRX (or if the cell is not in the cell DRX active period or if the cell is in a non-active duration/time/period of the cell DRX).

A MAC layer/entity of the wireless device may instruct a physical layer/entity of the wireless device to send/transmit/signal a scheduling request on a PUCCH resource. A MAC layer/entity of the wireless device may instruct a physical layer/entity of the wireless device to send/transmit/signal a scheduling request on a PUCCH resource, for example, if the cell is in an active duration/time/period of the cell DRX (or if the cell is in the cell DRX active period or if the cell is not in a non-active duration/time/period of the cell DRX).

In at least some instances, the wireless device may not increment an SR counter for a pending SR. The wireless device may not increment an SR counter for a pending SR, for example, if the cell is not in an active duration/time/period of the cell DRX (or if the cell is not in the cell DRX active period or if the cell is in a non-active duration/time/period of the cell DRX).

The wireless device may increment an SR counter for a pending SR, for example, based on sending (e.g., transmitting) an SR. The wireless device may increment an SR counter for a pending SR, for example, based on sending (e.g., transmitting) an SR, for example, if the cell is in an active duration/time/period of the cell DRX (or if the cell is in the cell DRX active period or if the cell is not in a non-active duration/time/period of the cell DRX).

In at least some instances, the wireless device may not start a prohibit timer (e.g., *sr-ProhibitTimer*) for a pending SR. The wireless device may not start a prohibit timer (e.g., *sr-ProhibitTimer*) for a pending SR, for example, if the cell is not in an active duration/time/period of the cell DRX (or if the cell is not in the cell DRX active period or if the cell is in a non-active duration/time/period of the cell DRX).

The wireless device may start a prohibit timer (e.g., *sr-ProhibitTimer*) for a pending SR, for example, based on sending (e.g., transmitting) an SR. The wireless device may start a prohibit timer (e.g., *sr-ProhibitTimer*) for a pending SR, for example, based on sending (e.g., transmitting) an SR, for example, if the cell is in an active duration/time/period of the cell DRX (or if the cell is in the cell DRX active period or if the cell is not in a non-active duration/time/period of the cell DRX).

In at least some instances, a MAC layer/entity of the wireless device may not deliver any configured uplink grant and an associated HARQ information to a HARQ entity. A MAC layer/entity of the wireless device may not deliver any configured uplink grant and an associated HARQ information to a HARQ entity, for example, if the cell is not in an active duration/time/period of the cell DRX (or if the cell is not in the cell DRX active period or if the cell is in a non-active duration/time/period of the cell DRX).

A MAC layer/entity of the wireless device may deliver a configured uplink grant and an associated HARQ information to a HARQ entity. A MAC layer/entity of the wireless device may deliver a configured uplink grant and an associated HARQ information to a HARQ entity, for example, if the cell is in an active duration/time/period of the cell DRX (or if the cell is in the cell DRX active period or if the cell is not in a non-active duration/time/period of the cell DRX).

In at least some instances, a MAC layer/entity of the wireless device may not obtain, from a multiplexing and assembly entity, a MAC PDU to send (e.g., transmit) for a configured uplink grant. A MAC layer/entity of the wireless device may not obtain, from a multiplexing and assembly entity, a MAC PDU to send (e.g., transmit) for a configured uplink grant, for example, if the cell is not in an active duration/time/period of the cell DRX (or if the cell is not in the cell DRX active period or if the cell is in a non-active duration/time/period of the cell DRX).

A MAC layer/entity of the wireless device may obtain, from a multiplexing and assembly entity, a MAC PDU to send (e.g., transmit) for a configured uplink grant. A MAC layer/entity of the wireless device may obtain, from a multiplexing and assembly entity, a MAC PDU to send (e.g., transmit) for a configured uplink grant, for example, if the cell is in an active duration/time/period of the cell DRX (or if the cell is in the cell DRX active period or if the cell is not in a non-active duration/time/period of the cell DRX).

In at least some instances, a MAC layer/entity of the wireless device may not instruct a HARQ process associated with a configured uplink grant to trigger a new transmission or a retransmission. A MAC layer/entity of the wireless device may not instruct a HARQ process associated with a configured uplink grant to trigger a new transmission or a retransmission, for example, if the cell is not in an active duration/time/period of the cell DRX (or if the cell is not in the cell DRX active period or if the cell is in a non-active duration/time/period of the cell DRX).

A MAC layer/entity of the wireless device may instruct a HARQ process associated with a configured uplink grant to trigger a new transmission or a retransmission. A MAC layer/entity of the wireless device may instruct a HARQ process associated with a configured uplink grant to trigger a new transmission or a retransmission, for example, if the cell is in an active duration/time/period of the cell DRX (or if the cell is in the cell DRX active period or if the cell is not in a non-active duration/time/period of the cell DRX).

In at least some instances, the wireless device may not start or restart a configured grant timer (e.g., *configuredGrantTimer*), for example, if configured. The wireless device may not start or restart a configured grant timer (e.g., *configuredGrantTimer*), for example, if configured, for example, if the cell is not in an active duration/time/period of the cell DRX (or if the cell is not in the cell DRX active period or if the cell is in a non-active duration/time/period of the cell DRX).

The wireless device may start or restart a configured grant timer (e.g., *configuredGrantTimer*), for example, if configured. The wireless device may start or restart a configured grant timer (e.g., *configuredGrantTimer*), for example, if configured, if the cell is in an active duration/time/period of the cell DRX (or if the cell is in the cell DRX active period or if the cell is not in a non-active duration/time/period of the cell DRX).

In at least some instances, the wireless device may not start or restart a retransmission timer (e.g., *cg-RetransmissionTimer*), for example, if configured. The wireless device may not start or restart a retransmission timer (e.g., *cg-RetransmissionTimer*), for example, if configured, for example if the cell is not in an active duration/time/period of the cell DRX (or if the cell is not in the cell DRX active period or if the cell is in a non-active duration/time/period of the cell DRX).

The wireless device may start or restart a retransmission timer (e.g., *cg-RetransmissionTimer*), for example, if configured. The wireless device may start or restart a retransmission timer (e.g., *cg-RetransmissionTimer*), for example, if configured, for example, if the cell is in an active duration/time/period of the cell DRX (or if the cell is in the cell DRX active period or if the cell is not in a non-active duration/time/period of the cell DRX).

In at least some instances, the wireless device configured (e.g., *celldtx-Config*) and activated with the cell DTX may not expect to receive a periodic CSI-RS and/or a semi-persistent CSI-RS configured in a CSI report configuration (e.g., in *CSI-ReportConfig*) associated with a report quantity parameter (e.g., *reportQuantity*) comprising at least rank indicator (RI). The wireless device configured (e.g., *celldtx-Config*) and activated with the cell DTX may not expect to receive a periodic CSI-RS and/or a semi-persistent CSI-RS configured in a CSI report configuration (e.g., in *CSI-ReportConfig*) associated with a report quantity parameter (e.g., *reportQuantity*) comprising at least rank indicator (RI), for example, if in a non-active period/time/duration of the cell DTX.

In at least some instances, the base station may not send (e.g., transmit), to the wireless device configured (e.g., *celldtx-Config*) and activated with the cell DTX, a periodic CSI-RS and/or a semi-persistent CSI-RS configured in a CSI report configuration (e.g., in *CSI-ReportConfig*) associated with a report quantity parameter (e.g., *reportQuantity*) comprising at least rank indicator (RI). The base station may not send (e.g., transmit), to the wireless device configured (e.g., *celldtx-Config*) and activated with the cell DTX, a periodic CSI-RS and/or a semi-persistent CSI-RS configured in a CSI report configuration (e.g., in *CSI-ReportConfig*) associated with a report quantity parameter (e.g., *reportQuantity*) comprising at least rank indicator (RI), for example, if in a non-active period/time/duration of the cell DTX.

The wireless device configured (e.g., *celldtx-Config*) and activated with the cell DTX may expect to receive a periodic CSI-RS and/or a semi-persistent CSI-RS configured in a CSI report configuration (e.g., in *CSI-ReportConfig*) associated with a report quantity parameter (e.g., *reportQuantity*) comprising at least rank indicator (RI). The wireless device configured (e.g., *celldtx-Config*) and activated with the cell DTX may expect to receive a periodic CSI-RS and/or a semi-persistent CSI-RS configured in a CSI report configuration (e.g., in *CSI-ReportConfig*) associated with a report quantity parameter (e.g., *reportQuantity*) comprising at least rank indicator (RI), for example, if in an active period/time/duration of the cell DTX.

The base station may send (e.g., transmit), to the wireless device configured (e.g., *celldtx-Config*) and activated with the cell DTX, a periodic CSI-RS and/or a semi-persistent CSI-RS configured in a CSI report configuration (e.g., in *CSI-ReportConfig*) associated with a report quantity parameter (e.g., *reportQuantity*) comprising at least rank indicator (RI). The base station may send (e.g., transmit), to the wireless device configured (e.g., *celldtx-Config*) and activated with the cell DTX, a periodic CSI-RS and/or a semi-persistent CSI-RS configured in a CSI report configuration (e.g., in *CSI-ReportConfig*) associated with a report quantity parameter (e.g., *reportQuantity*) comprising at least rank indicator (RI), for example, if in an active period/time/duration of the cell DTX.

In at least some instances, the wireless device configured (e.g., *celldrx-Config*) and activated with the cell DRX may not expect to send (e.g., transmit) a periodic SRS and/or a semi-persistent SRS for channel acquisition. The wireless device configured (e.g., *celldrx-Config*) and activated with the cell DRX may not expect to send (e.g., transmit) a periodic SRS and/or a semi-persistent SRS for channel acquisition, for example, if in a non-active period/time/duration of the cell DRX. In at least some instances, the wireless device configured (e.g., *celldrx-Config*) and activated with the cell DRX may send (e.g., transmit) an SRS for positioning. The wireless device configured (e.g., *celldrx-Config*) and activated with the cell DRX may send (e.g., transmit) an SRS for positioning, for example, if in a non-active period/time/duration of the cell DRX. SRS transmission for positioning may not be impacted by the cell DRX (or the cell DRX operation).

In at least some instances, the base station may not receive, from the wireless device configured (e.g., *celldrx-Config*) and activated with the cell DRX, a periodic SRS or a semi-persistent SRS for channel acquisition. The base station may not receive, from the wireless device configured (e.g., *celldrx-Config*) and activated with the cell DRX, a periodic SRS or a semi-persistent SRS for channel acquisition, for example, if in a non-active period/time/duration of the cell DRX. In at least some instances, the base station may receive, from the wireless device configured (e.g., *celldrx-Config*) and activated with the cell DRX, an SRS for positioning. The base station may receive, from the wireless device configured (e.g., *celldrx-Config*) and activated with the cell DRX, an SRS for positioning, for example, if in a non-active period/-time/duration of the cell DRX. SRS transmission for positioning may not be impacted by the cell DRX (or the cell DRX operation).

The wireless device configured (e.g., *celldrx-Config*) and activated with the cell DRX may expect to send (e.g., transmit) a periodic SRS and/or a semi-persistent SRS for channel acquisition. The wireless device configured (e.g., *celldrx-Config*) and activated with the cell DRX may expect to send (e.g., transmit) a periodic SRS and/or a semi-persistent SRS for channel acquisition, for example, if in an active period/time/duration of the cell DRX.

The base station may receive, from the wireless device configured (e.g., *celldrx-Config*) and activated with the cell DRX, a periodic SRS or a semi-persistent SRS for channel acquisition. The base station may receive, from the wireless device configured (e.g., *celldrx-Config*) and activated with the cell DRX, a periodic SRS or a semi-persistent SRS for channel acquisition, for example, if in an active period/time/duration of the cell DRX.

A wireless device configured for operation on a cell, for example, according to (or based on) one or both of a cell DTX operation by *cellDTXConfig* and a cell DRX operation by *cellDRXConfig* for the cell may be additionally provided by *dci-Format2-9* a search space set to monitor PDCCH for detection of a DCI format 2_9, for example, according to (or based on) a common search space, and a location in the DCI format 2_9 by *position-inDCI-NES* of a cell DTX/DRX indicator field for the cell. The one or more configuration parameters may comprise a parameter (e.g., *dci-Format2-9*) indicating a search space set (e.g., a common search space set) to monitor PDCCH for detection of a DCI format (e.g., a DCI format 2_9). The one or more configuration parameters may comprise a location parameter (e.g., *position-inDCI-NES*) indicating a location of a cell DTX/DRX indicator field for/of the cell in the DCI format (e.g., the DCI format 2_9).

The cell DTX/DRX indicator field may comprise/include one or more bits. The cell DTX/DRX indicator field may comprise/include two bits, for example, if the wireless device is configured with both the cell DTX operation (e.g., by *cellDTXConfig*) and the cell DRX operation (e.g., by *cellDRXConfig*) for the cell. The first bit of the two bits may indicate the cell DTX operation. The second bit of the two bits may indicate the cell DRX operation. The cell DTX/DRX indicator field may comprise/include one bit, for example, if the wireless device is configured with only one of the cell DTX operation (e.g., by *cellDTXConfig*) and the cell DRX operation (e.g., by *cellDRXConfig*) for the cell, indicating one of the cell DTX operation and the cell DRX operation, respectively, for the cell. A first value (e.g., '0') for a bit of the cell DTX/DRX indicator field may indicate deactivation of the cell DTX or of the cell DRX. A second value (e.g., '1') for a bit of the cell DTX/DRX indicator field may indicate activation of the cell DTX or of the cell DRX. If the cell is configured with an SUL carrier (in addition to an UL carrier (e.g., NUL)), the cell DTX/DRX indicator field indication for activation or deactivation of the cell DRX may use/apply to both the UL carrier and the SUL carrier.

A wireless device may not expect to monitor PDCCH for detection of the DCI format 2_9 on more than one cell (e.g., more than one serving cells). If a wireless device receives, in slot $m$ on an active downlink BWP of a first cell (e.g., a first serving cell), a PDCCH providing/with a DCI format 2_9 that indicates a change in activation or deactivation of a current cell DTX operation or a current cell DRX operation for a second cell (e.g., a second serving cell), the wireless device may operate on the second cell, for example, according to (or based on) the indicated cell DTX operation or the indicated cell DRX operation starting from a slot on an active downlink BWP or on an active uplink BWP of the second cell, respectively, that is not before the beginning of the slot $m+d$ on the active downlink BWP of the first cell where d is a quantity (e.g., number) of slots determined, for example, based on a subcarrier spacing (SCS) of the active downlink BWP of the first cell. For example, if the SCS of the active downlink BWP is 15kHz, the quantity (e.g., number) of slots is equal to 3. For example, if the SCS of the active downlink BWP is 30kHz, the quantity (e.g., number) of slots is equal to 6.

In at least some instances, the wireless device may not receive on/via the cell PDCCH candidates for search space sets associated with detection of a DCI format (e.g., DCI format 2_0, DCI format 2_1, DCI format 2_2, DCI format 2_3, DCI format 2_4, and DCI format 2_5, DCI format 1_0, DCI format 1_1, DCI format 1_2, DCI format 1_3, DCI format 0_0, DCI format 0_1, DCI format 0_2, DCI format 0_3). The wireless device may not receive on/via the cell PDCCH candidates for search space sets associated with detection of a DCI format, for example, if outside of an active time/period/duration (e.g., a DTX active time/period/duration) of the cell DTX of the cell. In at least some instances, the wireless device may not receive on/via the cell CSI-RS in resources provided by *CSI-ReportConfig* with *reportQuantity* that includes rank indication. The wireless device may not receive on/via the cell CSI-RS in resources provided by *CSI-ReportConfig* with *reportQuantity* that includes rank indication, for example, if outside of an active time/period/duration (e.g., a DTX active time/period/duration) of the cell DTX of the cell.

In at least some instances, the wireless device may not send (e.g., transmit) on/via the cell periodic or semi-persistent PUCCH or PUSCH (e.g., CSI report, configured uplink grant). The wireless device may not send (e.g., transmit) on/via the cell periodic or semi-persistent PUCCH or PUSCH, for example, if outside of an active time/period/duration (e.g., a DRX active time/period/duration) of the cell DRX of the cell. In at least some instances, the wireless device may not send (e.g., transmit) on/via the cell periodic or semi-persistent SRS except for SRS in resources provided by *SRS-posResourceSet.* The wireless device may not send (e.g., transmit) on/via the cell periodic or semi-persistent SRS except for SRS in resources provided by *SRS-posResourceSet,* for example, if outside of an active time/period/duration (e.g., a DRX active time/period/duration) of the cell DRX of the cell.

The wireless device may be configured via a cell using a cell DTX or a cell DTX operation. The cell DTX may be (or may be interchangeably used with) the cell DTX operation. The wireless device may send (e.g., transmit) via the cell using a cell DRX or a cell DRX operation. The cell DRX may be (or may be interchangeably used with) cell DRX operation.

A DCI format 2_9 may be used for activating or deactivating a cell DTX/DRX (or a cell DTX/DRX configuration or a cell DTX/DRX operation) of one or multiple cells (e.g., one or multiple serving cells) for one or more wireless devices. The DCI format 2_9 with CRC scrambled by a NES-RNTI may send (e.g., transmit) information, for example, block number 1, block number 2, ..., block number N. A starting position of a block may be determined, by the wireless device and/or the base station, by a position parameter (e.g., *positionInDCI-cellDTRX*). The one or more configuration parameters may comprise the position parameter.

One or more blocks may be configured for the wireless device. The one or more blocks may be configured for the wireless device if the wireless device is configured with a DTX/DRX parameter (e.g., NES-RNTI, *cellDTRX-DCI-config*). The one or more blocks may be configured for the wireless device, for example, by higher layers, with a cell DTX/DRX indication field defined for each block. The cell DTX/DRX indication field may comprise 2 bits, for example, if *cellDTXConfig* and *cellDTXConfig* are both configured for a cell, with the most-significant bit (MSB) corresponding to a cell DTX (or a cell DTX configuration) of the cell and the least-significant bit (LSB) corresponding to a cell DRX (or a cell DRX configuration) of the cell. The cell DTX/DRX indication field may comprise 1 bit, for example, if one of *cellDTXConfig* or *cellDTXConfig* is configured for a cell. The one or more configuration parameters may comprise the DTX/DRX parameter.

A size of the DCI format 2_9 may be indicated by a size parameter (e.g., *sizeDCI-2-9*). The one or more configuration parameters may comprise the size parameter (e.g., *sizeDCI-2-9*). A quantity (e.g., number) of information bits in the DCI format 2_9 may be equal to or less than a payload size of the DCI format 2_9. If the quantity (e.g., number) of information bits in the DCI format 2_9 is less than a size of the DCI format 2_9, the remaining bits may be reserved.

A wireless device may be configured with a list of TCI states (e.g., *TCI-State*) within/by a PDSCH configuration parameter *PDSCH-Config* to decode PDSCH, for example, according to (or based on) a detected PDCCH with DCI intended for the wireless device and a given cell (e.g., a given serving cell, a given non-serving/candidate/target cell). A quantity (e.g., number) of TCI states in the list may depend on a wireless device (e.g., a UE) capability parameter *maxNumberConfiguredTCIstatesPerCC.* Each TCI state (e.g., *TCI-State*) may comprise/indicate respective parameters for configuring a quasi co-location relationship between one or two downlink reference signals and DM-RS port(s) of a PDSCH, a DM-RS port of a PDCCH, or CSI-RS port(s) of a CSI-RS resource. The quasi co-location relationship may be configured by a QCL type parameter (e.g., *qcl-Type1*) for a first downlink reference signal of the one or more downlink reference signals. The quasi co-location relationship may be configured by a QCL type parameter (e.g., *qcl-Type2*) for a second downlink reference signal of the one or more downlink reference signals. If two downlink reference signals comprising a first downlink reference signal and a second downlink reference signal are indicated by a TCI state, QCL types of the two downlink reference signals may not be the same, regardless of whether the first downlink reference signal and the second downlink reference signal are the same or different. A quasi co-location type corresponding to a downlink reference signal of the one or more downlink reference signals may be given by a QCL type parameter (e.g, *qcl-Type*) in a QCL parameter (e.g., *QCL-Info*). The QCL type parameter (e.g., *qcl-Type*) may, for example, indicate a value 'typeA', comprising a Doppler shift, a Doppler spread, an average delay, and a delay spread. The QCL type parameter (e.g., *qcl-Type)* may, for example, indicate a value 'typeB', comprising a Doppler shift and a Doppler spread. The QCL type parameter (e.g., *qcl-Type)* may, for example, indicate a value 'typeC', comprising a Doppler shift and an average delay. The QCL type parameter (e.g., *qcl-Type)* may, for example, indicate a value 'typeD', comprising a Spatial Rx parameter.

A wireless device may be configured with a list of TCI states (e.g., up to 128 TCI-State configurations) within/by a downlink-or-joint-TCI-state-list parameter (e.g., *dl-OrJointTCI-StateList*) in *PDSCH-Config.* A TCI state in the list of TCI states may, for example, provide/indicate a reference signal for a quasi co-location for DM-RS of a PDSCH, DM-RS of a PDCCH in a BWP/cell, and/or a CSI-RS. A TCI state in the list of TCI states may, for example, provide/indicate a reference signal for determining uplink transmission spatial filter for a dynamic-grant PUSCH, a configured-grant based PUSCH, a PUCCH resource in a BWP/cell, and/or, an SRS.

A wireless device may receive an activation command (e.g., MAC-CE, DCI) used to map up to a quantity (e.g., number) of TCI states and/or pairs of TCI states (e.g., up to 8 TCI states and/or pairs of TCI states), with one TCI state for downlink channels/signals and/or one TCI state for uplink channels/signals, to codepoint(s) of a DCI field 'Transmission Configuration Indication' for one cell or for a set of cells/downlink BWPs, and/or up to a quantity (e.g., number) of sets of TCI states (e.g., up to 8 sets of TCI states). Each set of the quantity (e.g., number) of sets may be comprised of up to a quantity (e.g., number) of TCI state(s) for downlink and uplink signals/channels (e.g., up to two TCI state(s)), or up to a quantity (e.g., number) of TCI state(s) (e.g., up to two TCI state(s)) for downlink channels/signals and up to a quantity (e.g., number) of TCI state(s) (e.g., up to two TCI state(s)) for uplink channels/signals to codepoint(s) of a DCI field *'Transmission Configuration Indication'* for one cell or for a set of cells/downlink BWPs, and if applicable, for one cell or for a set of cells/uplink BWPs. If a set of TCI state IDs are activated, by the activation command, for a set of cells/downlink BWPs and if applicable, for a set of cells/uplink BWPs, where the applicable list of cells may be determined, by the wireless device, by an indicated cell in the activation command, the (same) set of TCI state IDs may be used/applied by the wireless device to/for all downlink and/or uplink BWPs in the indicated cells (or the applicable list of cells). If the activation command maps *TCI-State(s)* and/or *TCI-UL-State(s)* to only one (or to a single) TCI codepoint, the wireless device may use/apply the (indicated) *TCI-State(s)* and/or *TCI-UL-State(s)* to one cell or to a set of cells/downlink BWPs, and if applicable, to one cell or to a set of cells/uplink BWPs, for example, based on the indicated mapping for the one single TCI codepoint is used by the wireless device.

If *tci-PresentInDCI* is set as 'enabled' or *tci-PresentDCI-1-2* is configured for a CORESET, a wireless device configured with *dl-OrJointTCI-StateList* by one or more configuration parameters (e.g., RRC messages/parameters) and activated with *TCI-State* by the activation command, or configured with *ul-TCI-StateList* by one or more configuration parameters (e.g., RRC messages/parameters) and activated with *TCI-UL-State* by the activation command may receive a DCI format (e.g., DCI format 1_1/1_2) providing/indicating TCI state(s) (e.g., *TCI-State(s)* and/or *TCI-UL-State(s)*) for a cell or all cells in the same cell list configured by a simultaneous TCI update parameter (e.g., *simultaneousU-TCI-UpdateList1, simultaneousU-TCI-UpdateList2, simultaneousU-TCI-UpdateList3, simultaneousU-TCI UpdateList4*). The DCI format may be with or without a downlink assignment. The simultaneous TCI update parameter may be a higher layer parameter (e.g., RRC parameter).

If a wireless device configured with *dl-OrJointTCI-StateList* by one or more configuration parameters (e.g., RRC messages/parameters) sends (e.g., transmits) an uplink transmission (e.g., a PUCCH transmission, a PUSCH transmission) with a positive HARQ-ACK corresponding to the DCI format indicating the indicated TCI state(s) (e.g., *TCI-State(s)* and/or *TCI-UL-State(s)*), and if the indicated TCI State(s) is/are different from the previously indicated TCI state(s), the indicated *TCI-State(s)* may be used/applied, by the wireless device, starting from a first/starting/earliest slot that is at least a quantity (e.g., number) of symbols (e.g., *beamAppTime* symbols) after the last symbol of the uplink transmission. The first/starting/earliest slot and the quantity (e.g., number) of symbols may be both determined, by the wireless device, for example, based on an active BWP with the smallest subcarrier spacing among BWP(s) of the cells using/applying the indicated TCI-State(s) that are active at the end of the uplink transmission carrying/with the positive HARQ-ACK. The quantity (e.g., number) of symbols may be indicated/provided to the wireless device by RRC messages (e.g., one or more configuration parameters).

In a situation where a wireless device is configured/indicated/provided with a downlink-or-joint-TCI-state-list parameter (e.g., *dl-OrJointTCI-StateList*) or a TCI-UL-state parameter (*e.g., TCI-UL-State*) and is having two indicated TCI states (or two indicated uplink TCI states) comprising a first indicated TCI state and a second indicated TCI state, for a periodic, semi-persistent or aperiodic SRS resource set with a usage parameter (e.g., *usage*), in *SRS-ResourceSet,* set to 'codebook', 'nonCodebook' or 'antennaSwitching' or for an aperiodic SRS resource set with a usage parameter (e.g., *usage*), in *SRS-ResourceSet,* set to 'beamManagement', the wireless device may be configured/indicated/provided by/with an RRC parameter (e.g., *applyIndicatedTCIState*), to the SRS resource set, to indicate whether the wireless device may use/apply the first indicated TCI state or the second indicated TCI state to the SRS resource set. If a wireless device is configured/indicated/provided by a PDCCH configuration parameter (e.g., *PDCCH-Config*) that comprises two different values of a coreset pool index (e.g., *coresetPoolIndex*) in a control resource set (e.g., *ControlResourceSet*), the first indicated TCI state and second indicated TCI state correspond to the indicated TCI states (or uplink TCI states) specific to a coreset pool index (e.g., *coresetPoolIndex*) with value 0 and a coreset pool index (e.g., *coresetPoolIndex*) with value 1, respectively. In a situation where a wireless device is configured/indicated/provided by/with a PDCCH configuration parameter (e.g., *PDCCH-Config*) that contains/comprises two different values of a coreset pool index (e.g., *coresetPoolIndex*) in a control resource set (e.g., *ControlResourceSet),* and is not configured/indicated/provided with an apply-indicated-TCI-state parameter (e.g., *applyIndicatedTCIState*) for an aperiodic SRS resource set, if the aperiodic SRS resource set is triggered by PDCCH on a CORESET associated with a *coresetPoolIndex* value, the wireless device may use/apply, to the aperiodic SRS resource set, an indicated TCI state (or uplink TCI state) specific to the *coresetPoolIndex* value. If two SRS resource sets comprising a first SRS resource set and a second SRS resource with a usage parameter (e.g., *usage*) in an SRS resource set parameter (eg., *SRS-ResourceSet*) set to 'codebook' or 'nonCodebook' are configured/indicated/provided, the wireless device may not expect that the first indicated TCI state is used/applied to the second SRS resource set and that the second indicated TCI state is used/applied to the first SRS resource set.

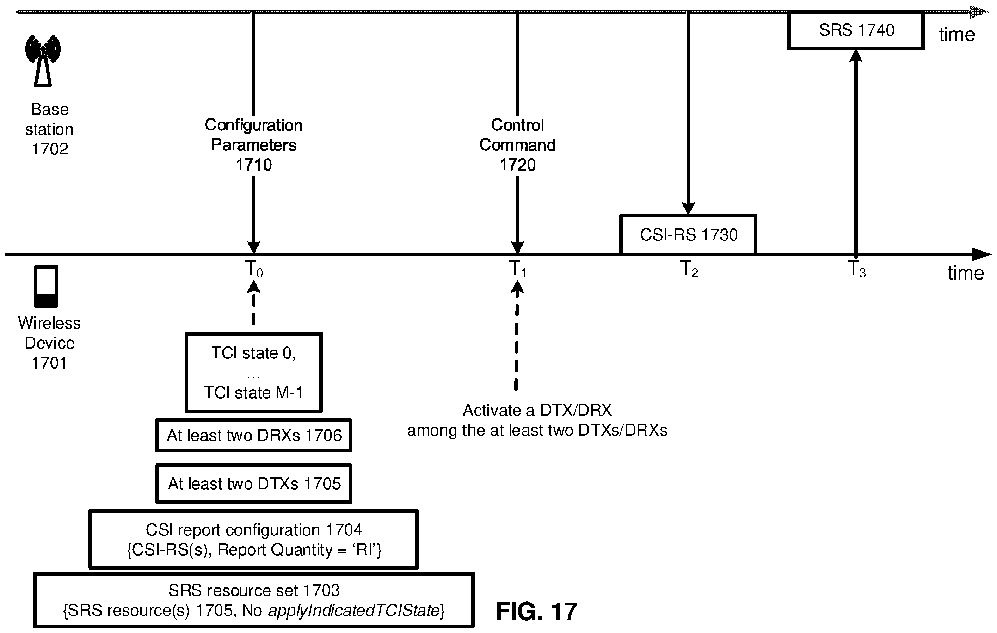

FIG. 17 shows an example of discontinuous transmission (DTX) and/or discontinuous reception (DRX). For example, a wireless device 1701 may receive one or more messages. For example, the wireless device 1701 may receive the one or more messages from a base station 1702. The base station 1702 may send (e.g., transmit) the one or more messages. For example, the wireless device 1701 may receive the one or more messages from a relay node. For example, the wireless device 1701 may receive the one or more messages from another wireless device (e.g., TRP, vehicle, remote radio head, and the like). The one or more messages may comprise one or more configuration parameters (e.g., Configuration parameters 1710 at time $T_0$ in FIG. 17). For example, the one or more configuration parameters may be one or more RRC configuration parameters. For example, the one or more configuration parameters may be one or more RRC reconfiguration parameters (e.g., *RRCReconfiguration, reconfigurationWithSync*). For example, the one or more messages may be one or more RRC messages. For example, the one or more messages may be one or more RRC reconfiguration messages (e.g., *RRCReconfiguration, reconfigurationWithSync*). For example, the one or more configuration parameters may be for a cell. The cell may be, for example, a serving cell. At least one configuration parameter of the one or more configuration parameters may be for the cell. The cell may be a primary cell (PCell). The cell may be a primary secondary cell (PSCell). The cell may be a secondary cell (SCell). The cell may be a secondary cell configured with PUCCH (e.g., PUCCH SCell).

The cell may be a special Cell (SpCell). For dual connectivity (DC) operation, the SpCell may refer to (or indicate) the PCell of the MCG or the PSCell of the SCG, otherwise the SpCell may refer to (or indicate) the PCell. For example, the cell may be a primary SCG cell (PSCell). For dual connectivity operation, the wireless device may, for example, perform a random-access procedure via the PSCell, for example, if performing the Reconfiguration with Sync procedure.

The cell may be an unlicensed cell (e.g., operating in an unlicensed band). For example, the cell may be a licensed cell (e.g., operating in a licensed band). For example, the cell may operate in a first frequency range (FR1). The FR1 may, for example, comprise frequency bands below 6 GHz. For example, the cell may operate in a second frequency range (FR2). The FR2 may, for example, comprise frequency bands from 24 GHz to 52.6 GHz. For example, the cell may operate in a third frequency range (FR3). The FR3 may, for example, comprise frequency bands from 52.6 GHz to 71 GHz. The FR3 may, for example, comprise frequency bands starting from (or above) 52.6 GHz.

The wireless device 1701 may perform uplink transmissions (e.g., PUSCH, PUCCH, PUCCH) via/of the cell in a first time and in a first frequency. The wireless device 1701 may perform downlink receptions (e.g., PDCCH, PDSCH) via/of the cell in a second time and in a second frequency. For example, the cell may operate in a time-division duplex (TDD) mode. In the TDD mode, the first frequency and the second frequency may be the same. In the TDD mode, the first time and the second time may be different. For example, the cell may operate in a frequency-division duplex (FDD) mode. In the FDD mode, the first frequency and the second frequency may be different. In the FDD mode, the first time and the second time may be the same.

The wireless device 1701 may be in an RRC connected mode/state. For example, the wireless device 1701 may be in an RRC idle mode/state. For example, the wireless device 1701 may be in an RRC inactive mode/state.

The cell may comprise a plurality of BWPs. The one or more configuration parameters may indicate, for the cell, the plurality of BWPs. The plurality of BWPs may comprise one or more uplink BWPs comprising an uplink BWP of the cell. The plurality of BWPs may comprise one or more downlink BWPs comprising a downlink BWP of the cell.

A BWP of the plurality of BWPs may be in one of an active state and an inactive state (or in a deactivated state). For example, in the active state of a downlink BWP of the one or more downlink BWPs, the wireless device 1701 may monitor a downlink channel/signal (e.g., PDCCH, DCI, CSI-RS, PDSCH) on/for/via the downlink BWP. For example, in the active state of a downlink BWP of the one or more downlink BWPs, the wireless device 1701 may receive a PDSCH on/via/for the downlink BWP. For example, in the inactive state of a downlink BWP of the one or more downlink BWPs, the wireless device 1701 may not monitor a downlink channel/signal (e.g., PDCCH, DCI, CSI-RS, PDSCH) on/via/for the downlink BWP. In the inactive state of a downlink BWP of the one or more downlink BWPs, the wireless device 1701 may stop monitoring (or receiving) a downlink channel/signal (e.g., PDCCH, DCI, CSI-RS, PDSCH) on/via/for the downlink BWP. For example, in the inactive state of a downlink BWP of the one or more downlink BWPs, the wireless device 1701 may not receive a PDSCH on/via/for the downlink BWP. In the inactive state of a downlink BWP of the one or more downlink BWPs, the wireless device 1701 may stop receiving a PDSCH on/via/for the downlink BWP.

The wireless device 1701 may send (e.g., transmit) an uplink signal/channel (e.g., PUCCH, preamble, PUSCH, PRACH, PUCCH, etc.) on/via the uplink BWP, for example, in the active state of an uplink BWP of the one or more uplink BWPs. The wireless device 1701 may not send (e.g., transmit) an uplink signal/channel (e.g., PUCCH, preamble, PUSCH, PRACH, PUCCH, etc.) on/via the uplink BWP, for example, in the inactive state of an uplink BWP of the one or more uplink BWPs.

The wireless device 1701 may activate the downlink BWP of the one or more downlink BWPs of the cell. For example, the activating the downlink BWP may comprise setting (or switching to) the downlink BWP as an active downlink BWP of the cell. For example, the activating the downlink BWP may comprise setting the downlink BWP in the active state. For example, the activating the downlink BWP may comprise switching the downlink BWP from the inactive state to the active state.

The wireless device 1701 may activate the uplink BWP of the one or more uplink BWPs of the cell. For example, the activating the uplink BWP may comprise that the wireless device 1701 sets (or switches to) the uplink BWP as an active uplink BWP of the cell. For example, the activating the uplink BWP may comprise setting the uplink BWP in the active state.

For example, the activating the uplink BWP may comprise switching the uplink BWP from the inactive state to the active state.

The one or more configuration parameters may be for the (active) downlink BWP of the cell. For example, at least one configuration parameter of the one or more configuration parameters may be for the downlink BWP of the cell. The one or more configuration parameters may be for the (active) uplink BWP of the cell. For example, at least one configuration parameter of the one or more configuration parameters may be for the uplink BWP of the cell.

The one or more configuration parameters may indicate a plurality of TCI states. The one or more configuration parameter may comprise a TCI state list parameter (e.g., provided by a higher layer (e.g., RRC) parameter *dl-OrJoint-TCIStateList*) indicating a TCI state list. The TCI state list may comprise the plurality of TCI states. The one or more configuration parameters may comprise one or more PDSCH configuration parameters (e.g., *PDSCH-Config*), for example, comprising the TCI state list parameter that indicates the plurality of TCI states. For example, the plurality of TCI states may be TCI state 0, ..., and TCI state M-1 as shown in FIG. 17.

The one or more configuration parameters may indicate, for the plurality of TCI states, a plurality of TCI state indexes/identifiers/identities (e.g., *TCI-StateId*). The one or more configuration parameters may indicate, for each TCI state of the plurality of TCI states, a respective TCI state index of the plurality of TCI state indexes. Each TCI state of the plurality of TCI states may be indicated/identified by a respective TCI state index of the plurality of TCI state indexes. For example, the one or more configuration parameters may indicate, for a first TCI state of the plurality of TCI states, a first TCI state index of the plurality of TCI state indexes. The one or more configuration parameters may indicate, for a second TCI state of the plurality of TCI states, a second TCI state index of the plurality of TCI state indexes. The one or more configuration parameters may indicate the plurality of TCI states that indicate a unified TCI state for the cell. The one or more configuration parameters may comprise the one or more PDSCH configuration parameters, for example, for/of the downlink BWP of the cell. The one or more configuration parameters indicate the plurality of TCI states for the downlink BWP of the cell.

The one or more configuration parameters may comprise the one or more PDSCH configuration parameters, for example, for a second downlink BWP of a second cell. The one or more configuration parameters indicate the plurality of TCI states for the second downlink BWP of the second cell. The one or more configuration parameters may comprise, for/of the downlink BWP of the cell, a reference unified TCI state list parameter (e.g., *unifiedTCI-StateRef*) indicating the second downlink BWP of the second cell. The reference unified TCI state list parameter may comprise a BWP index (e.g., BWP-Id) identifying/indicating the second downlink BWP. The reference unified TCI state list parameter may comprise a cell index (e.g., *ServCellIndex*) identifying/indicating the second cell. The second downlink BWP of the second cell may be a reference BWP of a reference cell for the downlink BWP of the cell. The downlink BWP of the cell may be a target BWP of a target cell. The one or more PDSCH configuration parameters of the downlink BWP of the cell may not comprise a higher layer (e.g., RRC) parameter *dl-OrJoint-TCIStateList*, for example, based on the one or more configuration parameters comprising, for the downlink BWP of the cell, the reference unified TCI state list parameter.

The one or more configuration parameters may comprise a unified-TCI-state-type parameter (e.g., *unifiedtci-StateType*). The one or more configuration parameters may comprise one or more serving cell parameters (e.g., *ServingCellConfig*) comprising the unified-TCI-state-type parameter. The unified-TCI-state-type parameter may indicate the unified TCI state type of the cell

Unified-TCI-state-type parameter may be set to "Joint". The wireless device 1701 may use/apply the plurality of TCI states (e.g., provided/indicated by *dl-OrJoint-TCIStαteList*) for both uplink transmissions (e.g., PUSCH/PUCCH/SRS transmissions) of/via the cell and downlink receptions (e.g., PDCCH/PDSCH/CSI-RS receptions) of/via the cell, for example, based on the one or more configuration parameters comprising the unified-TCI-state-type parameter set to "Joint". The plurality of TCI states may be, for example, a plurality of joint TCI states.

Unified-TCI-state-type parameter may be set to "Separate". The wireless device 1701 may use/apply the plurality of TCI states (e.g., provided/indicated by a higher layer parameter *dl-OrJoint-TCIStateList*) for downlink receptions (e.g., PDCCH/PDSCH/CSI-RS receptions) of/via the cell, for example, based on the one or more configuration parameters comprising the unified-TCI-state-type parameter set to "Separate". The wireless device 1701 may not use/apply the plurality of TCI states for uplink transmissions (e.g., PUSCH/PUCCH/SRS transmissions) of/via the cell, for example, based on the one or more configuration parameters comprising the unified-TCI-state-type parameter set to "Separate". The plurality of TCI states may be, for example, a plurality of downlink TCI states.

The one or more configuration parameters may indicate a second plurality of TCI states. The one or more configuration parameters may comprise an uplink TCI state list parameter (e.g., provided/indicated by a higher layer parameter *ul-TCI-StateList*) indicating an uplink TCI state list. The uplink TCI state list may comprise the second plurality of TCI states. The one or more configuration parameters may comprise one or more uplink BWP configuration parameters comprising the uplink TCI state list parameter that indicates the second plurality of TCI states. For example, the second plurality of TCI states may be TCI state 0..., and TCI state M-1 as shown in FIG. 17.

The one or more configuration parameters may comprise the one or more uplink BWP configuration parameters, for example, for the uplink BWP of the cell. The one or more configuration parameters indicate the second plurality of TCI states for the uplink BWP of the cell. The one or more configuration parameters may comprise the one or more uplink BWP configuration parameters, for example, for a second uplink BWP of a second cell. The one or more configuration parameters indicate the second plurality of TCI states for the second uplink BWP of the second cell. The one or more configuration parameters may comprise, for the uplink BWP of the cell, a reference unified TCI state list parameter (e.g., *unifiedtci-StateType*) indicating the second uplink BWP of the second cell. The reference unified TCI state list parameter may comprise a BWP index (e.g., BWP-Id) identifying/indicating the second uplink BWP. The reference unified TCI state list parameter may comprise a cell index (e.g., *ServCellIndex*) identifying/indicating the second cell. The second uplink BWP of the second cell may be a reference BWP of a reference cell for the uplink BWP of the cell. The uplink BWP of the cell may be a target BWP of a target cell. The one or more uplink BWP configuration parameters of the uplink BWP of the cell may not comprise a higher layer (e.g., RRC) parameter *ul-TCI-StateList*, for example, based on the one or more configuration parameters comprising, for the uplink BWP of the cell, the reference unified TCI state list parameter.

The wireless device 1701 may use/apply the second plurality of TCI states for uplink transmissions (e.g., PUSCH/PUCCH/SRS transmissions) of/via the cell, for example, based on the one or more configuration parameters comprising the unified-TCI-state-type parameter set to "Separate". The wireless device 1701 may not use/apply the second plurality of TCI states for downlink receptions (e.g., PDCCH/PDSCH/CSI-RS receptions) of/via the cell, for example, based on the one or more configuration parameters comprising the unified-TCI-state-type parameter set to "Separate". The second plurality of TCI states may be, for example, a plurality of uplink TCI states.

The wireless device 1701 may use, for downlink receptions via the downlink BWP of the cell, the plurality of TCI states, for example based on the one or more configuration parameters indicating the plurality of TCI states for the downlink BWP of the cell. The wireless device 1701 may use, for uplink transmissions receptions via the uplink BWP of the cell, the plurality of TCI states, for example based on the one or more configuration parameters indicating the plurality of TCI states for the downlink BWP of the cell. The wireless device 1701 may use, for downlink receptions via the downlink BWP of the cell, the plurality of TCI states of the second downlink BWP of the second cell, for example, based on the reference unified TCI state list parameter indicating, for the downlink BWP of the cell, the second downlink BWP of the second cell.

The wireless device 1701 may use, for uplink transmissions receptions via the uplink BWP of the cell, the plurality of TCI states of the second downlink BWP of the second cell, for example, based on the reference unified TCI state list parameter indicating, for the downlink BWP of the cell, the second downlink BWP of the second cell. The wireless device 1701 may use, for uplink transmissions receptions via the uplink BWP of the cell, the second plurality of TCI states, for example based on the one or more configuration parameters indicating the second plurality of TCI states for the uplink BWP of the cell. The wireless device 1701 may use, for uplink transmissions receptions via the uplink BWP of the cell, the second plurality of TCI states of the second uplink BWP of the second cell, for example, based on the reference unified TCI state list parameter indicating, for the uplink BWP of the cell, the second uplink BWP of the second cell.

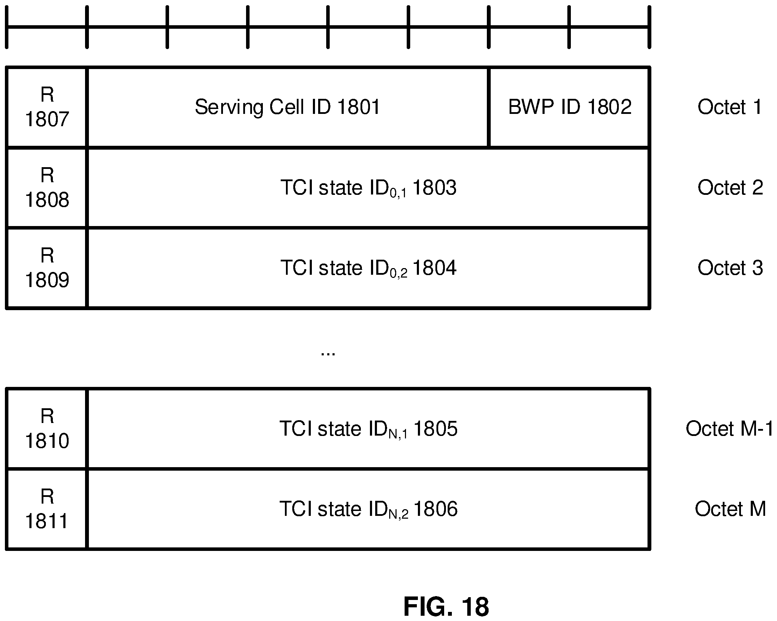

FIG. 18 shows an example of a TCI state activation command. For example, a wireless device may receive an activation command (e.g., MAC-CE, DCI, RRC, control command, downlink control command/message, control command/message, Unified TCI States Activation/Deactivation MAC CE, Enhanced Unified TCI States Activation/Deactivation MAC CE, and/or the like). The activation command may indicate activation of a subset of TCI states of the plurality of TCI states (e.g., *DLorJoint-TCIStαteList*). The subset of TCI states may be, for example, a subset of joint TCI states of the plurality of joint TCI states. The subset of TCI states may be, for example, a subset of downlink TCI states of the plurality of downlink TCI states. The activation command may indicate activation of a subset of TCI states of the second plurality of TCI states (e.g., *ul-TCI-StateList*). The subset of TCI states may be, for example, a subset of uplink TCI states of the plurality of uplink TCI states. A base station may activate and/or deactivate the subset of TCI states, for example, by sending/transmitting the activation command.

The wireless device may map the subset of TCI states to one or more TCI codepoints. The activation command may indicate mapping of the subset of TCI states to the one or more TCI codepoints. The wireless device may map respective TCI state(s) of the subset of TCI states to a respective TCI codepoint of the one or more TCI codepoints. The one or more TCI codepoints may indicate/comprise the subset of TCI states. Each TCI codepoint of the one or more TCI codepoints may indicate (or may be mapped to) respective TCI state(s) of the subset of TCI states. Each TCI codepoint of the one or more TCI codepoints may indicate/comprise (or be mapped to) one or more TCI states.

The subset of TCI states may comprise/be, for example, TCI state 4, TCI state 5, TCI state 8, TCI state 26, and/or TCI state 61. The one or more TCI codepoints may comprise/be a first TCI codepoint (e.g., TCI codepoint 000), a second TCI codepoint (e.g., TCI codepoint 001), a third TCI codepoint (e.g., TCI codepoint 010), and/or a fourth TCI codepoint (e.g., TCI codepoint 011). For example, the first TCI codepoint (e.g., TCI codepoint 000) may comprise/indicate the TCI state 4. The second TCI codepoint (e.g., TCI codepoint 001) may comprise/indicate the TCI state 5 and the TCI state 8. The third TCI codepoint (e.g., TCI codepoint 010) may comprise/indicate the TCI state 26 and TCI state 61. The fourth TCI codepoint (e.g., TCI codepoint 011) may comprise/indicate the TCI state 26. For example, the first TCI codepoint (e.g., TCI codepoint 000) and the fourth TCI codepoint (e.g., TCI codepoint 011) indicate a single TCI state. The second TCI codepoint (e.g., TCI codepoint 001) and the third TCI codepoint (e.g., TCI codepoint 010) indicate two TCI states (e.g., two joint TCI states, two uplink TCI states, two downlink TCI states, and the like).

The activation command may comprise a plurality of fields. For example, a first field (e.g., Serving Cell ID 1801 as shown in FIG. 18) of the plurality of fields may comprise a serving cell index/identity/identifier indicating/identifying the cell. The first field may comprise the serving cell index/identity/identifier indicating/identifying the cell for which the activation command may use/apply. If the one or more configuration parameters indicate/configure the cell in (or as a part of) a simultaneous TCI update cell list (e.g., *simultaneousTCI-UpdateList1, simultaneousTCI-UpdateList2*), the activation command may use/apply to each cell in the simultaneous TCI update cell list.

A second field (e.g., BWP ID 1802 as shown in FIG. 18) of the plurality of fields may comprise a BWP index/identity/identifier indicating/identifying the downlink BWP of the cell. The second field may comprise/indicate the BWP index/identity/identifier indicating/identifying the downlink BWP of the cell for which the activation command may use/apply as a codepoint of a bandwidth part indicator field in a DCI

A third field, for example, TCI state $ID_{i,j}$ (e.g., TCI state $ID_{0,1}$ 1803, TCI state $ID_{0,2}$ 1804, TCI state $ID_{N,1}$ 1805, and/or TCI state $ID_{N,2}$ 1806 as shown in FIG. 18) of the plurality of fields may comprise a TCI state index/identifier/identity (e.g., *TCI-StateId*) identifying a TCI state of the plurality of TCI states. The plurality of TCI state indexes may comprise the TCI state index. In TCI state $ID_{i,j}$, i may be an index of a codepoint of a *Transmission configuration indication* (TCI) field in a DCI. TCI state $ID_{i,j}$ may denote/be the $j^{th}$ TCI state indicated for the $i^{th}$ codepoint in/of a *Transmission Configuration Indication* field in a DCI. For example, TCI state $ID_{0,1}$ may denote the first TCI state (e.g., $1^{st}$ TCI state) indicated for a TCI codepoint 000. TCI state $ID_{0,2}$ may denote the second TCI state (e.g., $2^{nd}$ TCI state) indicated for the TCI codepoint 000. For example, TCI state $ID_{1,1}$ may denote the first TCI state (e.g., $1^{st}$ TCI state) indicated for a TCI codepoint 001. TCI state $ID_{1,2}$ may denote the second TCI state (e.g., $2^{nd}$ TCI state) indicated for the TCI codepoint 001. For example, if N in FIG. 18 is equal to 8, TCI state $ID_{N,1}$ may denote the first TCI state (e.g., $1^{st}$ TCI state) indicated for a TCI codepoint 111. TCI state $ID_{N,2}$ may denote the second TCI state (e.g., $2^{nd}$ TCI state) indicated for the TCI codepoint 111. For a TCI codepoint i, TCI state $ID_{i,1}$ may denote/be the first TCI state (e.g., $1^{st}$ TCI state) and TCI state $ID_{i,2}$ may denote/be the second TCI state (e.g., $2^{nd}$ TCI state)

A TCI codepoint to which TCI state(s) may be mapped may be determined, by the wireless device and/or the base station, for example, based on an ordinal position of the TCI codepoint among ordinal position(s) of TCI codepoint(s). For example, the first TCI codepoint with TCI state $ID_{0,1}$ 1803 and TCI state $ID_{0,2}$ 1804 may be mapped to the codepoint value 0 (e.g., TCI codepoint 000), and/or the second TCI codepoint with TCI state $ID_{1,1}$ and TCI state $ID_{1,2}$ may be mapped to the codepoint value 1 (e.g., TCI codepoint 001) and so on. The second TCI codepoint (e.g., TCI codepoint 001) may comprise/indicate the TCI state 5 and the TCI state 8. The TCI state 5 and the TCI state 8 may be mapped to the second TCI codepoint (e.g., TCI codepoint 001).

The activation command may comprise a TCI state index/identifier/identity (e.g., TCI state $ID_{1,1}$) of the TCI state 5 and a TCI state index/identifier/identity (e.g., TCI state $ID_{1,2}$) of the TCI state 8. The TCI state 5 may be the first TCI state and the TCI state 8 may be the second TCI state, for example, based on the TCI state index/identifier/identity (e.g., TCI state $ID_{1,1}$) of the TCI state 5 occurring/being/positioning in a lower octet in the activation command than the TCI state index/identifier/identity (e.g., TCI state $ID_{1,2}$) of the TCI state 8. For example, Octet 4 of the activation command may comprise the TCI state index/identifier/identity (e.g., TCI state $ID_{1,1}$) of the TCI state 5 and Octet 5 of the activation command may comprise the TCI state index/identifier/identity (e.g., TCI state $ID_{1,2}$) of the TCI state 8.

The activation command may comprise a TCI state index/identifier/identity (e.g., TCI state $ID_{1,1}$) of the TCI state 8 and a TCI state index/identifier/identity (e.g., TCI state $ID_{1,2}$) of the TCI state 5. The TCI state 8 may be the first TCI state and the TCI state 5 may be the second TCI state, for example, based on the TCI state index/identifier/identity (e.g., TCI state $ID_{1,1}$) of the TCI state 8 occurring/being/positioning in a lower octet in the activation command than the TCI state index/identifier/identity (e.g., TCI state $ID_{1,2}$) of the TCI state 5. For example, Octet 4 of the activation command may comprise the TCI state index/identifier/identity (e.g., TCI state $ID_{1,1}$) of the TCI state 8 and Octet 5 of the activation command may comprise the TCI state index/identifier/identity (e.g., TCI state $ID_{1,2}$) of the TCI state 5.

The third TCI codepoint (e.g., TCI codepoint 010) may comprise/indicate the TCI state 26 and TCI state 61. The TCI state 26 and the TCI state 61 may be mapped to the third TCI codepoint (e.g., TCI codepoint 010).

The activation command may comprise a TCI state index/identifier/identity (e.g., TCI state $ID_{2,1}$) of the TCI state 26 and a TCI state index/identifier/identity (e.g., TCI state $ID_{2,2}$) of the TCI state 61. The TCI state 26 may be the first TCI state and the TCI state 61 may be the second TCI state, for example, based on the TCI state index/identifier/identity (e.g., TCI state $ID_{2,1}$) of the TCI state 26 occurring/being/positioning in a lower octet in the activation command than the TCI state index/identifier/identity (e.g., TCI state $ID_{2,2}$) of the TCI state 61. For example, Octet 6 of the activation command may comprise the TCI state index/identifier/identity (e.g., TCI state $ID_{2,1}$) of the TCI state 26 and Octet 7 of the activation command may comprise the TCI state index/identifier/identity (e.g., TCI state $ID_{2,2}$) of the TCI state 61.

The activation command may comprise a TCI state index/identifier/identity (e.g., TCI state $ID_{2,1}$) of the TCI state 61 and a TCI state index/identifier/identity (e.g., TCI state $ID_{2,2}$) of the TCI state 26. The TCI state 61 may be the first TCI state and the TCI state 26 may be the second TCI state, for example, based on the TCI state index/identifier/identity (e.g., TCI state $ID_{2,1}$) of the TCI state 61 occurring/being/positioning in a lower octet in the activation command than the TCI state index/identifier/identity (e.g., TCI state ID$_{2,2}$) of the TCI state 26. For example, Octet 6 of the activation command may comprise the TCI state index/identifier/identity (e.g., TCI state ID$_{2,1}$) of the TCI state 61 and Octet 7 of the activation command may comprise the TCI state index/identifier/identity (e.g., TCI state ID$_{2,2}$) of the TCI state 26.

A fourth field (e.g., R 1807, R 1808, R 1809, R 1810, and/or R 1811 as shown in FIG. 18) of the plurality of fields may be a reserved bit. The reserved bit may be set to, for example, zero.

The wireless device may receive a control command. The control command may be, for example, a MAC-CE. The control command may be, for example, a DCI (e.g., DCI format 1_1, DCI format 1_2). The control command may be, for example, a downlink control command (e.g., activation command). The control command may indicate at least two TCI states of the subset of TCI states.

A quantity (e.g., number) of the one or more TCI codepoints may be equal to one (e.g., a single TCI codepoint). The single TCI codepoint may indicate the at least two TCI states. The control command indicating the at least two TCI states may be the activation command activating the subset of TCI states based on the quantity (e.g., number) of the one or more TCI codepoints being equal to one. The at least two TCI states may be the subset of TCI states based on the quantity (e.g., number) of the one or more TCI codepoints being equal to one. The activation command may indicate the at least two TCI states based on the quantity (e.g., number) of the one or more TCI codepoints being equal to one.

A quantity (e.g., number) of the one or more TCI codepoints may be more than one. The control command indicating the at least two TCI states may be different from the activation command activating the subset of TCI states based on the quantity (e.g., number) of the one or more TCI codepoints being more than one. The wireless device may receive the control command after receiving the activation command. The control command (e.g., DCI) may comprise a TCI field indicating the at least two TCI states. A value of the TCI field may be equal to a TCI codepoint, of the one or more TCI codepoints, indicating the at least two TCI states. The at least two TCI states may be mapped to the TCI codepoint. The at least two TCI states may be, for example, at least two joint TCI states. The at least two TCI states may be, for example, at least two downlink TCI states. The at least two TCI states may be, for example, at least two uplink TCI states. The at least two TCI states may comprise a first TCI state (e.g., a first joint TCI state, a first downlink TCI state, or a first uplink TCI state) and a second TCI state (e.g., a second joint TCI state, a second downlink TCI state, or a second uplink TCI state).

The first TCI state may be (or may be replaced with or may be interchangeably used with) a first indicated TCI state. The second TCI state may be (or may be replaced with or may be interchangeably used with) a second indicated TCI state. The first TCI state may comprise/indicate a first reference signal (e.g., CSI-RS, SSB/PBCH block, DM-RS, SRS, and the like). The first TCI state may comprise/indicate a first quasi co-location type (e.g., QCL TypeA, QCL TypeB, QCL TypeC, QCL TypeD).

The second TCI state may comprise/indicate a second reference signal (e.g., CSI-RS, SSB/PBCH block, DM-RS, SRS, and the like). The second TCI state may comprise/indicate a second quasi co-location type (e.g., QCL TypeA, QCL TypeB, QCL TypeC, QCL TypeD).

The first TCI state may be associated with a first coreset pool index (e.g., *CoresetPoolIndex* = 0). The first TCI state may be indicated for the first coreset pool index. The first TCI state may be indicated for downlink receptions and/or uplink transmissions associated with the first coreset pool index.

The second TCI state may be associated with a second coreset pool index (e.g., *CoresetPoolIndex* = 1). The second TCI state may be indicated for the second coreset pool index. The second TCI state may be indicated for downlink receptions and/or uplink transmissions associated with the second coreset pool index.

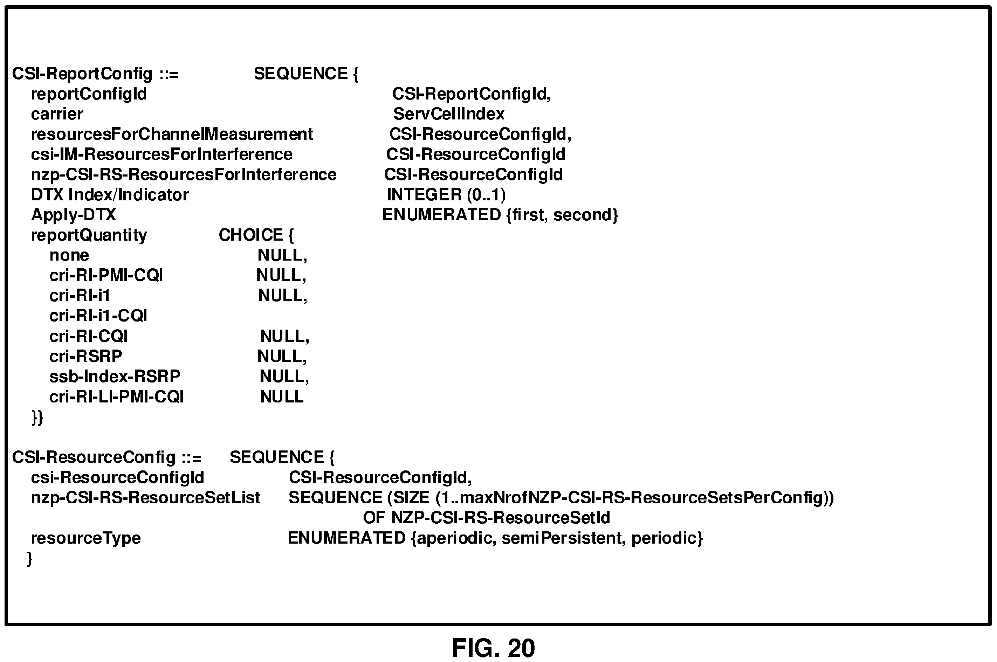

FIG. 20 shows an example of a CSI report configuration. FIG. 22A shows an example of DTX and/or DRX. FIG. 22B shows an example of DTX and/or DRX. FIG. 23A shows an example of DTX and/or DRX. FIG. 23B shows an example of DTX and/or DRX. In FIG. 22A, FIG. 22B, FIG. 23A, and FIG. 23B, Downlink Reception (DL RX) 1 (e.g., DL/UL RX/TX 1 2201 and/or DL/UL RX/TX 2301) may be one or more CSI-RSs (or one or more CSI-RS resources), DL RX 2 (e.g., DL/UL RX/TX 2 2202 and/or DL/UL RX/TX 2 2302) may be one or more CSI-RSs (or one or more CSI-RS resources), DL RX 3 (e.g., DL/UL RX/TX 3 2203 and/or DL/UL RX/TX 3 2303) may be one or more CSI-RSs (or one or more CSI-RS resources), and DL RX 4 (e.g., DL/UL RX/TX 4 2204 and/or DL/UL RX/TX 4 2304) may be one or more CSI-RSs (or one or more CSI-RS resources).

The one or more configuration parameters may comprise one or more CSI report configuration parameters (e.g., *CSI-ReportConfig* as shown in FIG. 20). The one or more CSI report configuration parameters may comprise/indicate a CSI report configuration (e.g., CSI report configuration 1704 as shown in FIG. 17).

The one or more CSI report configuration parameters may comprise a report quantity parameter (e.g., *reportQuantity* in FIG. 20) indicating/comprising one or more CSI quantities to report. The report quantity parameter may indicate/comprise the one or more CSI quantities to report for the CSI report configuration. For example, the report quantity parameter may indicate/comprise at least rank indicator ('RI'). The one or more CSI quantities may comprise at least 'RI' (e.g., Report Quantity = 'RI' in FIG. 17). For example, the report quantity parameter may indicate/comprise 'cri-RI-PMI-CQI'. For example, the report quantity parameter may indicate/comprise 'cri-RI-i1'. For example, the report quantity parameter may indicate/comprise 'cri-RI-il-CQ'. For example, the report quantity parameter may indicate/comprise 'cri-RI-CQI'. For example, the report quantity parameter may indicate/comprise 'cri-RI-LI-PMI-CQI'. The report quantity parameter may not indicate/comprise 'cri-RSRP'. The report quantity parameter may not indicate/comprise 'ssb-Index-RSRP'.

The one or more CSI report configuration parameters may comprise/indicate one or more CSI-RSs (e.g., CSI-RS(s) 1730 as shown in FIG. 17) for the CSI report configuration 1704. The one or more CSI-RSs of the CSI report configuration 1704 may be (or may be replaced with or may be interchangeably used with) one or more CSI-RS resources. The one or more CSI-RSs may be, for example, periodic. The one or more CSI-RSs may be, for example, one or more periodic CSI-RSs. The one or more CSI-RSs may be, for example, semi-persistent. The one or more CSI-RSs may be, for example, one or more semi-persistent CSI-RSs. Each of the one or more CSI-RSs may be either periodic or semi-persistent.

The one or more CSI report configuration parameters may comprise/indicate one or more CSI resource parameters (e.g., *resourcesForChannelMeasurement, csi-IM-ResourcesForInterference, nzp-CSI-RS-ResourcesFor-Interference, CSI-ResourceConfigId* as shown in FIG. 20, *CSI-ResourceConfig*) indicating/identifying a CSI resource configuration (e.g., *CSI-ResourceConfig* as shown in FIG. 20). The CSI resource configuration may comprise/indicate/-have one or more CSI-RS resource sets (e.g., *nzp-CSI RS-ResourceSetList* as shown in FIG. 20) comprising a CSI-RS resource set (e.g., *NZP-CSI-RS-ResourceSet*). The one or more configuration parameters may indicate, for the CSI resource configuration, the one or more CSI-RS resource sets. The one or more CSI resource parameters may indicate, for the CSI resource configuration, the one or more CSI-RS resource sets. The CSI-RS resource set may indicate/comprise the one or more CSI-RSs (e.g., *nzp-CSI-RS-Resources, NZP-CSI-RS-Resource*).

The CSI resource configuration may be, for example, periodic. The one or more configuration parameters may comprise, for the CSI resource configuration, a resource type parameter (e.g., *resourceType*) set to periodic. The one or more CSI resource parameters may comprise, for the CSI resource configuration, a resource type parameter (e.g., *resourceType*) set to periodic. The one or more CSI-RSs may be periodic based on the CSI resource configuration being periodic. The one or more CSI-RSs may be the one or more periodic CSI-RSs based on the resource type parameter of the CSI resource configuration being periodic.

The CSI resource configuration may be, for example, semi-persistent. The one or more configuration parameters may comprise, for the CSI resource configuration, a resource type parameter (e.g., *resourceType*) set to semi-persistent. The one or more CSI resource parameters may comprise, for the CSI resource configuration, a resource type parameter (e.g., *resourceType*) set to semi-persistent. The one or more CSI-RSs may be semi-persistent based on the CSI resource configuration being semi-persistent. The one or more CSI-RSs may be the one or more semi-persistent CSI-RSs based on the resource type parameter of the CSI resource configuration being semi-persistent.

The one or more CSI-RSs may be associated/configured/indicated/activated with one or more TCI states. The plurality of TCI states (e.g., *DLorJoint-TCIStateList*) may comprise the one or more TCI states. Each CSI-RS of the one or more CSI-RSs may be associated/configured/indicated/activated with a respective TCI state of one or more TCI states. For example, a first CSI-RS of the one or more CSI-RSs may be associated/configured/indicated/activated with a first TCI state of one or more TCI states. A second CSI-RS of the one or more CSI-RSs may be associated/configured/indicated/activated with a second TCI state of one or more TCI states.

The one or more configuration parameters may indicate, for the one or more CSI-RSs, the one or more TCI states. The one or more configuration parameters may indicate, for each CSI-RS of the one or more CSI-RSs, a respective TCI state of the one or more TCI states. The one or more configuration parameters may comprise a respective quasi co-location parameter (e.g., *qcl-InfoPeriodicCSI-RS*) indicating a TCI state for each CSI-RS of the one or more CSI-RSs (e.g., *NZP-CSI-RS-Resource*).

The wireless device may receive a MAC-CE (e.g., SP CSI-RS/CSI-IM Resource Set Activation/Deactivation MAC CE) indicating activation of the one or more TCI states for the one or more CSI-RSs. The MAC-CE may indicate activation of the CSI-RS resource set comprising/indicating the one or more CSI-RSs. The MAC-CE may indicate activation of each TCI state of the one or more TCI states for a respective CSI-RS of the one or more CSI-RSs.

The one or more CSI report configuration parameters may comprise a parameter (e.g., DTX index, DTX indicator, Apply-DTX as shown in FIG. 20) of the CSI report configuration. The parameter may indicate whether to use/apply a first DTX of the cell or a second DTX of the cell to the CSI report configuration. The parameter may indicate whether to use/apply the first DTX of the cell or the second DTX of the cell to the one or more CSI-RS resource sets in (or indicated by) the CSI report configuration. The parameter may indicate whether to use/apply the first DTX of the cell or the second DTX of the cell to each CSI-RS in the one or more CSI-RS resource sets in (or indicated by) the CSI report configuration. At least two DTXs of the cell may comprise the first DTX and the second DTX. The parameter of the CSI report configuration may be (or may be interchangeably used) a DTX parameter or a DTX field. The parameter may be, for example, per CSI report configuration.

A first value (e.g., DTX index/indicator = 0, Apply-DTX = 'first' as shown in FIG. 20) of the parameter may indicate the wireless device may use/apply the first DTX of the at least two DTXs of the cell to the CSI report configuration. The first value of the parameter may indicate that the CSI report configuration may be associated with the first DTX. The first value of the parameter may indicate the wireless device may use/apply the first DTX to the one or more CSI-RSs in (or indicated by) the CSI report configuration. The first value of the parameter may indicate the wireless device may use/apply the first DTX to each CSI-RS in (or indicated by) the CSI report configuration.

A second value (e.g., DTX index/indicator = 1, Apply-DTX = 'second' as shown in FIG. 20) of the parameter may indicate the wireless device may use/apply the second DTX of the at least two DTXs of the cell to the CSI report configuration. The second value of the parameter may indicate that the CSI report configuration may be associated with the second DTX. The second value of the parameter may indicate the wireless device may use/apply the second DTX to the one or more CSI-RSs in (or indicated by) the CSI report configuration. The second value of the parameter may indicate the wireless device may use/apply the second DTX to each CSI-RS in (or indicated by) the CSI report configuration.

The one or more configuration parameters may not comprise a parameter of the CSI report configuration (e.g., no DTX index, no DTX indicator, no Apply-DTX as shown in FIG. 20). The parameter may be absent (or may not be present or may not be enabled or may be disabled) in the one or more CSI report configuration parameters. Absence of the parameter may indicate the wireless device may use/apply the first DTX of the at least two DTXs of the cell to the CSI report configuration. For example, the one or more CSI report configuration parameters may comprise a parameter of the CSI report configuration (e.g., DTX index, DTX indicator, Apply-DTX as shown in FIG. 20). The parameter may be present (or may be enabled) in the one or more CSI report configuration parameters. Presence of the parameter may indicate the wireless device may use/apply the second DTX of the at least two DTXs of the cell to the CSI report configuration.

The one or more configuration parameters may comprise a parameter (e.g., DTX index, DTX indicator, Apply-DTX in FIG. 20) of the CSI-RS resource set (*e.g., NZP-CSI-RS-ResourceSet*). The parameter may indicate whether to use/apply a first DTX of the cell or a second DTX of the cell to the CSI-RS resource set. The parameter may indicate whether to use/apply a first DTX of the cell or a second DTX of the cell to each CSI-RS in the CSI-RS resource set. At least two DTXs of the cell may comprise the first DTX and the second DTX. The parameter of the CSI-RS resource set may be (or may be interchangeably used) a DTX parameter or a DTX field. The parameter may be, for example, per CSI-RS resource set.

A first value (e.g., DTX index/indicator = 0, Apply-DTX = 'first' in FIG. 20) of the parameter may indicate the wireless device may use/apply the first DTX of the at least two DTXs of the cell to the CSI-RS resource set. The first value of the parameter may indicate that the CSI-RS resource set may be associated with the first DTX. The first value of the parameter may indicate the wireless device may use/apply the first DTX to the one or more CSI-RSs in (or indicated by) the CSI-RS resource set. The first value of the parameter may indicate the wireless device may use/apply the first DTX to each CSI-RS in (or indicated by) the CSI-RS resource set.

A second value (e.g., DTX index/indicator = 1, Apply-DTX = 'second' in FIG. 20) of the parameter may indicate the wireless device may use/apply the second DTX of the at least two DTXs of the cell to the CSI-RS resource set. The second value of the parameter may indicate that the CSI-RS resource set may be associated with the second DTX. The second value of the parameter may indicate the wireless device may use/apply the second DTX to the one or more CSI-RSs in (or indicated by) the CSI-RS resource set. The second value of the parameter may indicate the wireless device may use/apply the second DTX to each CSI-RS in (or indicated by) the CSI-RS resource set.

The one or more configuration parameters may not comprise a parameter of the CSI-RS resource set (e.g., no DTX index, no DTX indicator, no Apply-DTX in FIG. 20). The parameter may be absent (or may not be present or may not be enabled or may be disabled) in the one or more configuration parameters. Absence of the parameter may indicate the wireless device may use/apply the first DTX of the at least two DTXs of the cell to the CSI-RS resource set. For example, the one or more configuration parameters may comprise a parameter of the CSI-RS resource set (e.g., DTX index, DTX indicator, Apply-DTX as shown in FIG. 20). The parameter may be present (or may be enabled) in the one or more configuration parameters. The presence of the parameter may indicate the wireless device may use/apply the second DTX of the at least two DTXs of the cell to the CSI-RS resource set.

The one or more configuration parameters may comprise a parameter (e.g., DTX index, DTX indicator, Apply-DTX as shown in FIG. 20) of an CSI-RS (or an CSI-RS resource) (e.g., *NZP-CSI-RS-Resource*). The one or more CSI-RSs may comprise the CSI-RS. The parameter may indicate whether to use/apply a first DTX of the cell or a second DTX of the cell to the CSI (or the CSI resource). At least two DTXs of the cell may comprise the first DTX and the second DTX. The parameter of the CSI-RS may be (or may be interchangeably used) a DTX parameter or a DTX field. The parameter may be, for example, per CSI-RS resource. The one or more configuration parameters may comprise the parameter (e.g., DTX index, DTX indicator, Apply-DTX in FIG. 20) of/for each CSI-RS of the one or more CSI-RSs. The one or more configuration parameters may comprise, of/for each CSI-RS of the one or more CSI-RSs, the parameter with the same value.

A first value (e.g., DTX index/indicator = 0, Apply-DTX = 'first' as shown in FIG. 20) of the parameter may indicate the wireless device may use/apply the first DTX of the at least two DTXs of the cell to the CSI-RS (or to the one or more CSI-RSs). The first value of the parameter may indicate that the CSI-RS (or to the one or more CSI-RSs) may be associated with the first DTX. The first value of the parameter may indicate the wireless device may use/apply the first DTX to the CSI-RS (or the one or more CSI-RSs).

A second value (e.g., DTX index/indicator = 1, Apply-DTX = 'second' in FIG. 20) of the parameter may indicate the wireless device may use/apply the second DTX of the at least two DTXs of the cell to the CSI-RS (or the one or more CSI-RSs). The second value of the parameter may indicate that the CSI-RS (or the one or more CSI-RSs) may be associated with the second DTX. The second value of the parameter may indicate the wireless device may use/apply the second DTX to the CSI-RS (or to the one or more CSI-RSs).

The one or more configuration parameters may not comprise a parameter of the CSI-RS (e.g., no DTX index, no DTX indicator, no Apply-DTX in FIG. 20). The parameter may be absent (or may not be present or may not be enabled or may be disabled) in the one or more configuration parameters. Absence of the parameter may indicate the wireless device may use/apply the first DTX of the at least two DTXs of the cell to the CSI-RS. For example, the one or more configuration parameters may comprise a parameter of the CSI-RS (e.g., DTX index, DTX indicator, Apply-DTX in FIG. 20). The parameter may be present (or may be enabled) in the one or more configuration parameters. The presence of the parameter may indicate the wireless device may use/apply the second DTX of the at least two DTXs of the cell to the CSI-RS.

The wireless device may send (e.g., transmit) a capability message (e.g., UE capability message) indicating whether the wireless device supports the parameter (e.g., DTX index, DTX indicator, Apply-DTX in FIG. 20) in at least one of: per CSI report configuration, per CSI-RS resource set, and per CSI-RS resource. The base station may send (e.g., transmit) the one or more configuration parameters comprising the parameter in one of: a CSI report configuration, a CSI-RS resource set, and a CSI-RS resource, for example, based on receiving the capability message from the wireless device.

The MAC-CE indicating activation of the one or more TCI states for the one or more CSI-RSs may comprise a parameter (e.g., DTX ID, DTX index field, DTX indicator field, DTX selection field, TRP indicator field, Apply-DTX, and the like). The parameter in the MAC-CE may be (or may be interchangeably used) a DTX field or a DTX indicator field or a DTX index/identifier/selection field.

A first value (e.g., 0) of the parameter in the MAC-CE may indicate the wireless device may use/apply a first DTX of at least two DTXs of the cell to the CSI-RS resource set. The first value of the parameter may indicate that the CSI-RS resource set is associated with the first DTX.

A second value (e.g., 1) of the parameter in the MAC-CE may indicate the wireless device may use/apply a second DTX of at least two DTXs of the cell to the CSI-RS resource set. The second value of the parameter may indicate that the CSI-RS resource set is associated with the second DTX.

The one or more configuration parameters may comprise the one or more first DTX configuration parameters of the first DTX of the cell (e.g., the first DTX is configured). For example, the control command (e.g., Control command in FIG. 17) may indicate activation of the first DTX (e.g., the first DTX is activated).

The wireless device may receive the one or more CSI-RSs during an active time/period/duration of the first DTX (e.g., at time T2 as shown in FIG. 17, DL RX 1 and DL RX 4 in First DTX active time as shown in FIG. 22A). The wireless device may receive the one or more CSI-RSs that may be indicated by (or in) the CSI report configuration during the active time/period/duration of the first DTX, for example, based on the CSI report configuration being associated with the first DTX. The wireless device may receive the one or more CSI-RSs during the active time/period/duration of the first DTX, for example, based on the parameter of the CSI report configuration being set to the first value. The wireless device may receive the one or more CSI-RSs during the active time/period/duration of the first DTX, for example, based on the one or more configuration parameters not comprising the parameter of the CSI report configuration (or based on the parameter of the CSI report configuration being absent or not being enabled).

The wireless device may receive the one or more CSI-RSs in/of the CSI-RS resource set during the active time/period/duration of the first DTX, for example, based on the CSI-RS resource set being associated with the first DTX. The wireless device may receive the one or more CSI-RSs during the active time/period/duration of the first DTX, for example, based on the parameter of the CSI-RS resource set being set to the first value. The wireless device may receive the one or more CSI-RSs during the active time/period/duration of the first DTX, for example, based on the one or more configuration parameters not comprising the parameter of the CSI-RS resource set (or based on the parameter of the CSI-RS resource set being absent or not being enabled). The wireless device may receive the one or more CSI-RSs during the active time/period/duration of the first DTX, for example, based on the parameter of the MAC-CE indicating activation of the one or more TCI states for the one or more CSI-RSs being set to the first value.

The one or more CSI-RSs (or the one or more CSI-RS resources of the one or more CSI-RSs) may overlap in time with the active time/period/duration of the first DTX. Each CSI-RS of the one or more CSI-RSs (or each CSI-RS resource of the one or more CSI-RS resources of the one or more CSI-RSs) may overlap in time with the active time/period/duration of the first DTX. The one or more CSI-RSs (or the one or more CSI-RS resources of the one or more CSI-RSs) may be in the active time/period/duration of the first DTX. Each CSI-RS of the one or more CSI-RSs (or each CSI-RS resource of the one or more CSI-RS resources of the one or more CSI-RSs) may be in the active time/period/duration of the first DTX.

The wireless device may receive the CSI-RS (or the CSI-RS resource) of the one or more CSI-RSs in during the active time/period/duration of the first DTX, for example, based on the CSI-RS being associated with the first DTX. The wireless device may receive the CSI-RS during the active time/period/duration of the first DTX, for example, based on the parameter of the CSI-RS (or the CSI-RS resource) being set to the first value. The wireless device may receive the CSI-RS during the active time/period/duration of the first DTX, for example, based on the one or more configuration parameters not comprising the parameter of the CSI-RS (or based on the parameter of the CSI-RS being absent or not being enabled). The wireless device may receive, via the CSI-RS resource, the CSI-RS.

The CSI-RS (or the CSI-RS resource of the CSI-RS) may overlap in time with the active time/period/duration of the first DTX. The CSI-RS (or the CSI-RS resource of the CSI-RS) may be in the active time/period/duration of the first DTX. The CSI-RS (or the CSI-RS resource of the CSI-RS) may overlap in at least one symbol with the active time/duration/period of the first DTX. For example, each symbol of the CSI-RS (or the CSI-RS resource of the CSI-RS) may overlap in time with the active time/duration/period of the first DTX.

At least one symbol of the CSI-RS (or the CSI-RS resource of the CSI-RS) may be in the active time/duration/period of the first DTX. For example, each symbol of the CSI-RS (or the CSI-RS resource of the CSI-RS) may be in the active time/duration/period of the first DTX. Receiving a CSI-RS may comprise measuring a radio link quality (e.g., RSRP, SINR, SNR, BLER) of the CSI-RS.

The wireless device may not receive the one or more CSI-RSs, for example, during a non-active time/period/duration of the first DTX (e.g., DL RX 2 and DL RX 3 in First DTX non-active time in FIG. 22A). The wireless device may not receive the one or more CSI-RSs during the non-active time/period/duration of the first DTX, for example, based on the one or more CSI-RSs being periodic. The wireless device may not receive the one or more CSI-RSs during the non-active time/period/duration of the first DTX, for example, based on the one or more CSI-RSs being semi-persistent. The wireless device may not receive the one or more CSI-RSs during the non-active time/period/duration of the first DTX, for example, based on each CSI-RS of the one or more CSI-RSs being either periodic or semi-persistent.

The wireless device may not receive the one or more CSI-RSs indicated by (or in) the CSI report configuration during the non-active time/period/duration of the first DTX, for example, based on the CSI report configuration being associated with the first DTX. The wireless device may not receive the one or more CSI-RSs during the non-active time/period/duration of the first DTX, for example, based on the parameter of the CSI report configuration being set to the first value. The wireless device may not receive the one or more CSI-RSs during the non-active time/period/duration of the first DTX, for example, based on the one or more configuration parameters not comprising the parameter of the CSI report configuration (or based on the parameter of the CSI report configuration being absent or not being enabled).

The wireless device may not receive the one or more CSI-RSs in/of the CSI-RS resource set during the non-active time/period/duration of the first DTX, for example, based on the CSI-RS resource set being associated with the first DTX. The wireless device may not receive the one or more CSI-RSs during the non-active time/period/duration of the first DTX, for example, based on the parameter of the CSI-RS resource set being set to the first value. The wireless device may not receive the one or more CSI-RSs during the non-active time/period/duration of the first DTX, for example, based on the one or more configuration parameters not comprising the parameter of the CSI-RS resource set (or based on the parameter of the CSI-RS resource set being absent or not being enabled). The wireless device may not receive the one or more CSI-RSs during the non-active time/period/duration of the first DTX, for example, based on the parameter of the MAC-CE indicating activation of the one or more TCI states for the one or more CSI-RSs being set to the first value.

The one or more CSI-RSs (or the one or more CSI-RS resources of the one or more CSI-RSs) may overlap in time with the non-active time/period/duration of the first DTX. Each CSI-RS of the one or more CSI-RSs (or each CSI-RS resource of the one or more CSI-RS resources of the one or more CSI-RSs) may overlap in time with the non-active time/period/duration of the first DTX. The one or more CSI-RSs (or the one or more CSI-RS resources of the one or more CSI-RSs) may be in the non-active time/period/duration of the first DTX. Each CSI-RS of the one or more CSI-RSs (or each CSI-RS resource of the one or more CSI-RS resources of the one or more CSI-RSs) may be in the non-active time/period/duration of the first DTX.

The wireless device may not receive the CSI-RS (or the CSI-RS resource) of the one or more CSI-RSs in during the non-active time/period/duration of the first DTX, for example, based on the CSI-RS being associated with the first DTX. The wireless device may not receive the CSI-RS during the non-active time/period/duration of the first DTX, for example, based on the parameter of the CSI-RS (or the CSI-RS resource) being set to the first value. The wireless device may not receive the CSI-RS during the non-active time/period/duration of the first DTX, for example, based on the one or more configuration parameters not comprising the parameter of the CSI-RS (or based on the parameter of the CSI-RS being absent or not being enabled). The wireless device may not receive, via the CSI-RS resource, the CSI-RS.

The CSI-RS (or the CSI-RS resource of the CSI-RS) may overlap in time with the non-active time/period/duration of the first DTX. The CSI-RS (or the CSI-RS resource of the CSI-RS) may be in the non-active time/period/duration of the first DTX. For example, the CSI-RS (or the CSI-RS resource of the CSI-RS) may overlap in at least one symbol with the non-active time/duration/period of the first DTX. For example, each symbol of the CSI-RS (or the CSI-RS resource of the CSI-RS) may overlap in time with the non-active time/duration/period of the first DTX.

At least one symbol of the CSI-RS (or the CSI-RS resource of the CSI-RS) may be in the non-active time/duration/period of the first DTX. For example, each symbol of the CSI-RS (or the CSI-RS resource of the CSI-RS) may be in the non-active time/duration/period of the first DTX. Not receiving a CSI-RS may comprise not measuring a radio link quality (e.g., RSRP, SINR, SNR, BLER) of the CSI-RS. Not receiving a CSI-RS may comprise stopping/aborting/ignoring/discarding/cancelling reception of the CSI-RS.

Reception of the one or more CSI-RSs may not be impacted by the second DTX of the cell (e.g., Second DTX active time and Second DTX non-active time in FIG. 23A). The wireless device may receive the one or more CSI-RSs during a non-active time/period/duration of the second DTX. The wireless device may receive the one or more CSI-RSs, regardless of the one or more CSI-RSs overlapping in time with an active or a non-active time/period/duration of the second DTX (e.g., DL RX 1, DL RX 2, DL RX 3, and DL RX 4 in FIG. 23A).

The one or more configuration parameters may comprise the one or more second DTX configuration parameters of the second DTX of the cell (e.g., the second DTX is configured). For example, the control command (e.g., Control command in FIG. 17) may indicate activation of the second DTX (e.g., the second DTX is activated).

The wireless device may receive the one or more CSI-RSs during an active time/period/duration of the second DTX (e.g., at time T2 in FIG. 17, DL RX 1 and DL RX 4 in Second DTX active time in FIG. 22B). The wireless device may receive the one or more CSI-RSs indicated by (or in) the CSI report configuration during the active time/period/duration of the second DTX, for example, based on the CSI report configuration being associated with the second DTX. The wireless device may receive the one or more CSI-RSs during the active time/period/duration of the second DTX, for example, based on the parameter of the CSI report configuration being set to the second value. The wireless device may receive the one or more CSI-RSs during the active time/period/duration of the second DTX, for example, based on the one or more configuration parameters comprising the parameter of the CSI report configuration (or based on the parameter of the CSI report configuration being present or being enabled).

The wireless device may receive the one or more CSI-RSs in/of the CSI-RS resource set during the active time/period/duration of the second DTX, for example, based on the CSI-RS resource set being associated with the second DTX. The wireless device may receive the one or more CSI-RSs during the active time/period/duration of the second DTX, for example, based on the parameter of the CSI-RS resource set being set to the second value. The wireless device may receive the one or more CSI-RSs during the active time/period/duration of the second DTX, for example, based on the one or more configuration parameters comprising the parameter of the CSI-RS resource set (or based on the parameter of the CSI-RS resource set being present or being enabled). The wireless device may receive the one or more CSI-RSs during the active time/period/duration of the second DTX, for example, based on the parameter of the MAC-CE indicating activation of the one or more TCI states for the one or more CSI-RSs being set to the second value.

The one or more CSI-RSs (or the one or more CSI-RS resources of the one or more CSI-RSs) may overlap in time with the active time/period/duration of the second DTX. Each CSI-RS of the one or more CSI-RSs (or each CSI-RS resource of the one or more CSI-RS resources of the one or more CSI-RSs) may overlap in time with the active time/period/duration of the second DTX. The one or more CSI-RSs (or the one or more CSI-RS resources of the one or more CSI-RSs) may be in the active time/period/duration of the second DTX. Each CSI-RS of the one or more CSI-RSs (or each CSI-RS resource of the one or more CSI-RS resources of the one or more CSI-RSs) may be in the active time/period/duration of the second DTX.

The wireless device may receive the CSI-RS (or the CSI-RS resource) of the one or more CSI-RSs in during the active time/period/duration of the second DTX, for example, based on the CSI-RS being associated with the second DTX. The wireless device may receive the CSI-RS during the active time/period/duration of the second DTX, for example, based on the parameter of the CSI-RS (or the CSI-RS resource) being set to the second value. The wireless device may receive the CSI-RS during the active time/period/duration of the second DTX, for example, based on the one or more configuration parameters comprising the parameter of the CSI-RS (or based on the parameter of the CSI-RS being present or being enabled). The wireless device may receive, via the CSI-RS resource, the CSI-RS.

The CSI-RS (or the CSI-RS resource of the CSI-RS) may overlap in time with the active time/period/duration of the second DTX. The CSI-RS (or the CSI-RS resource of the CSI-RS) may be in the active time/period/duration of the second DTX. For example, the CSI-RS (or the CSI-RS resource of the CSI-RS) may overlap in at least one symbol with the active time/duration/period of the second DTX. For example, each symbol of the CSI-RS (or the CSI-RS resource of the CSI-RS) may overlap in time with the active time/duration/period of the second DTX.

At least one symbol of the CSI-RS (or the CSI-RS resource of the CSI-RS) may be in the active time/duration/period of the second DTX. For example, each symbol of the CSI-RS (or the CSI-RS resource of the CSI-RS) may be in the active time/duration/period of the second DTX. Receiving a CSI-RS may comprise measuring a radio link quality (e.g., RSRP, SINR, SNR, BLER) of the CSI-RS.

The wireless device may not receive the one or more CSI-RSs during a non-active time/period/duration of the second DTX (e.g., DL RX 2 and DL RX 3 in Second DTX non-active time in FIG. 22B). The wireless device may not receive the one or more CSI-RSs during the non-active time/period/duration of the second DTX, for example, based on the one or more CSI-RSs being periodic. The wireless device may not receive the one or more CSI-RSs during the non-active time/period/duration of the second DTX, for example, based on the one or more CSI-RSs being semi-persistent. The wireless device may not receive the one or more CSI-RSs during the non-active time/period/duration of the second DTX, for example, based on each CSI-RS of the one or more CSI-RSs being either periodic or semi-persistent.

The wireless device may not receive the one or more CSI-RSs indicated by (or in) the CSI report configuration during the non-active time/period/duration of the second DTX, for example, based on the CSI report configuration being associated with the second DTX. The wireless device may not receive the one or more CSI-RSs during the non-active time/period/duration of the second DTX, for example, based on the parameter of the CSI report configuration being set to the second value. The wireless device may not receive the one or more CSI-RSs during the non-active time/period/duration of the second DTX, for example, based on the one or more configuration parameters comprising the parameter of the CSI report configuration (or based on the parameter of the CSI report configuration being present or being enabled).

The wireless device may not receive the one or more CSI-RSs in/of the CSI-RS resource set during the non-active time/period/duration of the second DTX, for example, based on the CSI-RS resource set being associated with the second DTX. The wireless device may not receive the one or more CSI-RSs during the non-active time/period/duration of the second DTX, for example, based on the parameter of the CSI-RS resource set being set to the second value. The wireless device may not receive the one or more CSI-RSs during the non-active time/period/duration of the second DTX, for example, based on the one or more configuration parameters comprising the parameter of the CSI-RS resource set (or based on the parameter of the CSI-RS resource set being present or being enabled). The wireless device may not receive the one or more CSI-RSs during the non-active time/period/duration of the second DTX, for example, based on the parameter of the MAC-CE indicating activation of the one or more TCI states for the one or more CSI-RSs being set to the second value.

The one or more CSI-RSs (or the one or more CSI-RS resources of the one or more CSI-RSs) may overlap in time with the non-active time/period/duration of the second DTX. Each CSI-RS of the one or more CSI-RSs (or each CSI-RS resource of the one or more CSI-RS resources of the one or more CSI-RSs) may overlap in time with the non-active time/period/duration of the second DTX. The one or more CSI-RSs (or the one or more CSI-RS resources of the one or more CSI-RSs) may be in the non-active time/period/duration of the second DTX. Each CSI-RS of the one or more CSI-RSs (or each CSI-RS resource of the one or more CSI-RS resources of the one or more CSI-RSs) may be in the non-active time/period/duration of the second DTX.

The wireless device may not receive the CSI-RS (or the CSI-RS resource) of the one or more CSI-RSs in during the non-active time/period/duration of the second DTX, for example, based on the CSI-RS being associated with the second DTX. The wireless device may not receive the CSI-RS during the non-active time/period/duration of the second DTX, for example, based on the parameter of the CSI-RS (or the CSI-RS resource) being set to the second value. The wireless device may not receive the CSI-RS during the non-active time/period/duration of the second DTX, for example, based on the one or more configuration parameters comprising the parameter of the CSI-RS (or based on the parameter of the CSI-RS being present or being enabled). The wireless device may not receive, via the CSI-RS resource, the CSI-RS.

The CSI-RS (or the CSI-RS resource of the CSI-RS) may overlap in time with the non-active time/period/duration of the second DTX. The CSI-RS (or the CSI-RS resource of the CSI-RS) may be in the non-active time/period/duration of the second DTX. For example, the CSI-RS (or the CSI-RS resource of the CSI-RS) may overlap in at least one symbol with the non-active time/duration/period of the second DTX. For example, each symbol of the CSI-RS (or the CSI-RS resource of the CSI-RS) may overlap in time with the non-active time/duration/period of the second DTX.

At least one symbol of the CSI-RS (or the CSI-RS resource of the CSI-RS) may be in the non-active time/-duration/period of the second DTX. For example, each symbol of the CSI-RS (or the CSI-RS resource of the CSI-RS) may be in the non-active time/duration/period of the second DTX. Not receiving a CSI-RS may comprise not measuring a radio link quality (e.g., RSRP, SINR, SNR, BLER) of the CSI-RS. Not receiving a CSI-RS may comprise stopping/aborting/ignoring/discarding/cancelling reception of the CSI-RS.

Reception of the one or more CSI-RSs may not be impacted by the first DTX of the cell (e.g., First DTX active time and First DTX non-active time in FIG. 23B). The wireless device may receive the one or more CSI-RSs during a non-active time/period/duration of the first DTX. The wireless device may receive the one or more CSI-RSs, regardless of the one or more CSI-RSs overlapping in time with an active or a non-active time/period/duration of the first DTX (e.g., DL RX 1, DL RX 2, DL RX 3, and DL RX 4 in FIG. 23B).

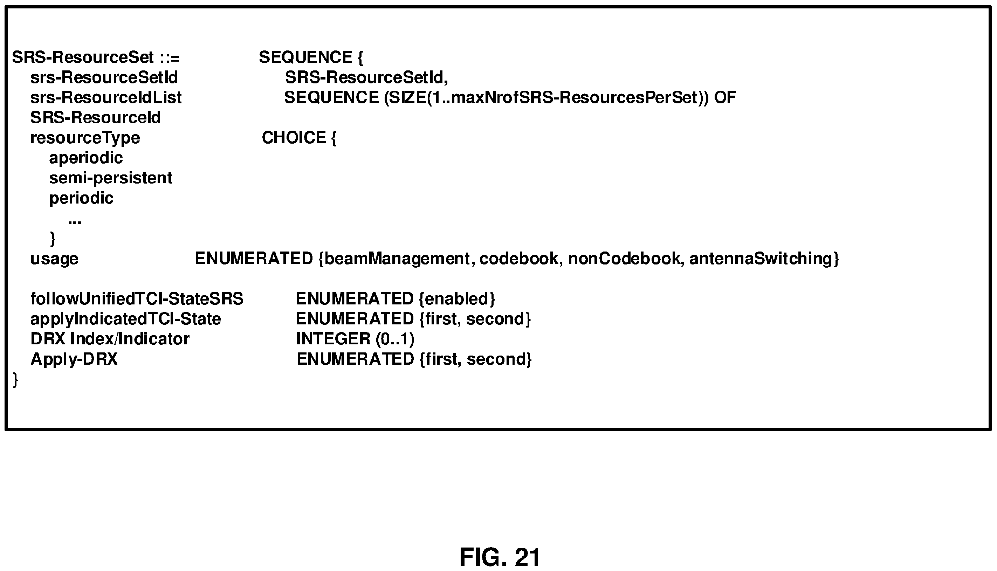

FIG. 21 shows an example of an SRS configuration. In FIG. 22A, FIG. 22B, FIG. 23A, and FIG. 23B, UL TX (Uplink transmission) 1 may be one or more SRSs (or one or more SRS resources), UL TX 2 may be one or more SRSs (or one or more SRS resources), UL TX 3 may be one or more SRSs (or one or more SRS resources), and UL TX 4 may be one or more SRSs (or one or more SRS resources).

The one or more configuration parameters may comprise one or more SRS resource set configuration parameters (e.g., *SRS ResourceSet* as shown in FIG. 21) indicating/configuring an SRS resource set (e.g., SRS resource set 1730 as shown in FIG. 17). The SRS resource set may comprise one or more SRS resources (e.g., *SRS-Resource*, SRS resource(s) 1705 as shown in FIG. 17). The one or more SRS resource set configuration parameters may indicate, for the SRS resource set, the one or more SRS resources. The one or more SRS resource set configuration parameters may comprise an SRS resource list parameter (e.g., *srs-ResourceIdList, srs-ResourceId* as shown in FIG. 21) indicating/identifying the one or more SRS resources. The one or more SRS resource set configuration parameters may comprise a resource type parameter (e.g., *resourceType* as shown in FIG. 21).

The resource type parameter may be, for example, set to 'periodic'. The SRS resource set may be periodic based on the resource type parameter of the SRS resource set being set to 'periodic'. The SRS resource set may be a periodic SRS resource set based on the resource type parameter of the SRS resource set being set to 'periodic'. The resource type parameter may be, for example, set to 'semi-persistent'. The SRS resource set may be semi-persistent based on the resource type parameter of the SRS resource set being set to 'semi-persistent'. The SRS resource set may be a semi-persistent SRS resource set based on the resource type parameter of the SRS resource set being set to 'semi-persistent'.

The SRS resource set may be for channel acquisition. The wireless device and/or the base station may send (e.g., transmit)/receive via the SRS resource set for channel acquisition. The one or more SRS resource set configuration parameters may comprise a usage parameter (e.g., *usage* as shown in FIG. 21) of/for the SRS resource set.

The usage parameter of the SRS resource set may be, for example, set to '*beamManagement'.* The usage parameter of the SRS resource set may be, for example, set to *'codebook'.* The usage parameter of the SRS resource set may be, for example, set to *'nonCodebook'.* The usage parameter of the SRS resource set may be, for example, set to '*antennaSwitching'.* The one or more SRS resource set configuration parameters may comprise an apply-indicated-TCI-state parameter (e.g., *applyIndicatedTCI-State* as shown in FIG. 21) of/for the SRS resource set. The apply-indicated-TCI-state parameter may be, for example, set to 'first'.

The wireless device may use/apply a first indicated TCI state (e.g., a first indicated joint TCI state or a first indicated uplink TCI state) of two indicated TCI states to the SRS resource set, for example, if the apply-indicated-TCI-state parameter is set to 'first'. The wireless device may use/apply the first indicated TCI state of the two indicated TCI states to each SRS resource of the one or more SRS resources in the SRS resource set. The wireless device may use/apply the first TCI state (e.g., the first joint/uplink TCI state) of the at least two TCI states to the SRS resource set, for example, if the apply-indicated-TCI-state parameter is set to 'first'. The wireless device may use/apply the first TCI state to each SRS resource of the one or more SRS resources in the SRS resource set.

The apply-indicated-TCI-state parameter may be, for example, set to 'second'. The wireless device may use/apply a second indicated TCI state (e.g., a second indicated joint TCI state or a second indicated uplink TCI state) of two indicated TCI states to the SRS resource set, for example, if the apply-indicated-TCI-state parameter is set to 'second'. The wireless device may use/apply the second indicated TCI state of the two indicated TCI states to each SRS resource of the one or more SRS resources in the SRS resource set.

The wireless device may use/apply the second TCI state (e.g., the first joint/uplink TCI state) of the at least two TCI states to the SRS resource set, for example, if the apply-indicated-TCI-state parameter is set to 'second'. The wireless device may use/apply the first TCI state to each SRS resource of the one or more SRS resources in the SRS resource set.

The value 'first' of the apply-indicated-TCI-state parameter may correspond to an indicated joint/uplink TCI state specific to a higher layer parameter *coresetPoolIndex* with value 0, for example, if more than one value for a higher layer parameter *coresetPoolIndex* is configured/indicated/provided in a higher layer parameter *controlResourceSet* for the downlink BWP. The value 'second' of the apply-indicated-TCI-state parameter may correspond to an indicated joint/uplink TCI state specific to a higher layer parameter *coresetPoolIndex* with value 1, for example, if more than one value for a higher layer parameter *coresetPoolIndex* is configured/indicated/provided in a higher layer parameter *controlResource-Set* for the downlink BWP.

The value 'first' of the apply-indicated-TCI-state parameter may correspond to the first TCI state specific to the first coreset pool index (e.g., *coresetPoolIndex* = 0), for example, if more than one value for a higher layer parameter *coresetPoolIndex* is configured/indicated/provided in a higher layer parameter *controlResourceSet* for the downlink BWP. The value 'second' of the apply-indicated-TCI-state parameter may correspond to the second TCI state specific to the second coreset pool index (e.g., *coresetPoolIndex* = 1), for example, if more than one value for a higher layer parameter *coresetPoolIndex* is configured/indicated/provided in a higher layer parameter *controlResourceSet* for the downlink BWP.

Using/applying a TCI state to an SRS resource in an SRS resource set may comprise sending (e.g., transmitting), via the SRS resource in the SRS resource set, an SRS, with/using a spatial domain transmission filter/beam that may be determined, for example, based on a reference signal that may be indicated by the TCI state. Using/applying a TCI state to an SRS resource in an SRS resource set may comprise sending (e.g., transmitting), via the SRS resource in the SRS resource set, an SRS, with/using a transmission power that may be determined, for example, based on one or more power control parameters (e.g., pathloss reference signal, target received power, pathloss compensation factor, closed-loop index, and the like) that may be indicated by (or mapped to or included in or associated with) the TCI state.

The one or more SRS resource set configuration parameters of the SRS resource set may not comprise an apply-indicated-TCI-state parameter (e.g., No *applyIndicatedTCI-State* in FIG. 17). The apply-indicated-TCI-state parameter may be absent (or may not be present) in the one or more SRS resource set configuration parameters. The one or more SRS resource set configuration parameters may not comprise an apply-indicated-TCI-state parameter, for example, for a periodic SRS resource set, semi-persistent, or an aperiodic SRS resource set with a usage parameter set to *'codebook', 'nonCodebook',* or '*antennaSwitching'.*

The one or more SRS resource set configuration parameters may not comprise an apply-indicated-TCI-state parameter, for example, for a periodic SRS resource set or a semi-persistent SRS resource set with a usage parameter set to *'BeamManagement'.* The one or more SRS resource set configuration parameters may not comprise an apply-indicated-TCI-state parameter, for example, if a usage parameter of a periodic SRS resource set or a semi-persistent SRS resource set is set to '*BeamManagement*'.

The one or more SRS resource set configuration parameters of the SRS resource set not comprising an apply-indicated-TCI-state parameter (or the apply-indicated-TCI state parameter not being present) may indicate not to use/apply any indicated TCI state of two indicated TCI states to the SRS resource set. The apply-indicated-TCI state parameter of the SRS resource set not being present may indicate not to use/apply an indicated TCI state of two indicated TCI states to the SRS resource set.

The one or more SRS resource set configuration parameters of the SRS resource set not comprising an apply-indicated-TCI-state parameter (or the apply-indicated-TCI state parameter not being present) may indicate not to use/apply any TCI state of the at least two TCI states to the SRS resource set. The apply-indicated-TCI state parameter of the SRS resource set not being present may indicate not to use/apply a TCI state of the at least two TCI states to the SRS resource set.

The one or more SRS resources may be associated/configured/indicated/activated with one or more TCI states. The plurality of TCI states (e.g., *DLorJoint-TCIStateList*) may comprise the one or more TCI states. The second plurality of TCI states (e.g., *ul-TCI-StateList*) may comprise the one or more TCI states Each SRS resource of the one or more SRS resources may be associated/configured/indicated/activated with a respective TCI state of one or more TCI states. For example, a first SRS resource of the one or more SRS resources may be associated/configured/indicated/activated with a first TCI state of one or more TCI states. A second SRS resource of the one or more SRS resources may be associated/configured/indicated/activated with a second TCI state of one or more TCI states.

The one or more TCI states may be (or may be replaced with or may be interchangeably used with) one or more spatial relations (e.g., *spatialRelationInfo, SRS-SpatialRelationInfo*)

The one or more configuration parameters may indicate, for the one or more SRS resources, the one or more TCI states. The one or more configuration parameters may indicate, for each SRS resource of the one or more SRS resources, a respective TCI state of the one or more TCI states. The one or more configuration parameters may comprise a respective TCI state index/identifier/identity (e.g., *TCI-StateId, TCI-UL-StateId, SRS-SpatialRelationInfo*) indicating a TCI state (e.g., srs-UL-TCI-State, srs-DLorJointTCI-State, *spatialRelationInfo*) for each SRS resource of the one or more SRS resources.

The wireless device may receive the one or more configuration parameters indicating, for the one or more SRS resources in the SRS resource set, the one or more TCI states, for example, if the one or more SRS resource set configuration parameters of the SRS resource set do not comprise the apply-indicated-TCI state parameter.

The wireless device may receive a MAC-CE (e.g., SP/AP SRS TCI State Indication MAC CE, SP SRS Activation/Deactivation MAC CE) indicating activation of the one or more TCI states for the one or more SRS resources. The MAC-CE may indicate activation of the SRS resource set comprising/indicating the one or more SRS resources. The MAC-CE may indicate activation of each TCI state of the one or more TCI states for a respective SRS resource of the one or more SRS resources.

The wireless device may receive one or more MAC-CEs (e.g., Serving Cell Set based SRS TCI State Indication MAC CE) indicating activation of the one or more TCI states for the one or more SRS resources. Each MAC-CE of the one or more MAC-CEs may indicate activation of a respective TCI state of the one or more TCI states for an SRS resource of the one or more SRS resources. For example, a first MAC-CE of the one or more MAC-CEs may indicate activation of a first TCI state of the one or more TCI states for a first SRS resource of the one or more SRS resources. A second MAC-CE of the one or more MAC-CEs may indicate activation of a second TCI state of the one or more TCI states for a second SRS resource of the one or more SRS resources.

The wireless device may receive the MAC-CE indicating/activating one or more TCI states for the one or more SRS resources in the SRS resource set, for example, if the one or more SRS resource set configuration parameters of the SRS resource set do not comprise the apply-indicated-TCI state parameter. The wireless device may receive the one or more MAC-CEs indicating activation of the one or more TCI states for the one or more SRS resources, for example, if the one or more SRS resource set configuration parameters of the SRS resource set do not comprise the apply-indicated-TCI state parameter.

The one or more configuration parameters may comprise a parameter (e.g., DRX index, DRX indicator, Apply-DRX in FIG. 21) of the SRS resource set (e.g., *SRSResourceSet*). The parameter may indicate whether to use/apply a first DRX of the cell or a second DRX of the cell for/to the SRS resource set. The parameter may indicate whether to use/apply a first DRX of the cell or a second DRX of the cell for/to each SRS resource in the SRS resource set. At least two DRXs of the cell may comprise the first DRX and the second DRX. The parameter of the SRS resource set may be (or may be interchangeably used) a DRX parameter or a DRX field. The parameter may be, for example, per SRS resource set.

A first value (e.g., DRX index/indicator = 0, Apply-DRX = 'first' in FIG. 21) of the parameter may indicate the wireless device may use/apply the first DRX of the at least two DRXs of the cell to the SRS resource set. The first value of the parameter may indicate that the SRS resource set is associated with the first DRX. The first value of the parameter may indicate the wireless device may use/apply the first DRX to the one or more SRS resources in (or indicated by) the SRS resource set. The first value of the parameter may indicate the wireless device may use/apply the first DRX to each SRS resource in (or indicated by) the SRS resource set.

A second value (e.g., DRX index/indicator = 1, Apply-DRX = 'second' as shown in FIG. 21) of the parameter may indicate the wireless device may use/apply the second DRX of the at least two DRXs of the cell to the SRS resource set. The second value of the parameter may indicate that the SRS resource set is associated with the second DRX. The second value of the parameter may indicate the wireless device may use/apply the second DRX to the one or more SRS resources in (or indicated by) the SRS resource set. The second value of the parameter may indicate the wireless device may use/apply the second DRX to each SRS resource in (or indicated by) the SRS resource set.

The one or more SRS resource set configuration parameters of the SRS resource set may not comprise a parameter (e.g., no DRX index, no DRX indicator, no Apply-DRX as shown in FIG. 21). The parameter may be absent (or may not be present or may not be enabled or may be disabled) in the one or more SRS resource set configuration parameters. Absence of the parameter may indicate the wireless device may use/apply the first DRX of the at least two DRXs of the cell to the SRS resource set. For example, the one or more SRS resource set configuration parameters of the SRS resource set may comprise a parameter (e.g., DRX index, DRX indicator, Apply-DRX as shown in FIG. 21). The parameter may be present (or may be enabled) in the one or more SRS resource set configuration parameters. The presence of the parameter may indicate the wireless device may use/apply the second DRX of the at least two DRXs of the cell to the SRS resource set.

The one or more configuration parameters may comprise a parameter (e.g., DRX index, DRX indicator, Apply-DRX as shown in FIG. 21) of an SRS resource (e.g., *SRS-Resource*). The one or more SRS resources may comprise the SRS resource. The parameter may indicate whether to use/apply a first DRX of the cell or a second DRX of the cell to the SRS resource. At least two DRXs of the cell may comprise the first DRX and the second DRX. The parameter of the SRS resource may be (or may be interchangeably used) a DRX parameter or a DRX field. The parameter may be, for example, per SRS resource. The one or more configuration parameters may comprise the parameter (e.g., DRX index, DRX indicator, Apply-DRX as shown in FIG. 21) of/for each SRS resource of the one or more SRS resources. The one or more configuration parameters may comprise, of/for each SRS resource of the one or more SRS resources, the parameter with the same value.

A first value (e.g., DRX index/indicator = 0, Apply-DRX = 'first' as shown in FIG. 21) of the parameter may indicate the wireless device may use/apply the first DRX of the at least two DRXs of the cell to the SRS resource (or to the one or more SRS resources). The first value of the parameter may indicate that the SRS resource (or to the one or more SRS resources) is associated with the first DRX. The first value of the parameter may indicate the wireless device may use/apply the first DRX to the SRS resource (or the one or more SRS resources).

A second value (e.g., DRX index/indicator = 1, Apply-DRX = 'second' in FIG. 21) of the parameter may indicate the wireless device may use/apply the second DRX of the at least two DRXs of the cell to the SRS resource (or the one or more SRS resources). The second value of the parameter may indicate that the SRS resource (or the one or more SRS resources) is associated with the second DRX. The second value of the parameter may indicate the wireless device may use/apply the second DRX to the SRS resource (or to the one or more SRS resources).

The one or more configuration parameters may not comprise a parameter of an SRS resource of the one or more SRS resources (e.g., no DRX index, no DRX indicator, no Apply-DRX as shown in FIG. 21). The parameter may be absent (or may not be present or may not be enabled or may be disabled) in the one or more configuration parameters. Absence of the parameter may indicate the wireless device may use/apply the first DRX of the at least two DRXs of the cell to the SRS resource. For example, the one or more configuration parameters may comprise a parameter of the SRS resource (e.g., DRX index, DRX indicator, Apply-DRX in FIG. 21). The parameter may be present (or may be enabled) in the one or more configuration parameters. The presence of the parameter may indicate the wireless device may use/apply the second DRX of the at least two DRXs of the cell to the SRS resource.

The wireless device may send (e.g., transmit) a capability message (e.g., wireless device/UE capability message) indicating whether the wireless device supports the parameter (e.g., DRX index, DRX indicator, Apply-DRX as shown in FIG. 21) in at least one of: per SRS resource set and per SRS resource. The base station may send (e.g., transmit) the one or more configuration parameters comprising the parameter in one of: an SRS resource set and an SRS resource, for example, based on receiving the capability message from the wireless device.

The MAC-CE indicating activation of the one or more TCI states for the one or more SRS resources may comprise a parameter (e.g., DRX ID, DRX index field, DRX indicator field, DRX selection field, TRP indicator field, Apply-DRX, and the like). The parameter in the MAC-CE may be (or may be interchangeably used) a DRX field or a DRX indicator field or a DRX index/identifier/selection field.

A first value (e.g., 0) of the parameter in the MAC-CE may indicate the wireless device may use/apply a first DRX of at least two DRXs of the cell to the SRS resource set. The first value of the parameter may indicate that the SRS resource set is associated with the first DRX.

A second value (e.g., 1) of the parameter in the MAC-CE may indicate the wireless device may use/apply a second DRX of at least two DRXs of the cell to the SRS resource set. The second value of the parameter may indicate that the SRS resource set is associated with the second DRX.

Each MAC-CE of the one or more MAC-CEs indicating activation of the one or more TCI states for the one or more SRS resources may comprise a respective parameter (e.g., DRX ID, DRX index field, DRX indicator field, DRX selection field, TRP indicator field, Apply-DRX, and the like) indicating whether to use/apply a first DRX of the cell or a second DRX of the cell to an SRS resource of the one or more SRS resources. For example, the first MAC-CE indicating activation of the first TCI state for the first SRS resource of the one or more SRS resources may comprise a parameter (e.g., DRX ID, DRX index field, DRX indicator field, DRX selection field, TRP indicator field, Apply-DRX, and the like) indicating whether to use/apply a first DRX of the cell or a second DRX of the cell to the first SRS resource. The second MAC-CE indicating activation of the second TCI state for the second SRS resource of the one or more SRS resources may comprise a parameter (e.g., DRX ID, DRX index field, DRX indicator field, DRX selection field, TRP indicator field, Apply-DRX, and the like) indicating whether to use/apply a first DRX of the cell or a second DRX of the cell to the second SRS resource. The parameter in the MAC-CE may be (or may be interchangeably used) a DRX field or a DRX indicator field or a DRX index/identifier/selection field.

The apply-indicated-TCI state parameter of the SRS resource set being absent may comprise/be (or may be interchangeably used with) the one or more configuration parameters not comprising an apply-indicated-TCI state parameter of the SRS resource set. The one or more configuration parameters may not comprise/indicate an apply-indicated-TCI state parameter for/of the SRS resource set. The apply-indicated-TCI state parameter of the SRS resource set may be absent (or not present) in the one or more configuration parameters. The wireless device may not use/apply any indicated TCI state of the at least two indicated TCI states to the SRS resource set, for example, if an apply-indicated-TCI state parameter is not provided/indicated/configured, by the one or more configuration parameters, for the SRS resource set. The wireless device may not use/apply any TCI state of the at least two TCI states to the SRS resource set, for example, if an apply-indicated-TCI state parameter is not provided/indicated/configured, by the one or more configuration parameters, for the SRS resource set. For example, the condition of an apply-indicated-TCI state parameter of the SRS resource set being absent may be replaced (or may be interchangeably used) with the condition of the one or more configuration parameters not comprising an apply-indicated-TCI state parameter (e.g., a higher layer parameter *apply-IndicatedTCIState*) of the SRS resource set.

The apply-indicated-TCI state parameter of the SRS resource set being absent may comprise/be (or may be interchangeably used with) the one or more configuration parameters not comprising a follow-unified-TCI-state parameter (e.g., *followUnifiedTCI-State*) of the SRS resource set. The one or more configuration parameters may not comprise/indicate a follow-unified-TCI-state parameter for/of the SRS resource set. The follow-unified-TCI-state parameter of the SRS resource set may be absent (or not present) in the one or more configuration parameters. The wireless device may not use/apply any indicated TCI state of the at least two indicated TCI states to the SRS resource set, for example, if a follow-unified-TCI-state parameter is not provided/indicated/configured, by the one or more configuration parameters, for the SRS resource set. The wireless device may not use/apply any TCI state of the at least two TCI states to the SRS resource set, for example, if a follow-unified-TCI-state parameter is not provided/indicated/configured, by the one or more configuration parameters, for the SRS resource set. The wireless device may determine/assume that an apply-indicated-TCI state parameter of the SRS resource set is absent, for example, if a follow-unified-TCI-state parameter is not provided/indicated/configured, by the one or more configuration parameters, for the SRS resource set. For example, the condition of an apply-indicated-TCI state parameter of the SRS resource set being absent may be replaced (or may be interchangeably used) with the condition of the one or more configuration parameters not comprising a follow-unified-TCI-state parameter (e.g., a higher layer parameter *followUnifiedTCI-State*) of the SRS resource set.

The one or more configuration parameters may comprise the one or more first DRX configuration parameters of the DRX of the cell (e.g., the first DRX is configured). For example, the control command (e.g., Control command 1720 as shown as shown in FIG. 17) may indicate activation of the first DRX (e.g., the first DRX is activated).

The wireless device may transmit, via an SRS resource of the one or more SRS resources, an SRS during an active time/period/duration of the first DRX (e.g., at time T3 as shown in FIG. 17, UL TX 1 and UL TX 4 in First DRX active time as shown in FIG. 22A). The wireless device may send (e.g., transmit), via the one or more SRS resources, one or more SRSs during an active time/period/duration of the first DRX. The wireless device may send (e.g., transmit), via each SRS resource of the one or more SRS resources, a respective SRS of the one or more SRSs during the active time/period/duration of the first DRX.

The wireless device may send (e.g., transmit), via the one or more SRS resources in/of the SRS resource set, the one or more SRSs during the active time/period/duration of the first DRX, for example, based on the SRS resource set being associated with the first DRX. The wireless device may send (e.g., transmit), via the one or more SRS resources in/of the SRS resource set, the one or more SRSs during the active time/period/duration of the first DRX, for example, based on the parameter of the SRS resource set being set to the first value. The wireless device may send (e.g., transmit), via the one or more SRS resources in/of the SRS resource set, the one or more SRSs during the active time/period/duration of the first DRX, for example, based on the one or more configuration parameters not comprising the parameter of the SRS resource set (or based on the parameter of the SRS resource set being absent or not being enabled). The wireless device may send (e.g., transmit), via the one or more SRS resources in/of the SRS resource set, the one or more SRSs during the active time/period/duration of the first DRX, for example, based on the parameter of the MAC-CE indicating activation of the one or more TCI states for the one or more SRS resources being set to the first value. The wireless device may send (e.g., transmit), via the one or more SRS resources in the SRS resource set, the one or more SRSs during the active time/period/duration of the first DRX, for example, based on the apply-indicated-TCI state parameter of the SRS resource set being set to 'first'.

The one or more SRSs (or the one or more SRS resources of the one or more SRSs) may overlap in time with the active time/period/duration of the first DRX. Each SRS of the one or more SRSs (or each SRS resource of the one or more SRS resources of the one or more SRSs) may overlap in time with the active time/period/duration of the first DRX. The one or more SRSs (or the one or more SRS resources of the one or more SRSs) may be in the active time/period/duration of the first DRX. Each SRS of the one or more SRSs (or each SRS resource of the one or more SRS resources of the one or more SRSs) may be in the active time/period/duration of the first DRX.

The wireless device may send (e.g., transmit), via the SRS resource, the SRS during the active time/period/-duration of the first DRX, for example, based on the SRS resource being associated with the first DRX. The wireless device may send (e.g., transmit), via the SRS resource, the SRS during the active time/period/duration of the first DRX, for example, based on the parameter of the SRS resource being set to the first value. The wireless device may send (e.g., transmit), via the SRS resource, the SRS during the active time/period/duration of the first DRX, for example, based on the one or more configuration parameters not comprising the parameter of the SRS resource (or based on the parameter of the SRS resource being absent or not being enabled). The wireless device may send (e.g., transmit), via the SRS resource, the SRS during the active time/period/duration of the first DRX, for example, based on the parameter of a MAC-CE indicating activation of a TCI state for the SRS resource being set to the first value. The one or more TCI states for the one or more SRS resources may comprise the TCI state of the SRS resource. The one or more MAC-CEs may comprise the MAC-CE. The wireless device may send (e.g., transmit), via the SRS resource, the SRS during the active time/period/duration of the first DRX, for example, based on the apply-indicated-TCI state parameter of the SRS resource set comprising the SRS resource being set to 'first'.

The SRS (or the SRS resource of the SRS) may overlap in time with the active time/period/duration of the first DRX. The SRS (or the SRS resource of the SRS) may be in the active time/period/duration of the first DRX. For example, the SRS (or the SRS resource of the SRS) may overlap in at least one symbol with the active time/duration/period of the first DRX. For example, each symbol of the SRS (or the SRS resource of the SRS) may overlap in time with the active time/duration/period of the first DRX.

At least one symbol of the SRS (or the SRS resource of the SRS) may be in the active time/duration/period of the first DRX. For example, each symbol of the SRS (or the SRS resource of the SRS) may be in the active time/duration/period of the first DRX.

The wireless device may not send (e.g., transmit), via an SRS resource of the one or more SRS resources, an SRS during a non-active time/period/duration of the first DRX (e.g., UL TX 2 and UL TX 3 in First DRX non-active time in FIG. 22A). The wireless device may not send (e.g., transmit), via the one or more SRS resources, one or more SRSs during a non-active time/period/duration of the first DRX. The wireless device may not send (e.g., transmit), via each SRS resource of the one or more SRS resources, a respective SRS of the one or more SRSs during the non-active time/period/duration of the first DRX. The wireless device may not send (e.g., transmit), via each SRS resource of the one or more SRS resources, an SRS during the non-active time/period/duration of the first DRX.

The wireless device may not send (e.g., transmit), via the SRS resource, an SRS during a non-active time/-period/duration of the first DRX, for example, based on the SRS resource being periodic. The wireless device may not send (e.g., transmit), via the SRS resource, an SRS during a non-active time/period/duration of the first DRX, for example, based on the SRS resource being semi-persistent. The wireless device may not send (e.g., transmit), via the SRS resource, an SRS during a non-active time/period/duration of the first DRX, for example, based on the SRS resource set comprising the SRS resource being periodic. The wireless device may not send (e.g., transmit), via the SRS resource, an SRS during a non-active time/period/duration of the first DRX, for example, based on the SRS resource set comprising the SRS resource being semi-persistent.

The wireless device may not send (e.g., transmit), via the one or more SRS resources in the SRS resource set, an SRS during a non-active time/period/duration of the first DRX, for example, based on the SRS resource set being periodic. The SRS resource set may be, for example, a periodic SRS resource set. The wireless device may not send (e.g., transmit), via the one or more SRS resources in the SRS resource set, an SRS during a non-active time/period/duration of the first DRX, for example, based on the SRS resource set being semi-persistent. The SRS resource set may be, for example, a semi-persistent SRS resource set. The wireless device may not send (e.g., transmit), via the one or more SRS resources in the SRS resource set, an SRS during a non-active time/period/duration of the first DRX, for example, based on the SRS resource set comprising the one or more SRS resources being periodic. The wireless device may not send (e.g., transmit), via the one or more SRS resources in the SRS resource set, an SRS during a non-active time/-period/duration of the first DRX, for example, based on the SRS resource set comprising the one or more SRS resources being semi-persistent.

The wireless device may not send (e.g., transmit), via the one or more SRS resources in the SRS resource set, an SRS during the non-active time/period/duration of the first DRX, for example, based on the SRS resource set being associated with the first DRX. The wireless device may not send (e.g., transmit), via the one or more SRS resources in the SRS resource set, an SRS during the non-active time/period/duration of the first DRX, for example, based on the parameter of the SRS resource set being set to the first value. The wireless device may not send (e.g., transmit), via the one or more SRS resources in the SRS resource set, an SRS during the non-active time/period/duration of the first DRX, for example, based on the one or more configuration parameters not comprising the parameter of the SRS resource set (or based on the parameter of the SRS resource set being absent or not being enabled). The wireless device may not send (e.g., transmit), via the one or more SRS resources in the SRS resource set, an SRS during the non-active time/-period/duration of the first DRX, for example, based on the parameter of the MAC-CE indicating activation of the one or more TCI states for the one or more SRS resources being set to the first value. The wireless device may not send (e.g., transmit), via the one or more SRS resources in the SRS resource set, an SRS during the non-active time/period/duration of the first DRX, for example, based on the apply-indicated-TCI state parameter of the SRS resource set being set to 'first'.

The one or more SRSs (or the one or more SRS resources of the one or more SRSs) may overlap in time with the non-active time/period/duration of the first DRX. Each SRS of the one or more SRSs (or each SRS resource of the one or more SRS resources of the one or more SRSs) may overlap in time with the non-active time/period/duration of the first DRX. The one or more SRSs (or the one or more SRS resources of the one or more SRSs) may be in the non-active time/period/duration of the first DRX. Each SRS of the one or more SRSs (or each SRS resource of the one or more SRS resources of the one or more SRSs) may be in the non-active time/period/duration of the first DRX.

The wireless device may not send (e.g., transmit), via the SRS resource, an SRS during the non-active time/period/duration of the first DRX, for example, based on the SRS resource being associated with the first DRX. The wireless device may not send (e.g., transmit), via the SRS resource, an SRS during the non-active time/period/duration of the first DRX, for example, based on the parameter of the SRS resource being set to the first value. The wireless device may not send (e.g., transmit), via the SRS resource, an SRS during the non-active time/period/duration of the first DRX, for example, based on the one or more configuration parameters not comprising the parameter of the SRS resource (or based on the parameter of the SRS resource being absent or not being enabled). The wireless device may not send (e.g., transmit), via the SRS resource, an SRS during the non-active time/period/duration of the first DRX, for example, based on the parameter of a MAC-CE indicating activation of a TCI state for the SRS resource being set to the first value. The one or more TCI states for the one or more SRS resources may comprise the TCI state of the SRS resource. The one or more MAC-CEs may comprise the MAC-CE. The wireless device may not send (e.g., transmit), via the SRS resource, an SRS during the non-active time/period/duration of the first DRX, for example, based on the apply-indicated-TCI state parameter of the SRS resource set comprising the SRS resource being set to 'first'.

The SRS (or the SRS resource of the SRS) may overlap in time with the non-active time/period/duration of the first DRX. The SRS (or the SRS resource of the SRS) may be in the non-active time/period/duration of the first DRX. For example, the SRS (or the SRS resource of the SRS) may overlap in at least one symbol with the non-active time/-duration/period of the first DRX. For example, each symbol of the SRS (or the SRS resource of the SRS) may overlap in time with the non-active time/duration/period of the first DRX.

At least one symbol of the SRS (or the SRS resource of the SRS) may be in the non-active time/duration/period of the first DRX. For example, each symbol of the SRS (or the SRS resource of the SRS) may be in the non-active time/duration/period of the first DRX. Not sending (e.g., transmitting) an SRS via an SRS resource may comprise stopping/aborting/ignoring/discarding/cancelling transmission of the SRS via the SRS resource.

Transmission of the one or more SRSs via the one or more SRS resources may not be impacted by the second DRX of the cell (e.g., Second DRX active time and Second DRX non-active time in FIG. 23A). The wireless device may send (e.g., transmit), via the one or more SRS resources, the one or more SRSs during a non-active time/period/duration of the second DRX. The wireless device may send (e.g., transmit), via the one or more SRS resources, the one or more SRSs, regardless of the one or more SRS resources overlapping in time with an active or a non-active time/period/duration of the second DRX (e.g., UL TX 1, UL TX 2, UL TX 3, and UL TX 4 in FIG. 23A).

The one or more configuration parameters may comprise the one or more second DRX configuration parameters of the second DRX of the cell (e.g., the second DRX is configured). For example, the control command (e.g., Control command 1720 as shown in FIG. 17) may indicate activation of the second DRX (e.g., the second DRX is activated).

The wireless device may send (e.g., transmit), via an SRS resource of the one or more SRS resources, an SRS during an active time/period/duration of the second DRX (e.g., at time T3 as shown in FIG. 17, UL TX 1 and UL TX 4 in Second DRX active time as shown in FIG. 22B). The wireless device may send (e.g., transmit), via the one or more SRS resources, one or more SRSs during an active time/period/duration of the second DRX. The wireless device may send (e.g., transmit), via each SRS resource of the one or more SRS resources, a respective SRS of the one or more SRSs during the active time/period/duration of the second DRX.

The wireless device may send (e.g., transmit), via the one or more SRS resources in/of the SRS resource set, the one or more SRSs during the active time/period/duration of the second DRX, for example, based on the SRS resource set being associated with the second DRX. The wireless device may send (e.g., transmit), via the one or more SRS resources in/of the SRS resource set, the one or more SRSs during the active time/period/duration of the second DRX, for example, based on the parameter of the SRS resource set being set to the second value. The wireless device may send (e.g., transmit), via the one or more SRS resources in/of the SRS resource set, the one or more SRSs during the active time/period/duration of the second DRX, for example, based on the one or more configuration parameters comprising the parameter of the SRS resource set (or based on the parameter of the SRS resource set being present or being enabled). The wireless device may send (e.g., transmit), via the one or more SRS resources in/of the SRS resource set, the one or more SRSs during the active time/period/duration of the second DRX, for example, based on the parameter of the MAC-CE indicating activation of the one or more TCI states for the one or more SRS resources being set to the second value. The wireless device may send (e.g., transmit), via the one or more SRS resources in the SRS resource set, the one or more SRSs during the active time/period/duration of the second DRX, for example, based on the apply-indicated-TCI state parameter of the SRS resource set being set to 'second'.

The one or more SRSs (or the one or more SRS resources of the one or more SRSs) may overlap in time with the active time/period/duration of the second DRX. Each SRS of the one or more SRSs (or each SRS resource of the one or more SRS resources of the one or more SRSs) may overlap in time with the active time/period/duration of the second DRX. The one or more SRSs (or the one or more SRS resources of the one or more SRSs) may be in the active time/period/duration of the second DRX. Each SRS of the one or more SRSs (or each SRS resource of the one or more SRS resources of the one or more SRSs) may be in the active time/period/duration of the second DRX.

The wireless device may send (e.g., transmit), via the SRS resource, the SRS during the active time/period/duration of the second DRX, for example, based on the SRS resource being associated with the second DRX. The wireless device may send (e.g., transmit), via the SRS resource, the SRS during the active time/period/duration of the second DRX, for example, based on the parameter of the SRS resource being set to the second value. The wireless device may send (e.g., transmit), via the SRS resource, the SRS during the active time/period/duration of the second DRX, for example, based on the one or more configuration parameters comprising the parameter of the SRS resource (or based on the parameter of the SRS resource being present or being enabled). The wireless device may send (e.g., transmit), via the SRS resource, the SRS during the active time/period/duration of the second DRX, for example, based on the parameter of a MAC-CE indicating activation of a TCI state for the SRS resource being set to the second value. The one or more TCI states for the one or more SRS resources may comprise the TCI state of the SRS resource. The one or more MAC-CEs may comprise the MAC-CE. The wireless device may send (e.g., transmit), via the SRS resource, the SRS during the active time/period/duration of the second DRX, for example, based on the apply-indicated-TCI state parameter of the SRS resource set comprising the SRS resource being set to 'second'.

The SRS (or the SRS resource of the SRS) may overlap in time with the active time/period/duration of the first DRX. The SRS (or the SRS resource of the SRS) may be in the active time/period/duration of the first DRX. For example, the SRS (or the SRS resource of the SRS) may overlap in at least one symbol with the active time/duration/period of the second DRX. For example, each symbol of the SRS (or the SRS resource of the SRS) may overlap in time with the active time/duration/period of the second DRX.

At least one symbol of the SRS (or the SRS resource of the SRS) may be in the active time/duration/period of the second DRX. For example, each symbol of the SRS (or the SRS resource of the SRS) may be in the active time/duration/period of the second DRX.

The wireless device may not send (e.g., transmit), via an SRS resource of the one or more SRS resources, an SRS during a non-active time/period/duration of the second DRX (e.g., UL TX 2 and UL TX 3 in Second DRX non-active time in FIG. 22B). The wireless device may not send (e.g., transmit), via the one or more SRS resources, one or more SRSs during a non-active time/period/duration of the second DRX. The wireless device may not send (e.g., transmit), via each SRS resource of the one or more SRS resources, a respective SRS of the one or more SRSs during the non-active time/period/duration of the second DRX. The wireless device may not send (e.g., transmit), via each SRS resource of the one or more SRS resources, an SRS during the non-active time/period/duration of the second DRX.

The wireless device may not send (e.g., transmit), via the SRS resource, an SRS during a non-active time/period/duration of the second DRX, for example, based on the SRS resource being periodic. The wireless device may not send (e.g., transmit), via the SRS resource, an SRS during a non-active time/period/duration of the second DRX, for example, based on the SRS resource being semi-persistent. The wireless device may not send (e.g., transmit), via the SRS resource, an SRS during a non-active time/period/duration of the second DRX, for example, based on the SRS resource set comprising the SRS resource being periodic. The wireless device may not send (e.g., transmit), via the SRS resource, an SRS during a non-active time/period/duration of the second DRX, for example, based on the SRS resource set comprising the SRS resource being semi-persistent.

The wireless device may not send (e.g., transmit), via the one or more SRS resources in the SRS resource set, an SRS during a non-active time/period/duration of the second DRX, for example, based on the SRS resource set being periodic. The SRS resource set may be, for example, a periodic SRS resource set. The wireless device may not send (e.g., transmit), via the one or more SRS resources in the SRS resource set, an SRS during a non-active time/period/duration of the second DRX, for example, based on the SRS resource set being semi-persistent. The SRS resource set may be, for example, a semi-persistent SRS resource set. The wireless device may not send (e.g., transmit), via the one or more SRS resources in the SRS resource set, an SRS during a non-active time/period/duration of the second DRX, for example, based on the SRS resource set comprising the one or more SRS resources being periodic. The wireless device may not send (e.g., transmit), via the one or more SRS resources in the SRS resource set, an SRS during a non-active time/period/duration of the second DRX, for example, based on the SRS resource set comprising the one or more SRS resources being semi-persistent.

The wireless device may not send (e.g., transmit), via the one or more SRS resources in the SRS resource set, an SRS during the non-active time/period/duration of the second DRX, for example, based on the SRS resource set being associated with the second DRX. The wireless device may not send (e.g., transmit), via the one or more SRS resources in the SRS resource set, an SRS during the non-active time/period/duration of the second DRX, for example, based on the parameter of the SRS resource set being set to the second value. The wireless device may not send (e.g., transmit), via the one or more SRS resources in the SRS resource set, an SRS during the non-active time/period/duration of the second DRX, for example, based on the one or more configuration parameters comprising the parameter of the SRS resource set (or based on the parameter of the SRS resource set being present or being enabled). The wireless device may not send (e.g., transmit), via the one or more SRS resources in the SRS resource set, an SRS during the non-active time/-period/duration of the second DRX, for example, based on the parameter of the MAC-CE indicating activation of the one or more TCI states for the one or more SRS resources being set to the second value. The wireless device may not send (e.g., transmit), via the one or more SRS resources in the SRS resource set, an SRS during the non-active time/period/duration of the second DRX, for example, based on the apply-indicated-TCI state parameter of the SRS resource set being set to 'second'.

The one or more SRSs (or the one or more SRS resources of the one or more SRSs) may overlap in time with the non-active time/period/duration of the second DRX. Each SRS of the one or more SRSs (or each SRS resource of the one or more SRS resources of the one or more SRSs) may overlap in time with the non-active time/period/duration of the second DRX. The one or more SRSs (or the one or more SRS resources of the one or more SRSs) may be in the non-active time/period/duration of the second DRX. Each SRS of the one or more SRSs (or each SRS resource of the one or more SRS resources of the one or more SRSs) may be in the non-active time/period/duration of the second DRX.

The wireless device may not send (e.g., transmit), via the SRS resource, an SRS during the non-active time/period/duration of the second DRX, for example, based on the SRS resource being associated with the second DRX. The wireless device may not send (e.g., transmit), via the SRS resource, an SRS during the non-active time/-period/duration of the second DRX, for example, based on the parameter of the SRS resource being set to the second value. The wireless device may not send (e.g., transmit), via the SRS resource, an SRS during the non-active time/-period/duration of the second DRX, for example, based on the one or more configuration parameters comprising the parameter of the SRS resource (or based on the parameter of the SRS resource being present or being enabled). The wireless device may not send (e.g., transmit), via the SRS resource, an SRS during the non-active time/period/duration of the second DRX, for example, based on the parameter of a MAC-CE indicating activation of a TCI state for the SRS resource being set to the second value. The one or more TCI states for the one or more SRS resources may comprise the TCI state of the SRS resource. The one or more MAC-CEs may comprise the MAC-CE. The wireless device may not send (e.g., transmit), via the SRS resource, an SRS during the non-active time/period/duration of the second DRX, for example, based on the apply-indicated-TCI state parameter of the SRS resource set comprising the SRS resource being set to 'second'.

The SRS (or the SRS resource of the SRS) may overlap in time with the non-active time/period/duration of the second DRX. The SRS (or the SRS resource of the SRS) may be in the non-active time/period/duration of the second DRX. For example, the SRS (or the SRS resource of the SRS) may overlap in at least one symbol with the non-active time/duration/period of the second DRX. For example, each symbol of the SRS (or the SRS resource of the SRS) may overlap in time with the non-active time/duration/period of the second DRX.

At least one symbol of the SRS (or the SRS resource of the SRS) may be in the non-active time/duration/period of the second DRX. For example, each symbol of the SRS (or the SRS resource of the SRS) may be in the non-active time/duration/period of the second DRX. Not sending (e.g., transmitting) an SRS via an SRS resource may comprise stopping/aborting/ignoring/discarding/cancelling transmission of the SRS via the SRS resource.

Transmission of the one or more SRSs via the one or more SRS resources may not be impacted by the first DRX of the cell (e.g., First DRX active time and First DRX non-active time in FIG. 23B). The wireless device may send (e.g., transmit), via the one or more SRS resources, the one or more SRSs during a non-active time/period/duration of the first DRX. The wireless device may send (e.g., transmit), via the one or more SRS resources, the one or more SRSs, regardless of the one or more SRS resources overlapping in time with an active or a non-active time/period/duration of the first DRX (e.g., UL TX 1, UL TX 2, UL TX 3, and UL TX 4 in FIG. 23B).

The one or more configuration parameters may indicate at least two DTXs for the cell. The at least two DTXs of the cell may be (or may be interchangeably used with) at least two DTX configurations of the cell. The at least two DTXs of the cell may be (or may be interchangeably used with) at least two DTX operations of the cell. The one or more configuration parameters may comprise one or more first DTX configuration parameters (e.g., *TRP-DTX-Config, TRP-DTX-Configl TRPI-DTX Config, DTX-Config, DTX-Config1,* and the like) indicating a first DTX of the cell (e.g., First DTX in FIG. 17). The at least two DTXs of the cell may comprise the first DTX of the cell.

The first DTX of the cell may be (or may be interchangeably used with) a first DTX configuration of the cell. The first DTX of the cell may be (or may be interchangeably used with) a first DTX operation of the cell. The first DTX may be associated with a first TRP (e.g., TRP 1 2210 as shown in FIG. 22A and FIG. 22B, or TRP 1 2310 as shown in FIG. 23A and FIG. 23B). The one or more configuration parameters may indicate the first DTX for an energy saving of the first TRP.

The one or more configuration parameters may comprise one or more second DTX configuration parameters (e.g., *TRP-DTX-Config2, TRP2-DTX-Config, DTX-Config2,* and the like) indicating a second DTX of the cell (e.g., Second DTX). The at least two DTXs 1705 of the cell may comprise the second DTX of the cell.

The second DTX of the cell may be (or may be interchangeably used with) a second DTX configuration of the cell. The second DTX of the cell may be (or may be interchangeably used with) a second DTX operation of the cell. The second DTX may be associated with a second TRP (e.g., TRP 2 2220 as shown in FIG. 22A and FIG. 22B, or TRP 1 2320 as shown in FIG. 23A and FIG. 23B). The one or more configuration parameters may indicate the second DTX for an energy saving of the second TRP.

The wireless device may send/transmit/report a capability message (e.g., a UE capability message) indicating support/capability (e.g., *twoDTXcapability*) of two DTX configurations for/per a cell. The one or more configuration parameters may comprise the one or more second DTX configuration parameters indicating the second DTX, for example, based on sending/transmitting/reporting the capability message indicating support/capability (e.g., *twoDTXcapability*) of two DTX configurations for/per the cell. The base station may send (e.g., transmit), to the wireless device, the one or more second DTX configuration parameters indicating the second DTX, for example, based on receiving the capability message indicating support/capability (e.g., *twoDTXcapability*) of two DTX configurations for/per the cell. The base station may send (e.g., transmit), to the wireless device, the one or more configuration parameters indicating at most two DTXs (e.g., no DTX configuration, the first DTX only, the second DTX only, both the first DTX and the second DTX) for the cell, for example, based on receiving the capability message indicating support/capability (e.g., *twoDTXcapability*) of two DTX configurations for/per the cell.

The wireless device may not send/transmit/report a capability message (e.g., a wireless device/UE capability message) indicating support/capability (e.g., *twoDTXcapability*) of two DTX configurations for/per a cell. The one or more configuration parameters may not comprise one or more second DTX configuration parameters indicating a second DTX, for example, based on not sending/transmitting/reporting the capability message indicating support/capability (e.g., *twoDTXcapability*) of two DTX configurations for/per the cell. The base station may not send (e.g., transmit), to the wireless device, the one or more second DTX configuration parameters indicating the second DTX, for example, based on not receiving the capability message indicating support/capability (e.g., *twoDTXcapability*) of two DTX configurations for/per the cell. The base station may send (e.g., transmit), to the wireless device, the one or more first DTX configuration parameters indicating the first DTX, for example, based on not receiving the capability message indicating support/capability (e.g., *twoDTXcapability*) of two DTX configurations for/per the cell. The base station may send (e.g., transmit), to the wireless device, the one or more configuration parameters indicating at most one DTX (e.g., the first DTX only or no DTX configuration) for the cell, for example, based on not receiving the capability message indicating support/capability (e.g., *twoDTXcapability*) of two DTX configurations for/per the cell.

The one or more configuration parameters may indicate at least two DRXs for the cell. The at least two DRXs of the cell may be (or may be interchangeably used with) at least two DRX configurations of the cell. The at least two DRXs of the cell may be (or may be interchangeably used with) at least two DRX operations of the cell. The one or more configuration parameters may comprise one or more first DRX configuration parameters (e.g., *TRP-DRX-Config, TRP-DRX-Configl TRP 1-DRX-Config, DRX-Config, DRX-Config1,* and the like) indicating a first DRX of the cell (e.g., First DRX in FIG. 17). The at least two DRXs of the cell may comprise the first DRX of the cell.

The first DRX of the cell may be (or may be interchangeably used with) a first DRX configuration of the cell. The first DRX of the cell may be (or may be interchangeably used with) a first DRX operation of the cell. The first DRX may be associated with a first TRP (e.g., TRP 1 2210 as shown in FIG. 22A and FIG. 22B, or TRP 1 2310 as shown in FIG. 23A and FIG. 23B). The one or more configuration parameters may indicate the first DRX for an energy saving of the first TRP.

The one or more configuration parameters may comprise one or more second DRX configuration parameters (e.g., *TRP-DRX Config2, TRP2-DRX-Config, DRX-Config2,* and the like) indicating a second DRX of the cell (e.g., Second DRX). The at least two DRXs 1706 of the cell may comprise the second DRX of the cell.

The second DRX of the cell may be (or may be interchangeably used with) a second DRX configuration of the cell. The second DRX of the cell may be (or may be interchangeably used with) a second DRX operation of the cell. The second DRX may be associated with a second TRP (e.g., TRP 2 2220 as shown in FIG. 22A and FIG. 22B, or TRP 1 2320 as shown in FIG. 23A and FIG. 23B). The one or more configuration parameters may indicate the second DRX for an energy saving of the second TRP.

The wireless device may receive a control command (e.g., Control command at time T1 in FIG. 17). The control command may be, for example, a DCI (e.g., DCI format 2_9, DCI format 2_10, and the like). The control command may indicate activation of a DTX of the at least two DTXs of the cell. The control command may comprise a DTX/DRX indicator field (e.g., TRP DTX/DRX indicator field) with a value (e.g., 1) indicating activation of the DTX of the cell. The DTX/DRX indicator field may be associated with (or correspond to) the DTX of the cell. The wireless device may activate the DTX of the cell based on receiving the control command.

A value (e.g., '1') for/of a bit of the DTX/DRX indicator field in a block of the one or more blocks may indicate activation of the DTX of the cell. The block may be associated with the cell. The one or more configuration parameters may indicate, for the cell, a starting position of the block or a starting position of the DTX. The bit may be associated with (or may correspond to) the DTX of the cell.

The DTX may be, for example, the first DTX. The DTX may be, for example, the second DTX. The DTX of the cell may be (or may be interchangeably used with) a DTX configuration of the cell. The DTX of the cell may be (or may be interchangeably used with) a DTX operation of the cell.

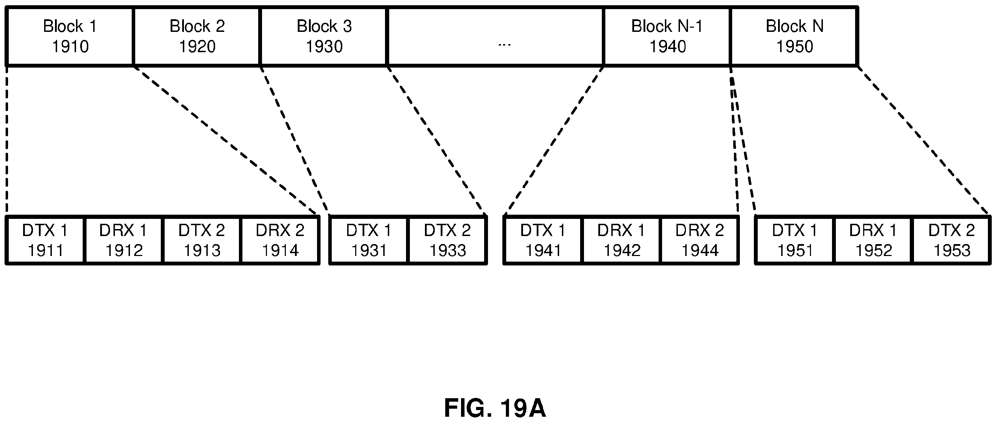

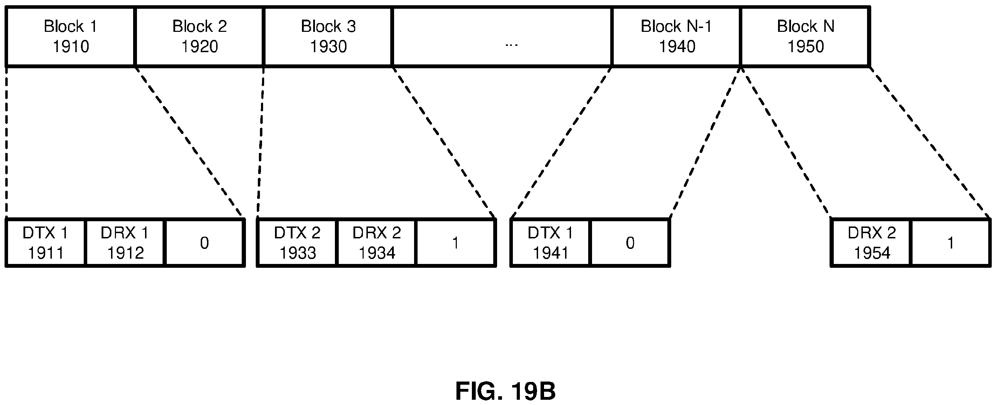

FIG. 19A shows an example of a control command. FIG. 19B shows an example of a control command. The control command (e.g., Control command 1720 at time T1 in FIG. 17) may comprise one or more blocks (e.g., Block 1 1910, Block 2 1920, Block 3 1930, ..., Block N-1 1940, Block N 1950 in FIG. 19A and FIG. 19B). A size/length of each block of the one or more blocks may be one or more bits (e.g., 1 bit, 2 bits, 3 bits, 4 bits). Each block may comprise/indicate respective DTX/DRX indicator field (e.g., TRP DTX/DRX indicator field). Each bit of a DTX/DRX indicator field (e.g., TRP DTX/DRX indicator field) in a block of the one or more blocks may indicate activation or deactivation of one of the first DTX, the second DTX, the first DRX, and/or the second DRX. A first value (e.g., '0') for a bit of the DTX/DRX indicator field may indicate deactivation of a DTX or of a DRX among the first DTX, the second DTX, the first DRX, and the second DRX, where the bit corresponds to (or is associated with) the DTX or the DRX. A second value (e.g., '1') for a bit of the DTX/DRX indicator field may indicate activation of a DTX or of a DRX among the first DTX, the second DTX, the first DRX, and the second DRX, where the bit corresponds to (or is associated with) the DTX or the DRX.

A block (e.g., Block 1 1910 in FIG. 19A or a DTX/DRX indicator field in Block 1 1910) of the one or more blocks may be 4 bits, for example, if the first DTX, the second DTX, the first DRX, and the second DRX are configured/indicated, by the one or more configuration parameters, for the cell. The MSB of the 4 bits of the block may correspond to the first DTX (e.g., DTX 1 1911 in FIG. 19A). The second MSB of the 4 bits of the block may correspond to the first DRX (e.g., DRX 1 1912 in FIG. 19A). The LSB of the 4 bits of the block may correspond to the second DRX (e.g., DRX 2 1914 in FIG. 19A). The third MSB or the second LSB of the 4 bits of the block may correspond to the second DTX (e.g., DTX 2 1913 in FIG. 19A). The block may comprise a DTX/DRX indicator field (e.g., 4 bits).

A first value (e.g., '0') for the MSB of the DTX/DRX indicator field may indicate deactivation of the first DTX. A second value (e.g., '1') for the MSB of the DTX/DRX indicator field may indicate activation of the first DTX.

A first value (e.g., '0') for the second MSB of the DTX/DRX indicator field may indicate deactivation of the first DRX. A second value (e.g., ') for the second MSB of the DTX/DRX indicator field may indicate activation of the first DRX.

A first value (e.g., '0') for the LSB of the DTX/DRX indicator field may indicate deactivation of the second DRX. A second value (e.g., '1') for the LSB of the DTX/DRX indicator field may indicate activation of the second DRX.

A first value (e.g., '0') for the second LSB of the DTX/DRX indicator field may indicate deactivation of the second DTX. A second value (e.g., '1') for the second LSB of the DTX/DRX indicator field may indicate activation of the second DTX.

A block (e.g., Block 3 1930 in FIG. 19A or a DTX/DRX indicator field in Block 3 1930) of the one or more blocks may be 2 bits, for example, if the first DTX and the second DTX are configured/indicated, by the one or more configuration parameters, for the cell. The MSB of the 2 bits of the block may correspond to the first DTX (e.g., DTX 1 1931 in FIG. 19A). The LSB of the 2 bits of the block may correspond to the second DTX (e.g., DTX 2 1933 in FIG. 19A). The first DRX and the second DRX may not be configured/indicated, by the one or more configuration parameters, for the cell. The block may comprise a DTX/DRX indicator field (e.g., 2 bits).

A first value (e.g., '0') for the MSB of the DTX/DRX indicator field may indicate deactivation of the first DTX. A second value (e.g., '1') for the MSB of the DTX/DRX indicator field may indicate activation of the first DTX.

A first value (e.g., '0') for the LSB of the DTX/DRX indicator field may indicate deactivation of the second DTX. A second value (e.g., '1') for the LSB of the DTX/DRX indicator field may indicate activation of the second DTX.

A block of the one or more blocks may be 2 bits, for example, if the first DRX and the second DRX are configured/indicated, by the one or more configuration parameters, for the cell. The MSB of the 2 bits of the block may correspond to the first DRX. The LSB of the 2 bits of the block may correspond to the second DRX. The first DTX and the second DTX may not be configured/indicated, by the one or more configuration parameters, for the cell.

A block of the one or more blocks may be 2 bits, for example, if the first DTX and the second DRX are configured/indicated, by the one or more configuration parameters, for the cell. The MSB of the 2 bits of the block may correspond to the first DTX. The LSB of the 2 bits of the block may correspond to the second DRX. The second DTX and the first DRX may not be configured/indicated, by the one or more configuration parameters, for the cell.

A block of the one or more blocks may be 2 bits, for example, if two of the first DTX, the second DTX, the first DRX, and/or the second DRX are configured/indicated, by the one or more configuration parameters, for the cell. For example, the block may be/comprise one of {[DTX 1, DRX 1], [DTX 1, DRX 2], [DTX 1, DTX 2], [DRX 1, DRX 2], [DRX 1, DTX 2], [DTX 2, DRX 2]}.

A block (e.g., Block N-1 1940 in FIG. 19A or a DTX/DRX indicator field in Block N-1 1940) of the one or more blocks may be 3 bits, for example, if the first DTX, the first DRX, and the second DRX are configured/indicated, by the one or more configuration parameters, for the cell. The MSB of the 3 bits of the block may correspond to the first DTX (e.g., DTX 1 1941 in FIG. 19A). The second MSB of the 3 bits of the block may correspond to the first DRX (e.g., DRX 1 1942 in FIG. 19A). The LSB of the 3 bits of the block may correspond to the second DRX (e.g., DRX 2 1944 in FIG. 19A). The second DTX may not be configured/indicated, by the one or more configuration parameters, for the cell.

A block (e.g., Block N 1950 in FIG. 19A or a DTX/DRX indicator field in Block N 1950) of the one or more blocks may be 3 bits, for example, if the first DTX, the first DRX, and the second DTX are configured/indicated, by the one or more configuration parameters, for the cell. The MSB of the 3 bits of the block may correspond to the first DTX (e.g., DTX 1 1951 in FIG. 19A). The second MSB of the 3 bits of the block may correspond to the first DRX (e.g., DRX 1 1952 in FIG. 19A). The LSB of the 3 bits of the block may correspond to the second DTX (e.g., DTX 2 1953 in FIG. 19A). The second DRX may not be configured/indicated, by the one or more configuration parameters, for the cell.

A block of the one or more blocks may be 3 bits, for example, if three of the first DTX, the second DTX, the first DRX, and/or the second DRX are configured/indicated, by the one or more configuration parameters, for the cell. For example, the block may be/comprise one of {[DTX 1, DRX 1, DTX 2], [DTX 1, DRX 1, DRX 2], [DTX 1, DTX 2, DRX 2], [DRX 1, DTX 2, DRX 2]}.

A block of the one or more blocks may be 1 bit, for example, if one of the first DTX, the second DTX, the first DRX, and/or the second DRX are configured/indicated, by the one or more configuration parameters, for the cell. For example, the block may be/comprise one of {[DTX 1], [DRX 1], [DTX 2], [DRX 2]}.

A starting position of a DTX/DRX (or a DTX/DRX indicator field) of a TRP in a block of the one or more blocks may be determined, by the wireless device and/or the base station, by a position parameter (e.g., *positionInDCI-TRPDTRX*). The one or more configuration parameters may comprise the position parameter. For example, a wireless device configured with (or served by) both the first TRP and the second TRP may be indicated by a starting position of the block (e.g., starting position of DTX 1 1911 in Block 1 1910 in FIG. 19A). The position parameter may indicate the starting position of the block. For example, a wireless device configured with (or served by) the first TRP only may be indicated by a starting position of the block (e.g., starting position of DTX 1 1911 in Block 1 1910 in FIG. 19A). The position parameter may indicate the starting position of the block. The wireless device discards/ignores DTX 2 and DRX 2, in the block, associated with the second TRP. For example, a wireless device configured with (or served by) the second TRP only may be indicated by a starting position of the DTX/DRX (or a DTX/DRX indicator field in the block) associated with the second TRP (e.g., starting position of DTX 2 1913 in Block 1 in FIG. 19A). The position parameter may indicate the starting position of the DTX/DRX, in the block, associated with the second TRP. The wireless device discards/ignores DTX 1 and DRX 1, in the block, associated with the first TRP.

A size/length of each block of the one or more blocks may be at least two bits (e.g., 2 bits, 3 bits). Each block may comprise/indicate a respective DTX/DRX indicator field (e.g., DTX/DRX indicator field) and a respective index/indicator field (e.g., TRP index/indicator, coreset pool index, SRS resource set index/indicator, antenna panel index/indicator, physical cell index/identifier, and the like). An index/indicator field in a block of the one or more blocks may be 1 bit. A respective index/indicator field in each block of the one or more blocks may be 1 bit.

Each bit of a DTX/DRX indicator field (e.g., DTX/DRX indicator field) in the block may indicate activation or deactivation of one of the first DTX and/or the first DRX, for example, if a value of an index/indicator field in a block of the one or more blocks is equal/set to a first value (e.g., 0). A first value (e.g., '0') for a bit of the DTX/DRX indicator field in the block may indicate deactivation of the first DTX or the first DRX, where the bit corresponds to (or is associated with) the first DTX or the first DRX, respectively. A second value (e.g., '1') for a bit of the DTX/DRX indicator field in the block may indicate activation of the first DTX or the first DRX, where the bit corresponds to (or is associated with) the first DTX or the first DRX, respectively.

Each bit of a DTX/DRX indicator field (e.g., DTX/DRX indicator field) in the block may indicate activation or deactivation of one of the second DTX and/or the second DRX, if a value of an index/indicator field in a block of the one or more blocks is equal/set to a second value (e.g., 1). A first value (e.g., '0') for a bit of the DTX/DRX indicator field may indicate deactivation of the second DTX or the second DRX, where the bit corresponds to (or is associated with) the second DTX or the second DRX, respectively. A second value (e.g., '1') for a bit of the DTX/DRX indicator field may indicate activation of the second DTX or the second DRX, where the bit corresponds to (or is associated with) the second DTX or the second DRX, respectively.

The index/indicator field in the block may be located/positioned after the DTX/DRX indicator field in the block. The index/indicator field in the block may not be located/positioned before the DTX/DRX indicator field in the block.

The block may be 3 bits, for example, if the first DTX and the first DRX are configured/indicated, by the one or more configuration parameters, for the cell, for example, if an index/indicator field in a block (e.g., Block 1 1910 in FIG. 19B) of the one or more blocks is equal/set to a first value (e.g., 0). The MSB of the 3 bits of the block may correspond to the first DTX (e.g., DTX 1 1911 in FIG. 19B). The second MSB of the 3 bits of the block may correspond to the first DRX (e.g., DRX 1 1912 in FIG. 19B). The LSB of the 3 bits of the block may correspond to the index/indicator field (e.g., 0 in Block 1 1910 in FIG. 19B). The block may comprise the index/indicator field (e.g., 1 bit) and a DTX/DRX indicator field (e.g., 2 bits).

A first value (e.g., '0') for the MSB of the DTX/DRX indicator field may indicate deactivation of the first DTX. A second value (e.g., '1') for the MSB of the DTX/DRX indicator field may indicate activation of the first DTX.

A first value (e.g., '0') for the second MSB of the DTX/DRX indicator field may indicate deactivation of the first DRX. A second value (e.g., ') for the second MSB of the DTX/DRX indicator field may indicate activation of the first DRX.

The block may be 3 bits, for example, if the second DTX and the second DRX are configured/indicated, by the one or more configuration parameters, for the cell, for example, if an index/indicator field in a block (e.g., Block 3 1930 in FIG. 19B) of the one or more blocks is equal/set to a second value (e.g., 1). The MSB of the 3 bits of the block may correspond to the second DTX (e.g., DTX 2 1933 in FIG. 19B). The second MSB of the 3 bits of the block may correspond to the second DRX (e.g., DRX 2 1934 in FIG. 19B). The LSB of the 3 bits of the block may correspond to the index/indicator field (e.g., 1 in Block 3 1930 in FIG. 19B). The block may comprise the index/indicator field (e.g., 1 bit) and a DTX/DRX indicator field (e.g., 2 bits).

A first value (e.g., '0') for the MSB of the DTX/DRX indicator field may indicate deactivation of the second DTX. A second value (e.g., '1') for the MSB of the DTX/DRX indicator field may indicate activation of the second DTX.

A first value (e.g., '0') for the second MSB of the DTX/DRX indicator field may indicate deactivation of the second DRX. A second value (e.g., '1') for the second MSB of the DTX/DRX indicator field may indicate activation of the second DRX.

The block may be 2 bits, for example, if either the first DTX or the first DRX (e.g., only one of the first DTX and the first DRX) is configured/indicated, by the one or more configuration parameters, for the cell, for example, if an index/indicator field in a block (e.g., Block N-1 1940 in FIG. 19B) of the one or more blocks is equal/set to a first value (e.g., 0). The MSB of the 2 bits of the block may correspond to the first DTX (e.g., DTX 1 1941 in FIG. 19B) or the first DRX. The LSB of the 2 bits of the block may correspond to the index/indicator field (e.g., 0 in Block N-1 1940 in FIG. 19B). The block may comprise the index/indicator field (e.g., 1 bit) and a DTX/DRX indicator field (e.g., 1 bit).

A first value (e.g., '0') for the MSB of the DTX/DRX indicator field may indicate deactivation of the first DTX or the first DRX. A second value (e.g., '1') for the MSB of the DTX/DRX indicator field may indicate activation of the first DTX or the first DRX.

The block may be 2 bits, for example, if either the second DTX or the second DRX (e.g., only one of the second DTX and the second DRX) is configured/indicated, by the one or more configuration parameters, for the cell, for example, if an index/indicator field in a block (e.g., Block N 1950 in FIG. 19B) of the one or more blocks is equal/set to a second value (e.g., 1). The MSB of the 2 bits of the block may correspond to the second DTX or the second DRX (e.g., DRX 2 1954 in FIG. 19B). The LSB of the 2 bits of the block may correspond to the index/indicator field (e.g., 1 in Block N 1950 in FIG. 19B). The block may comprise the index/indicator field (e.g., 1 bit) and a DTX/DRX indicator field (e.g., 1 bit).

A first value (e.g., '0') for the MSB of the DTX/DRX indicator field may indicate deactivation of the second DTX or the second DRX. A second value (e.g., '1') for the MSB of the DTX/DRX indicator field may indicate activation of the second DTX or the second DRX.

A wireless device may receive, from a base station, one or more messages (e.g., RRC messages, RRC reconfiguration messages) comprising one or more configuration parameters. The base station may send (e.g., transmit) the one or more messages. The one or more configuration parameters may indicate/provide/comprise, by a first DTX higher layer parameter (e.g., *TRP-DTX Config*) of the one or more configuration parameters, a first DTX configuration of a cell (e.g., a serving cell, a non-serving cell, a candidate/target/neighbor cell). The one or more configuration parameters may indicate/provide/comprise, by a second DTX higher layer parameter (e.g., *TRP-DTX-Config2*) of the one or more configuration parameters, a second DTX configuration of the cell, for example, if the wireless device sends/transmits/provides/reports a capability of two DTX per/for cell (e.g., *twoDTXcapability*).

The wireless device may be configured by a higher layer DTX parameter (e.g., *apply-DTX, DTX indicator/index/selection,* and the like) to the CSI report configuration to indicate whether the wireless device may use/apply the first DTX configuration or the second DTX configuration to the CSI report configuration, for example, for a periodic CSI-RS or a semi-persistent CSI-RS that may be configured in a CSI report configuration, in a higher layer parameter CSI-*ReportConfig* that may be associated with a higher layer parameter *reportQuantity,* which may comprise at least 'rank indicator (RI)'.

The wireless device, which may be configured and/or activated with the first DTX configuration or the second DTX configuration, may not expect to receive the periodic CSI-RS and/or the semi-persistent CSI-RS configured in the CSI report configuration in the higher layer parameter *CSI-ReportConfig* that may be associated with the higher layer parameter *reportQuantity* comprising at least 'RI and with the higher layer DTX parameter that may indicate the first DTX configuration or the second DTX configuration to the CSI report configuration, respectively, for example, during a non-active time/period/duration of the first DTX configuration or a non-active time/period/duration of the second DTX configuration. The wireless device may be configured by a higher layer DTX parameter (e.g., *apply-DTX, DTX indicator/-index/selection,* and the like) to the CSI report configuration to indicate whether the wireless device may use/apply the first DTX configuration or the second DTX configuration to the CSI report configuration, for example, for a periodic CSI-RS or a semi-persistent CSI-RS that may be configured in a CSI report configuration in a higher layer parameter *CSI-ReportConfig* that may be associated with a higher layer parameter *reportQuantity* comprising at least 'rank indicator (RI)'. The wireless device, which may be configured and/or activated with the first DTX configuration, may not expect to receive the periodic CSI-RS and/or the semi-persistent CSI-RS configured in the CSI report configuration, which may be associated with the higher layer parameter *reportQuantity* comprising at least 'RI and/or may be associated with the higher layer DTX parameter indicating the first DTX configuration, for example, during a non-active time/period/duration of the first DTX configuration. The wireless device, which may be configured and/or activated with the second DTX configuration, may not expect to receive the periodic CSI-RS and/or the semi-persistent CSI-RS configured in the CSI report configuration, which may be associated with the higher layer parameter *reportQuantity* comprising at least 'RI and/or may be associated with the higher layer DTX parameter indicating the second DTX configuration, for example, during a non-active time/period/duration of the second DTX configuration.

A wireless device may be configured, by a base station, by a higher layer DTX parameter (e.g., *apply-DTX, DTX indicator/index/selection,* and the like) to the CSI report configuration to indicate whether the wireless device may use/apply the first DTX configuration or the second DTX configuration to the CSI report configuration, for example, for a periodic CSI-RS or a semi-persistent CSI-RS configured in a CSI report configuration in a higher layer parameter *CSI-ReportConfig* associated with a higher layer parameter *reportQuantity* comprising at least 'rank indicator (RI)'.

The wireless device, which may be configured and/or activated with the first DTX configuration, may not receive, from the base station, the periodic CSI-RS and/or the semi-persistent CSI-RS, for example, if the higher layer DTX parameter of the CSI report configuration indicates the first DTX configuration (e.g., if the higher layer DTX parameter is set to a first value (e.g., 0, 'first') to use/apply to the CSI report configuration, for example, during a non-active time/-period/duration of the first DTX configuration.

The wireless device, which may be configured and/or activated with the second DTX configuration may not receive, from the base station, the periodic CSI-RS and/or the semi-persistent CSI-RS, for example, if the higher layer DTX parameter of the CSI report configuration indicates the second DTX configuration (e.g., if the higher layer DTX parameter is set to a second value (e.g., 1, 'second') to use/apply to the CSI report configuration, for example, during a non-active time/period/duration of the second DTX configuration.

A base station may configure a wireless device with a higher layer DTX parameter (e.g., *apply-DTX, DTX indicator/index/selection,* and the like) to the CSI report configuration to indicate whether the wireless device and/or the base station may use/apply the first DTX configuration or the second DTX configuration to the CSI report configuration, for example, for a periodic CSI-RS or a semi-persistent CSI-RS that may be configured by the base station to the wireless device in a CSI report configuration in a higher layer parameter *CSI-ReportConfig* that may be associated with a higher layer parameter *reportQuantity* comprising at least 'rank indicator (RI)'. The base station may not send (e.g., transmit), to the wireless device that may be configured and/or activated with the first DTX configuration, the periodic CSI-RS and/or the semi-persistent CSI-RS, for example, if the higher layer DTX parameter of the CSI report configuration indicates the first DTX configuration (e.g., if the higher layer DTX parameter is set to a first value (e.g., 0, 'first') to use/apply to the CSI report configuration, for example, during a non-active time/period/duration of the first DTX configuration. The base station may not send (e.g., transmit), to the wireless device that may be configured and/or activated with the second DTX configuration, the periodic CSI-RS and/or the semi-persistent CSI-RS, for example, if the higher layer DTX parameter of the CSI report configuration indicates the second DTX configuration (e.g., if the higher layer DTX parameter is set to a second value (e.g., 1, 'second') to use/apply to the CSI report configuration, for example, during a non-active time/period/duration of the second DTX configuration.

The one or more configuration parameters may comprise the higher layer parameter *CSI-ReportConfig.* The one or more configuration parameters may comprise the higher layer parameter *reportQuantity.* The one or more configuration parameters may comprise the higher layer DTX parameter. The one or more configuration parameters may indicate/-configure the periodic CSI-RS or the semi-persistent CSI-RS in the CSI report configuration in the higher layer parameter *CSI-ReportConfig* associated with the higher layer parameter *reportQuantity* comprising at least 'RI'.

A wireless device may receive, from a base station, one or more messages (e.g., RRC messages, RRC reconfiguration messages) that may comprise one or more configuration parameters. The base station may send (e.g., transmit) the one or more messages. The one or more configuration parameters may indicate/provide/comprise, by a first DRX higher layer parameter (e.g., *TRP-DRX Config, DRX-Config1*) of the one or more configuration parameters, a first DRX configuration of a cell (e.g., a serving cell, a non-serving cell, a candidate/target/neighbor cell). The one or more configuration parameters may indicate/provide/comprise, by a second DRX higher layer parameter (e.g., *TRP-DTX-Config2, DTX-Config2)* of the one or more configuration parameters, a second DRX configuration of the cell.

For a periodic or semi-persistent SRS resource set with a higher layer parameter *usage,* in a higher layer parameter *SRS-ResourceSet,* which may be set to '*codebook*', '*nonCodebook*' or '*antennaSwitching*', and not configured/indicated/provided with a higher layer parameter *applyIndicatedTCIState,* or a higher layer parameter *usage,* in a higher layer parameter *SRS-ResourceSet,* which may be set to 'beamManagement', a wireless device may be configured/indicated/provided by a higher layer DRX parameter (e.g., *apply-DRX, DRX indicator/index/selection,* and the like) to the SRS resource set to indicate whether the wireless device may use/apply the first DRX configuration or the second DRX configuration to the SRS resource set.

The wireless device, which may be configured and/or activated with the first DRX configuration or the second DRX configuration, may not be expected to send (e.g., transmit) a periodic SRS or a semi-persistent SRS for channel acquisition in an SRS resource set with the higher layer DRX parameter that may indicate the first DRX configuration or the second DRX configuration to the SRS resource set, respectively, for example, during a non-active time/period/duration/time of the first DRX configuration or a non-active time/period/duration/time of the second DRX configuration.

For a periodic or semi-persistent SRS resource set with a higher layer parameter *usage,* in a higher layer parameter *SRS-ResourceSet,* which may be set to 'codebook', 'nonCodebook' or 'antennαSwitching', and not configured/indicated/provided with a higher layer parameter *applyIndicatedTCIState,* or a higher layer parameter *usage,* in a higher layer parameter *SRS-ResourceSet,* which may be set to 'beamManagement', a wireless device may be configured/indicated/provided by a higher layer DRX parameter (e.g., *apply-DRX, DRX indicator/index/selection,* and the like) to the SRS resource set to indicate whether the wireless device may use/apply the first DRX configuration or the second DRX configuration to the SRS resource set.

The wireless device that may be configured and/or activated with the first DRX configuration may not send (e.g., transmit), for channel acquisition, a periodic SRS or a semi-persistent SRS in the SRS resource set, for example, if the higher layer DRX parameter indicates the first DRX configuration to use/apply to the SRS resource set (e.g., if the higher layer DRX parameter is set to a first value (e.g., 0, 'first'), for example, during a non-active time/period/duration/time of the first DRX configuration.

The wireless device that may be configured and/or activated with the second DRX configuration may not send (e.g., transmit), for channel acquisition, a periodic SRS or a semi-persistent SRS in the SRS resource set, for example, if the higher layer DRX parameter indicates the second DRX configuration to use/apply to the SRS resource set (e.g., if the higher layer DRX parameter is set to a second value (e.g., 1, 'second'), for example, during a non-active time/period/duration/time of the second DRX configuration.

For a periodic or semi-persistent SRS resource set with a higher layer parameter *usage,* in a higher layer parameter *SRS-ResourceSet,* which may be set to 'codebook', 'nonCodebook' or 'antennaSwitching', and not configured/indicated/provided, by a base station to a wireless device, with a higher layer parameter *applyIndicatedTCIState,* or a higher layer parameter *usage,* in a higher layer parameter *SRS-ResourceSet,* which may be set to 'beamManagement', the base station may configure/indicate/provide, to the wireless device, a higher layer DRX parameter (e.g., *αpply-DRX, DRX indicator/index/selection,* and the like) to the SRS resource set to indicate whether the base station and/or the wireless device may use/apply the first DRX configuration or the second DRX configuration to the SRS resource set.

The base station may not receive, from the wireless device that may be configured and/or activated with the first DRX configuration and/or for channel acquisition, a periodic SRS or a semi-persistent SRS in the SRS resource set, for example, if the higher layer DRX parameter indicates the first DRX configuration to use/apply to the SRS resource set (e.g., if the higher layer DRX parameter is set to a first value (e.g., 0, 'first'), for example, during a non-active time/period/duration/time of the first DRX configuration.

The base station may not receive, from the wireless device that may be configured and/or activated with the second DRX configuration and/or for channel acquisition, a periodic SRS or a semi-persistent SRS in the SRS resource set, for example, if the higher layer DRX parameter indicates the second DRX configuration to use/apply to the SRS resource set (e.g., if the higher layer DRX parameter is set to a second value (e.g., 1, 'second'), for example, during a non-active time/period/duration/time of the second DRX configuration.

The one or more configuration parameters may comprise the higher layer parameter *usage,* in the higher layer parameter *SRS-ResourceSet,* set to 'codebook', 'nonCodebook' or 'antennaSwitching'. The one or more configuration parameters may comprise the higher layer parameter *usage,* in the higher layer parameter *SRS-ResourceSet,* set to 'beamManagement'. The one or more configuration parameters may not comprise the higher layer parameter *applyIndicatedTCIState.* The one or more configuration parameters may comprise the higher layer DRX parameter.

For a periodic or semi-persistent SRS resource set with a higher layer parameter *usage,* in a higher layer parameter *SRS-ResourceSet,* which may be set to 'codebook', 'nonCodebook' or 'antennaSwitching', and a higher layer parameter *applyIndicatedTCIState,* the wireless device that may be configured and/or activated with the first DRX configuration may not send (e.g., transmit), for channel acquisition, a periodic SRS or a semi-persistent SRS in the SRS resource set, for example, if the higher layer parameter *applyIndicatedTCIState* is set to 'first', for example, during a non-active time/period/duration/time of the first DRX configuration. Additionally or alternatively, the wireless device that may be configured and/or activated with the second DRX configuration may not send (e.g., transmit), for channel acquisition, a periodic SRS or a semi-persistent SRS in the SRS resource set, for example, if the higher layer parameter *applyIndicatedTCIState* is set to 'second', for example, during a non-active time/period/duration/time of the second DRX configuration.

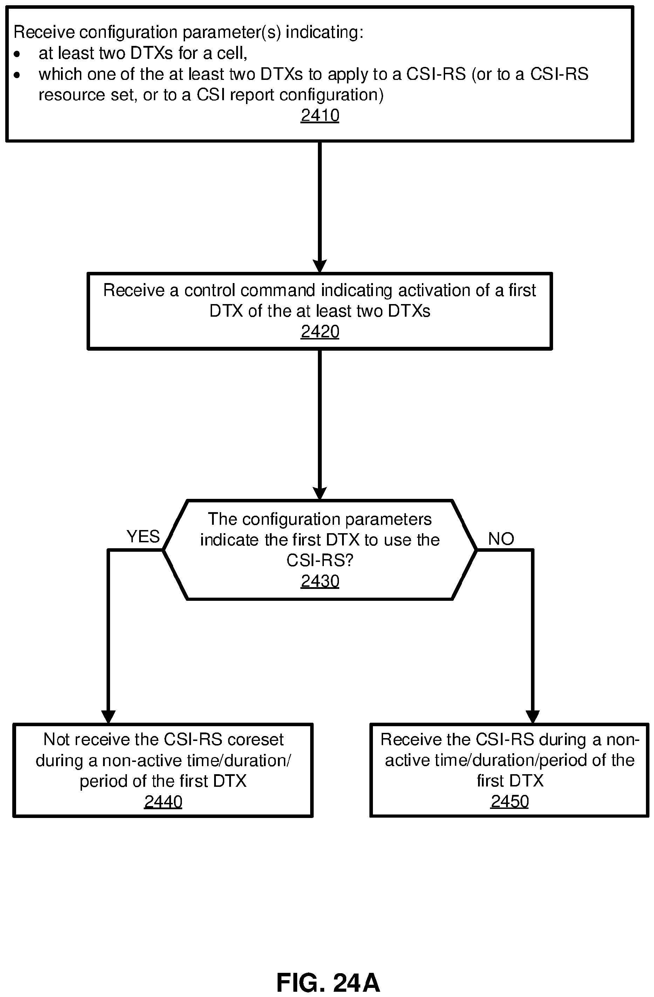

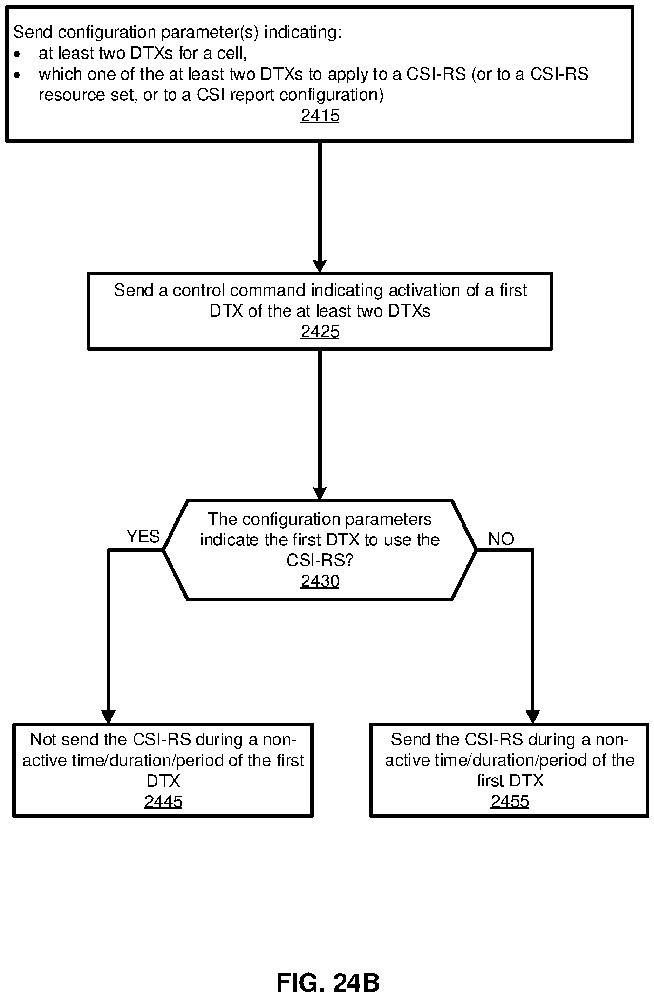

FIG. 24A shows an example method of energy saving for CSI-RS communication. FIG. 24B shows an example method of energy saving for CSI-RS communication. A wireless device may receive, for example, from a base station, one or more messages (e.g., RRC messages, RRC reconfiguration messages) (e.g., as shown at step 2410 in FIG. 24A). The base station may send (e.g., transmit) the one or more messages (e.g., as shown at step 2415 in FIG. 24B). The one or more messages may comprise one or more configuration parameters of a cell. The one or more configuration parameters may indicate at least two DTXs (or at least two DTX configurations) for/of the cell (e.g., receive configuration parameter(s) indicating at least two DTXs for a cell, as shown at step 2410 in FIG. 24A and/or send configuration parameter(s) indicating at least two DTXs for a cell, as shown at step 2415 in FIG. 24B).

The at least two DTXs of the cell may comprise a first DTX of the cell and a second DTX of the cell. For example, the one or more configuration parameters may indicate which DTX of the at least two DTXs of the cell to use/apply to/for a CSI-RS (e.g., a periodic CSI-RS or a semi-persistent CSI-RS) (e.g., receive configuration parameter(s) indicating which one of the at least two DTXs to use/apply to a CSI-RS (or to a CSI-RS resource set, or to a CSI report configuration, as shown at step 2410 in FIG. 24A and/or send configuration parameter(s) indicating which one of the at least two DTXs to use/apply to a CSI-RS (or to a CSI-RS resource set, or to a CSI report configuration, as shown at step 2415 in FIG. 24B) in (or configured in) a CSI report configuration (e.g., *CSI-ReportConfig*) with (or associated with) a report quantity parameter (e.g., *reportQuantity*) comprising/indicating at least 'RI'. The one or more configuration parameters may comprise the report quantity parameter of the CSI report configuration. The one or more configuration parameters may indicate the CSI-RS for/in the CSI report configuration. The one or more configuration parameters may comprise the one or more first DTX configuration parameters of the first DTX of the cell (e.g., the first DTX is configured). For example, a control command (e.g., Control Command 1720 in FIG. 17) may indicate activation of the first DTX (e.g., the first DTX is activated) (e.g., as shown at step 2420 in FIG. 24A and at step 2425 in FIG. 24B). The details of how the one or more configuration parameters indicate which DTX of the at least two DTXs of the cell to use/apply to/for a CSI-RS are described in FIG. 20 (e.g., using DTX Index/Indicator, Apply-DTX). For example, the one or more configuration parameters may indicate which one of the at least two DTXs of the cell to use/apply to/for the CSI-RS. For example, the one or more configuration parameters may indicate the first DTX of the at least two DTXs of the cell to use/apply to/for the CSI-RS (e.g., yes at step 2430 in FIG. 24A and FIG. 24B). For example, the one or more configuration parameters may indicate the second DTX of the at least two DTXs of the cell to use/apply to/for the CSI-RS (e.g., no at step 2430 in FIG. 24A and FIG. 24B). The details of how the one or more configuration parameters indicate which one of the at least two DTXs of the cell to use/apply to/for a CSI-RS are described in FIG. 20 (e.g., using DTX Index/Indicator, Apply-DTX).

The wireless device may not receive the one or more CSI-RSs indicated by (or in) the CSI report configuration during the non-active time/period/duration of the first DTX, for example, based on the CSI report configuration being associated with the first DTX. The wireless device may not receive the one or more CSI-RSs during the non-active time/period/duration of the first DTX (e.g., as shown at step 2440 in FIG. 24A), for example, based on the parameter of the CSI report configuration being set to the first value (e.g., yes at step 2430 in FIG. 24A). The base station may not send the one or more CSI-RSs during the non-active time/period/duration of the first DTX (e.g., as shown at step 2445 in FIG. 24B), for example, based on the parameter of the CSI report configuration being set to the first value (e.g., yes at step 2430 in FIG. 24B).

Reception of the one or more CSI-RSs may not be impacted by the first DTX of the cell (e.g., First DTX active time and First DTX non-active time in FIG. 23B) (e.g., no at step 2430 in FIG. 24A and FIG. 24B). The wireless device may receive the one or more CSI-RSs during a non-active time/period/duration of the first DTX (e.g., as shown at step 2450 in FIG. 24A). The base station may send the one or more CSI-RSs during a non-active time/period/duration of the first DTX (e.g., as shown at step 2455 in FIG. 24B).

The CSI-RS may overlap in time with an active time/duration/period of the first DTX of the cell. The CSI-RS may not overlap in time with a non-active time/duration/period of the first DTX of the cell. The CSI-RS may or may not overlap in time with an active time/duration/period of the second DTX of the cell. For example, the CSI-RS may be in/within an active time/duration/period of the first DTX of the cell. The CSI-RS may not be in/within a non-active time/duration/period of the first DTX of the cell. The CSI-RS may or may not be in/within an active time/duration/period of the second DTX of the cell.

The wireless device may receive, during the active time/duration/period of the first DTX, the CSI-RS. The wireless device may receive, during the active time/duration/period of the first DTX, the CSI-RS, for example, based on the one or more configuration parameters that may indicate the first DTX of the at least two DTXs of the cell to use/apply to/for the CSI-RS, for example, as described in FIG. 20 (e.g., DTX Index/Indicator, Apply-DTX). The base station may send (e.g., transmit), during the active time/duration/period of the first DTX, the CSI-RS, for example, based on the one or more configuration parameters that may indicate the first DTX of the at least two DTXs of the cell to use/apply to/for the CSI-RS. The wireless device may receive the CSI-RS, for example, based on (e.g., in response to) the CSI-RS that may overlap in time with the active time/duration/period of the first DTX. The base station may send (e.g., transmit) the CSI-RS, for example, based on (e.g., in response to) the CSI-RS that may overlap in time with the active time/duration/period of the first DTX. The wireless device may receive the CSI-RS, for example, based on (e.g., in response to) the CSI-RS that may not

68

overlap in time with the non-active time/duration/period of the first DTX. The base station may send (e.g., transmit) the CSI-RS, for example, based on (e.g., in response to) the CSI-RS that may not overlap in time with the non-active time/-duration/period of the first DTX.

The CSI-RS may overlap in time with a non-active time/duration/period of the first DTX of the cell. The CSI-RS may not overlap in time with an active time/duration/period of the first DTX of the cell. The CSI-RS may or may not overlap in time with an active time/duration/period of the second DTX of the cell. For example, the CSI-RS may be in/within a non-active time/duration/period of the first DTX of the cell. The CSI-RS may not be in/within an active time/duration/period of the first DTX of the cell. The CSI-RS may or may not be in/within an active time/duration/period of the second DTX of the cell.

The wireless device may not receive, during the non-active time/duration/period of the first DTX, the CSI-RS. The wireless device may not receive, during the non-active time/duration/period of the first DTX, the CSI-RS, for example, based on the one or more configuration parameters indicating the first DTX of the at least two DTXs of the cell to use/apply to/for the CSI-RS, for example, as described in FIG. 20 (e.g., DTX Index/Indicator, Apply-DTX). The base station may not send (e.g., transmit), during the non-active time/duration/period of the first DTX, the CSI-RS, for example, based on the one or more configuration parameters indicating the first DTX of the at least two DTXs of the cell to use/apply to/for the CSI-RS.

The wireless device may not receive the CSI-RS, for example, based on (e.g., in response to) the CSI-RS overlapping in time with the non-active time/duration/period of the first DTX. The base station may not send (e.g., transmit) the CSI-RS, for example, based on (e.g., in response to) the CSI-RS overlapping in time with the non-active time/-duration/period of the first DTX. The wireless device may not receive the CSI-RS, for example, based on (e.g., in response to) the CSI-RS not overlapping in time with the active time/duration/period of the first DTX. The base station may not send (e.g., transmit) the CSI-RS, for example, based on (e.g., in response to) the CSI-RS not overlapping in time with the active time/duration/period of the first DTX.

The CSI-RS may overlap in time with an active time/duration/period of the second DTX of the cell. The CSI-RS may not overlap in time with a non-active time/duration/period of the second DTX of the cell. The CSI-RS may or may not overlap in time with an active time/duration/period of the first DTX of the cell. For example, the CSI-RS may be in/within an active time/duration/period of the second DTX of the cell. The CSI-RS may not be in/within a non-active time/duration/-period of the second DTX of the cell. The CSI-RS may or may not be in/within an active time/duration/period of the first DTX of the cell. The wireless device may receive, during the active time/duration/period of the second DTX, the CSI-RS. The wireless device may receive, during the active time/duration/period of the second DTX, the CSI-RS, for example, based on the one or more configuration parameters indicating the second DTX of the at least two DTXs of the cell to use/apply to/for the CSI-RS, for example, as described in FIG. 20 (e.g., DTX Index/Indicator, Apply-DTX).

The base station may send (e.g., transmit), during the active time/duration/period of the second DTX, the CSI-RS, for example, based on the one or more configuration parameters indicating the second DTX of the at least two DTXs of the cell to use/apply to/for the CSI-RS. The wireless device may receive the CSI-RS, for example, based on (e.g., in response to) the CSI-RS overlapping in time with the active time/duration/period of the second DTX. The base station may send (e.g., transmit) the CSI-RS, for example, based on (e.g., in response to) the CSI-RS overlapping in time with the active time/duration/period of the second DTX. The wireless device may receive the CSI-RS, for example, based on (e.g., in response to) the CSI-RS not overlapping in time with the non-active time/duration/period of the second DTX. The base station may send (e.g., transmit) the CSI-RS, for example, based on (e.g., in response to) the CSI-RS not overlapping in time with the non-active time/duration/period of the second DTX.

The CSI-RS may overlap in time with a non-active time/duration/period of the second DTX of the cell. The CSI-RS may not overlap in time with an active time/duration/period of the second DTX of the cell. The CSI-RS may or may not overlap in time with an active time/duration/period of the first DTX of the cell. For example, the CSI-RS may be in/within a non-active time/duration/period of the second DTX of the cell. The CSI-RS may not be in/within an active time/duration/period of the second DTX of the cell. The CSI-RS may or may not be in/within an active time/duration/period of the first DTX of the cell.

The wireless device may not receive, during the non-active time/duration/period of the second DTX, the CSI-RS. The wireless device may not receive, during the non-active time/duration/period of the second DTX, the CSI-RS, for example, based on the one or more configuration parameters indicating the second DTX of the at least two DTXs of the cell to use/apply to/for the CSI-RS (discussed in FIG. 20 (e.g., DTX Index/Indicator, Apply-DTX)). The base station may not send (e.g., transmit), during the non-active time/duration/period of the second DTX, the CSI-RS, for example, based on the one or more configuration parameters indicating the second DTX of the at least two DTXs of the cell to use/apply to/for the CSI-RS. The wireless device may not receive the CSI-RS, for example, based on (e.g., in response to) the CSI-RS overlapping in time with the non-active time/duration/period of the second DTX. The base station may not send (e.g., transmit) the CSI-RS, for example, based on (e.g., in response to) the CSI-RS overlapping in time with the non-active time/duration/period of the second DTX. The wireless device may not receive the CSI-RS, for example, based on (e.g., in response to) the CSI-RS not overlapping in time with the active time/duration/period of the second DTX. The base station may not send (e.g., transmit) the CSI-RS, for example, based on (e.g., in response to) the CSI-RS not overlapping in time with the active time/duration/period of the second DTX.

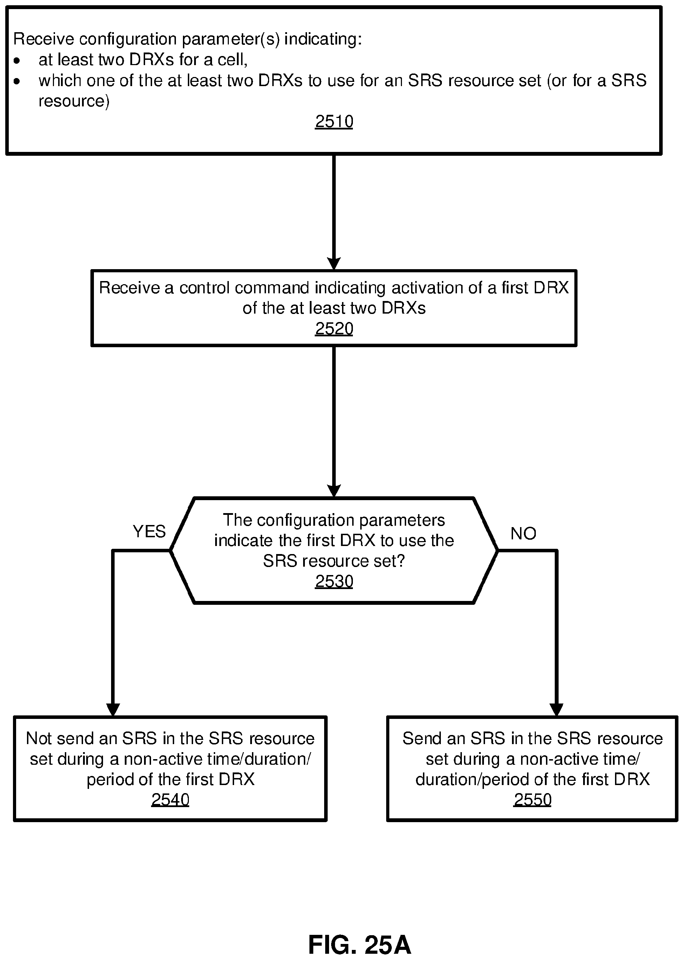

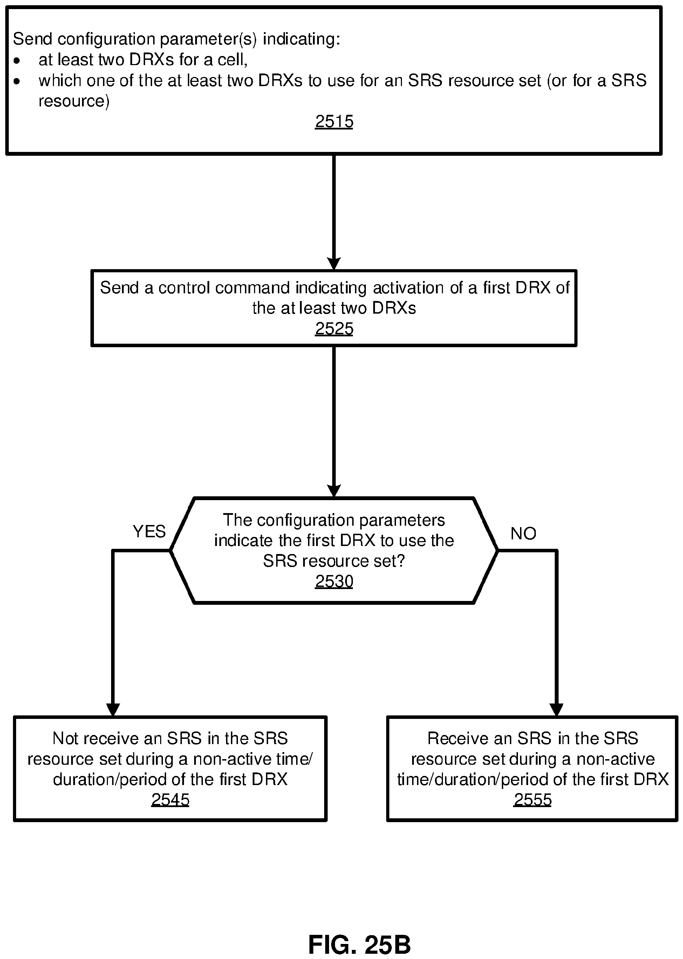

FIG. 25A shows an example method of energy saving for SRS communication. FIG. 25B shows an example method of energy saving for SRS communication. At step 2510 in FIG. 25A, a wireless device may receive, for example, from a base station, one or more messages (e.g., RRC messages, RRC reconfiguration messages). The base station may send (e.g., transmit) the one or more messages. (At step 2515 in FIG. 25B, a base station may send (e.g., transmit), for example, to a wireless device, one or more messages (e.g., RRC messages, RRC reconfiguration messages). The wireless device may receive the one or more messages.). The one or more messages may comprise one or more configuration parameters of a cell. The one or more configuration parameters may indicate at least two DRXs (or at least two DRX configurations) for/of the cell. The at least two DRXs of the cell may comprise a first DRX of the cell and a second DRX of the cell. For example, the one or more configuration parameters may indicate which DRX of the at least two DRXs of the cell to use/apply for/to an SRS resource set (e.g., a periodic SRS resource set or a semi-persistent SRS resource set). For example, the one or more configuration parameters may comprise a usage parameter, of the SRS resource set, set to '*codebook*', '*nonCodebook*' or '*antennaSwitching*'. The one or more configuration parameters may not comprise an apply-indicated-TCI-state parameter for/of the SRS resource set. For example, the one or more configuration parameters may comprise a usage parameter, of the SRS resource set, set to *'beamManagement'*. The details of how the one or more configuration parameters indicate which DRX of the at least two DRXs of the cell to use/apply for/to an SRS resource set may be described in FIG. 21 (e.g., using DRX Index/Indicator, Apply-DRX). For example, a first value (e.g., DRX index/indicator = 0, Apply-DRX = 'first' in FIG. 21) of the parameter may indicate the wireless device may use/apply the first DRX of the at least two DRXs of the cell for/to the SRS resource set (e.g., yes at step 2530 in FIG. 25A and FIG. 25B). The one or more configuration parameters may indicate which one of the at least two DRXs of the cell to use/apply for/to the SRS resource set. For example, at step 2530, the one or more configuration parameters may indicate the first DRX of the at least two DRXs of the cell to use/apply for/to the SRS resource set. For example, the one or more configuration parameters may indicate the second DRX of the at least two DRXs of the cell to use/apply for/to the SRS resource set. The details of how the one or more configuration parameters indicate which one of the at least two DRXs of the cell to use/apply for/to an SRS resource set may be described in FIG. 21 (e.g., using DRX Index/Indicator, Apply-DRX). The SRS resource set may comprise one or more SRS resources.

The one or more configuration parameters may comprise the one or more first DRX configuration parameters of the DRX of the cell (e.g., the first DRX is configured). For example, the control command (e.g., Control command 1720 as shown as shown in FIG. 17) may indicate activation of the first DRX (e.g., as shown at step 2520 in FIG. 25A and at step 2525 in FIG. 25B).

An SRS resource of the one or more SRS resources in the SRS resource set may overlap in time with an active time/duration/period of the first DRX of the cell. The SRS resource may not overlap in time with a non-active time/duration/period of the first DRX of the cell. The SRS resource may or may not overlap in time with an active time/duration/period of the second DRX of the cell. For example, the SRS resource may be in/within an active time/duration/period of the first DRX of the cell. The SRS resource may not be in/within a non-active time/duration/period of the first DRX of the cell. The SRS resource may or may not be in/within an active time/duration/period of the second DRX of the cell.

The wireless device may send (e.g., transmit), during the active time/duration/period of the first DRX, an SRS via the SRS resource. The wireless device may send (e.g., transmit), during the active time/duration/period of the first DRX, the SRS via the SRS resource, for example, based on the one or more configuration parameters indicating the first DRX of the at least two DRXs of the cell to use/apply for/to the SRS resource set comprising the SRS resource, for example, as described in FIG. 21 (e.g., DRX Index/Indicator, Apply-DRX, ApplyIndicatedTCI-State = 'first'). The base station may receive, during the active time/duration/period of the first DRX, the SRS via the SRS resource, for example, based on the one or more configuration parameters indicating the first DRX of the at least two DRXs of the cell to use/apply to/for the SRS resource set comprising the SRS resource.

The wireless device may send (e.g., transmit) the SRS via the SRS resource, for example, based on (e.g., in response to) the SRS resource overlapping in time with the active time/duration/period of the first DRX. The base station may receive the SRS via SRS resource, for example, based on (e.g., in response to) the SRS resource overlapping in time with the active time/duration/period of the first DRX.

The wireless device may send (e.g., transmit) the SRS via the SRS resource, for example, based on (e.g., in response to) the SRS resource not overlapping in time with the non-active time/duration/period of the first DRX. The base station may receive the SRS via the SRS resource, for example, based on (e.g., in response to) the SRS resource not overlapping in time with the non-active time/duration/period of the first DRX.

An SRS resource of the one or more SRS resources in the SRS resource set may overlap in time with a non-active time/duration/period of the first DRX of the cell. The SRS resource may not overlap in time with an active time/duration/period of the first DRX of the cell. The SRS resource may or may not overlap in time with an active time/duration/period of the second DRX of the cell. For example, the SRS resource may be in/within a non-active time/duration/period of the first DRX of the cell. The SRS resource may not be in/within an active time/duration/period of the first DRX of the cell. The SRS resource may or may not be in/within an active time/duration/period of the second DRX of the cell.

The wireless device may not send (e.g., transmit), during the non-active time/duration/period of the first DRX, an SRS via the SRS resource. The wireless device may not send (e.g., transmit), during the non-active time/duration/period of the first DRX, an SRS via the SRS resource (e.g., as shown at step 2540 in FIG. 25A), for example, based on, yes at step 2530, the one or more configuration parameters indicating the first DRX of the at least two DRXs of the cell to use/apply to/for the SRS resource set comprising the SRS resource (e.g., as described in FIG. 21 (e.g., DRX Index/Indicator, Apply-DRX, ApplyIndicatedTCIState = 'first')). The base station may not receive, during the non-active time/duration/period of the first DRX, an SRS via the SRS resource (e.g., as shown at step 2545 in FIG. 25B), for example, based on, yes at step 2530, the one or more configuration parameters indicating the first DRX of the at least two DRXs of the cell to use/apply for/to the SRS resource set comprising the SRS resource.

Transmission of the one or more SRSs via the one or more SRS resources may not be impacted by the first DRX of the cell (e.g., First DRX active time and First DRX non-active time in FIG. 23B). The wireless device may send (e.g., transmit), via the one or more SRS resources, the one or more SRSs during a non-active time/period/duration of the first DRX (e.g., as shown at step 2550 in FIG. 25A). The base station may receive, via the one or more SRS resources, the one or more SRSs during a non-active time/period/duration of the first DRX (e.g., as shown at step 2555 in FIG. 25B). The wireless device may send (e.g., transmit), via the one or more SRS resources, the one or more SRSs, regardless of the one or more SRS resources overlapping in time with an active or a non-active time/period/duration of the first DRX (e.g., UL TX 1, UL TX 2, UL TX 3, and UL TX 4 in FIG. 23B).

The wireless device may not send (e.g., transmit) an SRS via the SRS resource, for example, based on (e.g., in response to) the SRS resource overlapping in time with the non-active time/duration/period of the first DRX. The base station may not receive an SRS via the SRS resource, for example, based on (e.g., in response to) the SRS resource overlapping in time with the non-active time/duration/period of the first DRX. The wireless device may not send (e.g., transmit) an SRS via the SRS resource, for example, based on (e.g., in response to) the SRS resource not overlapping in time with the active time/duration/period of the first DRX. The base station may not receive an SRS via the SRS resource, for example, based on (e.g., in response to) the SRS resource not overlapping in time with the active time/duration/period of the first DRX.

An SRS resource of the one or more SRS resources in the SRS resource set may overlap in time with an active time/duration/period of the second DRX of the cell. The SRS resource may not overlap in time with a non-active time/duration/period of the second DRX of the cell. The SRS resource may or may not overlap in time with an active time/duration/period of the first DRX of the cell. For example, the SRS resource may be in/within an active time/duration/period of the second DRX of the cell. The SRS resource may not be in/within a non-active time/duration/period of the second DRX of the cell. The SRS resource may or may not be in/within an active time/duration/period of the first DRX of the cell.

The wireless device may send (e.g., transmit), during the active time/duration/period of the second DRX, an SRS via the SRS resource. At step 2550, the wireless device may send (e.g., transmit), during the active time/duration/period of the second DRX, the SRS via the SRS resource, for example, based on the one or more configuration parameters indicating the second DRX of the at least two DRXs of the cell to use/apply for/to the SRS resource set comprising the SRS resource (e.g., as described in FIG. 21 (e.g., DRX Index/Indicator, Apply-DRX, ApplyIndicatedTCI-State = 'second')) (e.g., NO at step 2530). The base station may receive, during the active time/duration/period of the second DRX, the SRS via the SRS resource, for example, based on the one or more configuration parameters indicating the second DRX of the at least two DRXs of the cell to use/apply to/for the SRS resource set comprising the SRS resource.

The wireless device may send (e.g., transmit) the SRS via the SRS resource, for example, based on (e.g., in response to) the SRS resource overlapping in time with the active time/duration/period of the second DRX. The base station may receive the SRS via SRS resource, for example, based on (e.g., in response to) the SRS resource overlapping in time with the active time/duration/period of the second DRX.

The wireless device may send (e.g., transmit) the SRS via the SRS resource, for example, based on (e.g., in response to) the SRS resource not overlapping in time with the non-active time/duration/period of the second DRX. The base station may receive the SRS via the SRS resource, for example, based on (e.g., in response to) the SRS resource not overlapping in time with the non-active time/duration/period of the second DRX.

An SRS resource of the one or more SRS resources in the SRS resource set may overlap in time with a non-active time/duration/period of the second DRX of the cell. The SRS resource may not overlap in time with an active time/duration/period of the second DRX of the cell. The SRS resource may or may not overlap in time with an active time/duration/period of the first DRX of the cell. For example, the SRS resource may be in/within a non-active time/duration/period of the second DRX of the cell. The SRS resource may not be in/within an active time/duration/period of the second DRX of the cell. The SRS resource may or may not be in/within an active time/duration/period of the first DRX of the cell.

The wireless device may not send (e.g., transmit), during the non-active time/duration/period of the second DRX, an SRS via the SRS resource. The wireless device may not send (e.g., transmit), during the non-active time/duration/per-

**EP 4 531 321 A1**

iod of the second DRX, an SRS via the SRS resource, for example, based on the one or more configuration parameters indicating the second DRX of the at least two DRXs of the cell to use/apply to/for the SRS resource set comprising the SRS resource (e.g., as described in FIG. 21 (e.g., DRX Index/Indicator, Apply-DRX, ApplyIndicatedTCI-State = 'second')). The base station may not receive, during the non-active time/duration/period of the second DRX, an SRS via the SRS resource, for example, based on the one or more configuration parameters indicating the second DRX of the at least two DRXs of the cell to use/apply to/for the SRS resource set comprising the SRS resource.

The wireless device may not send (e.g., transmit) an SRS via the SRS resource, for example, based on (e.g., in response to) the SRS resource overlapping in time with the non-active time/duration/period of the second DRX. The base station may not receive an SRS via the SRS resource, for example, based on (e.g., in response to) the SRS resource overlapping in time with the non-active time/duration/period of the second DRX.

The wireless device may not send (e.g., transmit) an SRS via the SRS resource, for example, based on (e.g., in response to) the SRS resource not overlapping in time with the active time/duration/period of the second DRX. The base station may not receive an SRS via the SRS resource, for example, based on (e.g., in response to) the SRS resource not overlapping in time with the active time/duration/period of the second DRX.

Resource elements may be allocated, for example, based on a device receiving one or more transmission occasions (e.g., one or more PDSCH transmission occasions). The wireless device may receive a single transmission occasion (e.g., a single PDSCH transmission occasion) of a transport block with each TCI state associated with (e.g., of/for) a non-overlapping frequency domain resource allocation, for example, if two TCI states or two joint/downlink TCI states are indicated in DCI and comprise a repetition scheme parameter (e.g., a higher layer parameter *repetitionScheme* set to 'fdmSchemeA'). The wireless device may receive two transmission occasions (e.g., two PDSCH transmission occasions) of the (same) transport block with each TCI state associated with (e.g., of/for) a transmission occasion (e.g., a PDSCH transmission occasion) which has non-overlapping frequency domain resource allocation with respect to the other transmission occasion (e.g., the other PDSCH transmission occasion), for example, if the two TCI states or the two joint/downlink TCI states are indicated in the DCI and comprise a repetition scheme parameter (e.g., a higher layer parameter *repetitionScheme* set to 'fdmSchemeB'). The wireless device may receive, within a slot, two transmission occasions (e.g., two PDSCH transmission occasions) of the (same) transport block with each TCI state associated with (e.g., of/for) a transmission occasion (e.g., a PDSCH transmission occasion which has non-overlapping time domain resource allocation with respect to the other transmission occasion (e.g., the other PDSCH transmission occasion), for example, if the two TCI states or the two joint/downlink TCI states are indicated in the DCI and comprise a repetition scheme parameter (e.g., a higher layer parameter *repetitionScheme* set to 'tdmSchemeA').

The resource elements may be allocated based on one or more conditions. For example, the resource elements may be allocated, for example, if the wireless device is configured by a repetition scheme parameter (e.g., a higher layer parameter *repetitionScheme* set to one of 'fdmSchemeA', 'fdmSchemeB', 'tdmSchemeA') and the wireless device is indicated with DM-RS port(s) within one CDM group in/by an antenna port field in DCI (e.g., *'Antenna Port(s)'* field) scheduling/activating a transport block (e.g., or a PDSCH reception or a downlink reception).

The resource elements may be allocated, for example, if one or more of the following additional conditions are present. The resource elements may be allocated, for example, if the wireless device is indicated with two TCI states in a codepoint of TCI field in the DCI (e.g., *'Transmission Configuration Indication'* field) if the wireless device is not configured/provided/indicated with a downlink-or-joint-TCI-state-list parameter (e.g., a higher layer parameter *dl-Or-JointTCI-StateList*). The resource elements may be allocated, for example, if the wireless device is indicated with two joint/downlink TCI states in a codepoint of TCI selection field in the DCI (e.g., *'TCI selection'* field) if the wireless device is configured with a downlink-or-joint-TCI-state-list parameter (e.g., a higher layer parameter *dl-OrJointTCI-St$\alpha$teList*). The resource elements may be allocated, for example, if the wireless device is configured/provided/indicated with a downlink-or-joint-TCI-state-list parameter (e.g., a higher layer parameter *dl-OrJointTCI-StateList*) and is not configured/indicated/provided with a TCI-selection-present-in-DCI parameter (e.g., a higher layer parameter *tciSelection-PresentInDCI*).

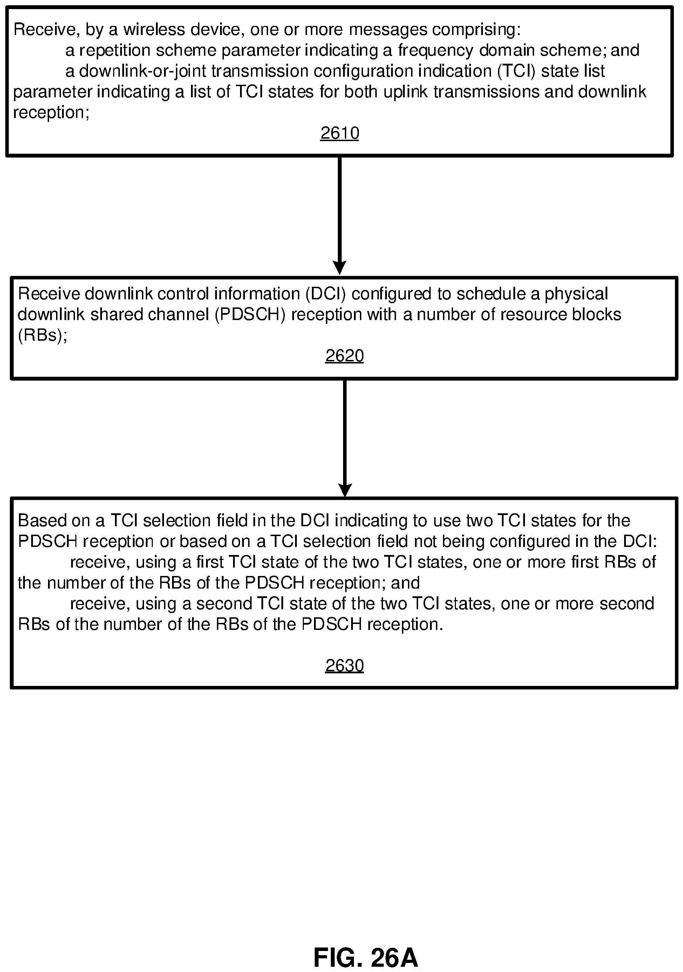

FIG. 26A shows an example method of scheduling communications using at least two TCI states. A wireless device may perform one or more operations based on one or more conditions. For example, the wireless device may perform the one or more operations based on a first condition of the wireless device being configured/indicated/provided, by a base station, by/with a higher layer parameter *repetitionScheme* set to 'fdmSchemeA' or 'fdmSchemeB' (e.g., receiving, by a wireless device, one or more messages comprising a repetition scheme parameter indicating a time domain scheme or a frequency domain scheme, as shown at step 2610 in FIG. 26A), and based on a second condition of the wireless device of the wireless device being indicated, by the base station, with DM-RS port(s) within one CDM group by/in *'Antenna Port(s)'* field in DCI scheduling/activating a PDSCH reception (e.g., receiving DCI configured to schedule a PDSCH reception, as shown at step 2620 in FIG. 26A). Additionally, the wireless device may perform the one or more operations based on one or more third conditions such as:

the wireless device being indicated with two TCI states in a codepoint of *'Transmission Configuration Indication'* field in the DCI, for example, if the wireless device is not configured/indicated/provided with a higher layer parameter *dl-*

*OrJointTCI-StateList,* or

the wireless device being indicated with two joint/downlink TCI states in a codepoint of *'TCI selection'* field in the DCI (e.g., based on a TCI selection field in the DCI indicating to use two TCI states for the PDSCH reception, as shown at step 2630 in FIG. 26A), for example, if the wireless device is configured/indicated/provided with a higher layer parameter *dl-OrJointTCI-StateList* (e.g., receiving, by a wireless device, one or more messages comprising a downlink-or-joint TCI state list parameter, as shown at step 2610 in FIG. 26A) and with a higher layer parameter *tciSelection-PresentInDCI,* or

the wireless device being configured/indicated/provided with a higher layer parameter *dl-OrJointTCI-StateList* (e.g., receiving , by a wireless device, one or more messages comprising a downlink-or-joint TCI state list parameter, as shown at step 2610 in FIG. 26A) and being not configured/indicated/provided with a higher layer parameter *tciSelection-PresentInDCI* (e.g., based on a TCI selection field not being configured in the DCI, as shown at step 2630 in FIG. 26A).

As described herein, a wireless device may be configured with a list of TCI states (e.g., up to 128 TCI-State configurations) within/by a downlink-or-joint-TCI-state-list parameter (e.g., *dl-OrJointTCI-StαteList*) in *PDSCH-Config.* A TCI state in the list of TCI states may, for example, provide/indicate a reference signal for a quasi co-location for DM-RS of a PDSCH, DM-RS of a PDCCH in a BWP/cell, and/or a CSI-RS. A TCI state in the list of TCI states may, for example, provide/indicate a reference signal for determining uplink transmission spatial filter for a dynamic-grant PUSCH, a configured-grant based PUSCH, a PUCCH resource in a BWP/cell, and/or, an SRS. (e.g., receiving, by a wireless device, one or more messages comprising a downlink-or-joint TCI state list parameter indicating a list of TCI states for both uplink transmissions and downlink reception, as shown at step 2610 in FIG. 26A).

Based on the first condition, the second condition, and the one or more third conditions being satisfied, the first $ceil\left(\frac{n_{PRB}}{2}\right)$ physical resource blocks (PRBs) may be assigned to the first TCI state of the two TCI states or to the first joint/downlink TCI state of the two joint/downlink TCI states (e.g., receive, using a first TCI state of the two TCI states, one or more first RBs of the number of the RBs of the PDSCH reception, as shown at step 2630 in FIG. 26A) and the remaining $floor\left(\frac{n_{PRB}}{2}\right)$ PRBs may be assigned to the second TCI state of the two TCI states or to the second joint/downlink TCI state of the two joint/downlink TCI states (e.g., receive, using a second TCI state of the two TCI states, one or more second RBs of the number of the RBs of the PDSCH reception, as shown at step 2630 in FIG. 26A), wherein $n_{PRB}$ is a total quantity (e.g., number) of allocated PRBs for the wireless device or for the PDSCH reception (e.g., a PDSCH reception with a number of resource blocks (RBs)), as shown at step 2620 in FIG. 26A), for example, if a precoding granularity (e.g., $P'_{BWP,i}$ ) in the frequency domain is determined, by the wireless device, as 'wideband'.

The wireless device may receive the first $ceil\left(\frac{n_{PRB}}{2}\right)$ PRBs of the PDSCH reception, for example, based on the first TCI state or the first joint/downlink TCI state (e.g., receive, using a first TCI state of the two TCI states, one or more first RBs of the number of the RBs of the PDSCH reception, as shown at step 2630 in FIG. 26A). The wireless device may receive the remaining $floor\left(\frac{n_{PRB}}{2}\right)$ PRBs of the PDSCH reception, for example, based on the second TCI state or the second joint/downlink TCI state (e.g., receive, using a second TCI state of the two TCI states, one or more second RBs of the number of the RBs of the PDSCH reception, as shown at step 2630 in FIG. 26A). PRB 0, PRB 1, ..., PRB 5 may be assigned to the first TCI state or to the first joint/downlink TCI state, and PRB 6, PRB 7, ..., PRB 10 may be assigned to the second TCI state or to the second joint/downlink TCI state, for example, if PRB 0, PRB 1, ..., and PRB 10 are allocated for the wireless device or for the PDSCH reception. *ceil* (*x*) may return the smallest integer value that is bigger than or equal to *x*. *floor* (*x*) may return the greatest integer value that is less than or equal to x.

Based on the first condition, the second condition, and the one or more third conditions being satisfied, even precoding resource block groups (PRGs) (e.g., one or more first RBs of the number of the RBs of the PDSCH reception, as shown at step 2630 in FIG. 26A) within the allocated frequency domain resources of the PDSCH reception (e.g., a PDSCH reception with a number of resource blocks (RBs)), as shown at step 2620 in FIG. 26A) may be assigned to the first TCI state or to the first joint/downlink TCI state (e.g., receive, using a first TCI state of the two TCI states, one or more first RBs of the number of the RBs of the PDSCH reception, as shown at step 2630 in FIG. 26A), and odd PRGs (e.g., one or more second RBs of the number of the RBs of the PDSCH reception, as shown at step 2630 in FIG. 26A) within the allocated frequency domain resources of the PDSCH reception (e.g., a PDSCH reception with a number of resource blocks (RBs)), as shown at step 2620 in FIG. 26A) may be assigned to the second TCI state or to the second joint/downlink TCI state (e.g.,

receive, using a second TCI state of the two TCI states, one or more second RBs of the number of the RBs of the PDSCH reception, as shown at step 2630 in FIG. 26A), for example, if a precoding granularity (e.g., $P'_{BWP.i}$ ) in the frequency domain is determined, by the wireless device, as one of the values among {2, 4}.

The PRGs may be numbered continuously in increasing order with the first/starting PRG index equal to 0. The wireless device may receive the even PRGs of the PDSCH reception, for example, based on the first TCI state or the first joint/downlink TCI state. The wireless device may receive the odd PRGs of the PDSCH reception, for example, based on the second TCI state or the second joint/downlink TCI state. PRG 0, PRG 2, ... , PRG 10 may be assigned to the first TCI state or to the first joint/downlink TCI state, and PRG 1, PRG 3, .. , PRG 9 may be assigned to the second TCI state or to the second joint/downlink TCI state, for example, if PRG 0, PRG 1, ..., and PRG 10 are allocated (or allocated frequency domain resources) for the wireless device or for the PDSCH reception.

The wireless device may receive more than two transmission layers (e.g., PDSCH transmission layers) for each transmission occasion (e.g., PDSCH transmission occasion) of the PDSCH reception. The wireless device may not be expected to receive more than two transmission layers (e.g., PDSCH transmission layers) for each transmission occasion (e.g., PDSCH transmission occasion) of the PDSCH reception.

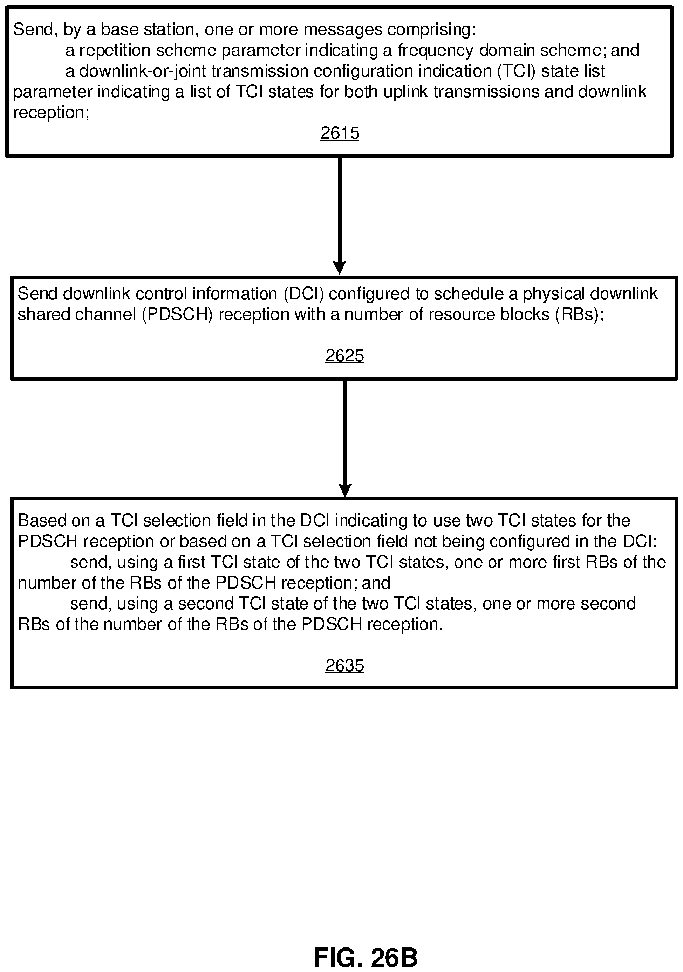

FIG. 26B shows an example method of scheduling communications using at least two TCI states. A base station may send (e.g., transmit), to a wireless device, one or more RRC messages comprising one or more configuration parameters. The base station may perform one or more operations based on one or more conditions. For example, the base station may perform the one or more operations based on a first condition of the one or more configuration parameters comprising a higher layer parameter *repetitionScheme* set to 'fdmSchemeA' or 'fdmSchemeB' (e.g., sending, by a base station, one or more messages comprising a repetition scheme parameter indicating a time domain scheme or a frequency domain scheme, as shown at step 2615 in FIG. 26B), based on a second condition of the base station sending (e.g., transmitting), to the wireless device, DCI scheduling/activating a PDSCH reception (e.g., sending DCI configured to schedule a PDSCH reception, as shown at step 2625 in FIG. 26B), and based on a third condition of '*Antenna Port(s)*' field in the DCI indicating DM-RS port(s) within one CDM group. Additionally, the base station may perform the one or more operations based on one or more fourth conditions such as:

a codepoint of *'Transmission Configuration Indication'* field in the DCI indicating two TCI states if the one or more configuration parameters do not comprise a higher layer parameter *dl-OrJointTCI-StateList,* or

a codepoint of *'TCI selection'* field in the DCI indicating two joint/downlink TCI states (e.g., based on a TCI selection field in the DCI indicating to use two TCI states for the PDSCH reception, as shown at step 2635 in FIG. 26B), for example, if the one or more configuration parameters comprise a higher layer parameter *dl-OrJointTCI-StateList* (e.g., sending, by a base station, one or more messages comprising a downlink-or-joint TCI state list parameter, as shown at step 2615 in FIG. 26B) and a higher layer parameter *tciSelection-PresentInDCI,* or

the one or more configuration parameters comprising a higher layer parameter *dl-OrJointTCI-StateList* (e.g., sending, by a base station, one or more messages comprising a downlink-or-joint TCI state list parameter, as shown at step 2615 in FIG. 26B) and not comprising a higher layer parameter *tciSelection-PresentInDCI* (e.g., based on a TCI selection field not being configured in the DCI, as shown at step 2635 in FIG. 26B).

As described herein, a wireless device may be configured with a list of TCI states (e.g., up to 128 TCI-State configurations) within/by a downlink-or-joint-TCI-state-list parameter (e.g., *dl-OrJointTCI-StateList*) in *PDSCH-Config.* A TCI state in the list of TCI states may, for example, provide/indicate a reference signal for a quasi co-location for DM-RS of a PDSCH, DM-RS of a PDCCH in a BWP/cell, and/or a CSI-RS. A TCI state in the list of TCI states may, for example, provide/indicate a reference signal for determining uplink transmission spatial filter for a dynamic-grant PUSCH, a configured-grant based PUSCH, a PUCCH resource in a BWP/cell, and/or, an SRS. (e.g., one or more messages comprising a downlink-or-joint TCI state list parameter indicating a list of TCI states for both uplink transmissions and downlink reception, as shown at step 2615 in FIG. 26B).

Based on the first condition, the second condition, the third condition, and the one or more fourth conditions being satisfied, the base station may perform the one or more operations. The one or more operations may comprise determining a precoding granularity (e.g., $P'_{BWP.i}$ ) in the frequency domain as 'wideband'. The first $ceil\left(\frac{n_{PRB}}{2}\right)$ physical resource blocks (PRBs) may be assigned to the first TCI state of the two TCI states or to the first joint/downlink TCI state of the two joint/downlink TCI states (e.g., receive, using a first TCI state of the two TCI states, one or more first RBs of the number of the RBs of the PDSCH reception, as shown at step 2635 in FIG. 26B) and the remaining $floor\left(\frac{n_{PRB}}{2}\right)$ PRBs may be assigned to the second TCI state of the two TCI states or to the second joint/downlink TCI state of the two joint/downlink TCI states (e.g., receive, using a second TCI state of the two TCI states, one or more second RBs of the number of the RBs of the PDSCH reception, as shown at step 2635 in FIG. 26B), where $n_{PRB}$ is a total quantity (e.g., number) of allocated PRBs for the wireless device or for the PDSCH reception by the base station (e.g., a PDSCH reception with a number of resource blocks (RBs)), as shown at step 2625 in FIG. 26B), for example, if the precoding granularity (e.g., $P'_{BWP,i}$) in the frequency domain is determined, by the base station, as 'wideband'.

The base station may send (e.g., transmit) the first $ceil\left(\frac{n_{PRB}}{2}\right)$ PRBs of the PDSCH reception, for example, based on the first TCI state or the first joint/downlink TCI state (e.g., send, using a first TCI state of the two TCI states, one or more first RBs of the number of the RBs of the PDSCH reception, as shown at step 2635 in FIG. 26B). The base station may send (e.g., transmit) the remaining $floor\left(\frac{n_{PRB}}{2}\right)$ PRBs of the PDSCH reception based on the second TCI state or the second joint/downlink TCI state (e.g., send, using a second TCI state of the two TCI states, one or more second RBs of the number of the RBs of the PDSCH reception, as shown at step 2635 in FIG. 26B). PRB 0, PRB 1, ..., PRB 5 may be assigned to the first TCI state or to the first joint/downlink TCI state, and PRB 6, PRB 7, ..., PRB 10 may be assigned to the second TCI state or to the second joint/downlink TCI state, for example, for example, if PRB 0, PRB 1, ..., and PRB 10 are allocated for the wireless device (or for the PDSCH reception) by the base station.

Based on the first condition, the second condition, the third condition, and the one or more fourth conditions being satisfied, the base station may perform the one or more operations. The one or more operations may comprise determining a precoding granularity (e.g., $P'_{BWP,i}$) in the frequency domain as one of the values among {2, 4}. Even precoding resource block groups (PRGs) (e.g., one or more first RBs of the number of the RBs of the PDSCH reception, as shown at step 2635 in FIG. 26B) within the allocated frequency domain resources of the PDSCH reception (e.g., a PDSCH reception with a number of resource blocks (RBs)), as shown at step 2625 in FIG. 26B) by the base station may be assigned to the first TCI state or to the first joint/downlink TCI state (e.g., receive, using a first TCI state of the two TCI states, one or more first RBs of the number of the RBs of the PDSCH reception, as shown at step 2635 in FIG. 26B), and odd PRGs (e.g., one or more second RBs of the number of the RBs of the PDSCH reception, as shown at step 2635 in FIG. 26B) within the allocated frequency domain resources of the PDSCH reception by the base station (e.g., a PDSCH reception with a number of resource blocks (RBs)), as shown at step 2625 in FIG. 26B) may be assigned to the second TCI state or to the second joint/downlink TCI state (e.g., receive, using a second TCI state of the two TCI states, one or more second RBs of the number of the RBs of the PDSCH reception, as shown at step 2635 in FIG. 26B), for example, if a precoding granularity (e.g., $P'_{BWP,i}$) in the frequency domain is determined, by the base station, as one of the values among {2, 4}.

The PRGs may be numbered continuously in increasing order with the first/starting PRG index equal to 0. The base station may send (e.g., transmit) the even PRGs of the PDSCH reception based on the first TCI state or the first joint/downlink TCI state. The w base station may send (e.g., transmit) the odd PRGs of the PDSCH reception based on the second TCI state or the second joint/downlink TCI state. PRG 0, PRG 2, ..., PRG 10 may be assigned to the first TCI state or to the first joint/downlink TCI state, and PRG 1, PRG 3, .. , PRG 9 may be assigned to the second TCI state or to the second joint/downlink TCI state, for example, for example, if PRG 0, PRG 1, ..., and PRG 10 are allocated (or allocated frequency domain resources) for the wireless device (or for the PDSCH reception) by the base station.

The base station may send (e.g., transmit) more than two PDSCH transmission layers for each PDSCH transmission occasion of the PDSCH reception. The base station may not be expected to send (e.g., transmit) more than two PDSCH transmission layers for each PDSCH transmission occasion of the PDSCH reception.

The one or more configuration parameters may comprise a repetition scheme parameter (e.g., a higher layer parameter *repetitionScheme* set to 'fdmSchemeA' or 'fdmSchemeB'). Mapping to resource elements (e.g., for a PDSCH transmission occasion of the PDSCH reception) may be determined, for example, based on the assigned PRBs associated with (e.g., of/for corresponding) TCI state of a transmission occasion (e.g., a PDSCH transmission occasion). The mapping may be determined by a wireless device. The wireless device may receive (e.g., in/via the PDSCH transmission occasion) a message (e.g., the PDSCH reception) based on the mapped resource elements. The wireless device may expect a quantity of code blocks (e.g., at most two code blocks) per transmission (e.g., per PDSCH transmission). The wireless device may expect a quantity of code blocks (e.g., two code blocks) per transmission (e.g., per PDSCH transmission), for example, if a single transmission layer (e.g., a single PDSCH transmission layer) is scheduled. The wireless device may expect a single code block per transmission (e.g., per PDSCH transmission), for example, if two transmission layers (e.g., two PDSCH transmission layers) are scheduled.

The mapping may be based on one or more conditions. For example, the mapping may be performed, for example, if the wireless device is configured/indicated/provided, by a base station, with a repetition scheme parameter (e.g., a higher layer parameter *repetitionScheme* set to 'fdmSchemeB') and the wireless device is indicated, by the base station, with DM-RS port(s) within one CDM group in/by an antenna port field in DCI (e.g., *'Antenna Port(s)'* field) scheduling/activating a PDSCH reception.

The mapping may be performed, for example, if one or more of the following additional conditions are present. The mapping may be performed, for example, if the wireless device is indicated with two TCI states in a codepoint of TCI field in the DCI (e.g., *'Transmission Configuration Indication'* field) if the wireless device is not configured/provided/indicated with a downlink-or-joint-TCI-state-list parameter (e.g., a higher layer parameter *dl-OrJointTCI-StateList*). The mapping may be performed, for example, if the wireless device is indicated with two joint/downlink TCI states in a codepoint of TCI selection field in the DCI (e.g., *'TCI selection'* field) if the wireless device is configured/indicated/provided with a downlink-or-joint-TCI-state-list parameter (e.g., a higher layer parameter *dl-OrJointTCI-StateList*) and with a TCI-selection-present-in-DCI parameter (e.g., a higher layer parameter *tciSelection-PresentInDCI*). The mapping may be performed, for example, if the wireless device is configured/indicated/provided with a downlink-or-joint-TCI-state-list parameter (e.g., a higher layer parameter *dl-OrJointTCI-StateList*) and is not configured/indicated/provided with a TCI-selection-present-in-DCI parameter (e.g., a higher layer parameter *tciSelection-PresentInDCI*).

In a situation comprising two transmission occasions (e.g., two PDSCH transmission occasions), the redundancy versions to be used/applied may be derived, by the wireless device, for example, based on an RV table and a value (e.g., $n = 0,1$). For a first transmission occasion (e.g., a first PDSCH transmission occasion) of the two transmission occasions (e.g., two PDSCH transmission occasions), the wireless device may derive/determine a first redundancy version to be applied to the first TCI state or to the first joint/downlink TCI state based on an RV table and a value equal to zero (e.g., $n = 0$). For a second transmission occasion (e.g., a second PDSCH transmission occasion) of the two transmission occasions (e.g., two PDSCH transmission occasions), the wireless device may derive/determine a second redundancy version to be applied to the second TCI state or to the second joint/downlink TCI state based on the RV table and a value equal to one (e.g., $n = 1$). An RV field in the DCI may indicate an RV value in the RV table. For example, if the RV value is equal to zero, the first redundancy version is equal to zero and the second redundancy version is equal to two. For example, if the RV value is equal to two, the first redundancy version is equal to two and the second redundancy version is equal to three. For example, if the RV value is equal to three, the first redundancy version is equal to three and the second redundancy version is equal to one. For example, if the RV value is equal to one, the first redundancy version is equal to one and the second redundancy version is equal to zero. The wireless device may use/apply the first redundancy version to the first TCI state in the first transmission occasion (e.g., the first PDSCH transmission occasion). The wireless device may use/apply the second redundancy version to the second TCI state in the second transmission occasion (e.g., the second PDSCH transmission occasion.

A base station may send (e.g., transmit), to a wireless device, one or more RRC messages comprising one or more configuration parameters. Mapping to resource elements (e.g., for a PDSCH transmission occasion of the PDSCH reception) may be determined, for example, based on assigned PRBs associated with (e.g., of/for corresponding) TCI state of a transmission occasion (e.g., a PDSCH transmission occasion). The mapping may be determined by a base station. The base station may send/transmit (e.g., in/via the PDSCH transmission occasion) a message (e.g., that may be received by a wireless device in a PDSCH reception) based on the mapped resource elements. The base station may schedule/indicate a quantity of code blocks (e.g., at most two code blocks) per transmission (e.g., per PDSCH transmission). The base station may schedule/indicate a quantity of code blocks (e.g., two code blocks), for example, if a single transmission layer (e.g., a single PDSCH transmission layer) is scheduled by the base station. The base station may schedule/indicate a single code block per transmission (e.g., per PDSCH transmission), for example, if two transmission layers (e.g., two PDSCH transmission layers) are scheduled by the base station.

The mapping may be based on one or more conditions. For example, the mapping may be performed, for example, if one or more configuration parameters comprise a repetition scheme parameter (e.g., a higher layer parameter *repetitionScheme* set to 'fdmSchemeB'), a base station sends/transmits, to the wireless device, DCI scheduling/activating a PDSCH reception, and an antenna port field in the DCI (e.g., *'Antenna Port(s)'* field) indicates DM-RS port(s) within one CDM group.

The mapping may be performed, for example, if one or more of the following additional conditions are present. The mapping may be performed for example, if a codepoint of TCI field in the DCI (e.g., *'Transmission Configuration Indication'* field) indicates two TCI states if the one or more configuration parameters do not comprise a downlink-or-joint-TCI-state-list parameter (e.g., higher layer parameter *dl-OrJointTCI-StateList*). The mapping may be performed for example, if a codepoint of TCI selection field in the DCI (e.g., *'TCI selection'* field) indicates two joint/downlink TCI states if the one or more configuration parameters comprise a downlink-or-joint-TCI-state-list parameter (e.g., higher layer parameter *dl-OrJointTCI-StateList*) and a TCI-selection-present-in-DCI parameter (e.g., higher layer parameter *tciSelection-PresentInDCI*). The mapping may be performed for example, if the one or more configuration parameters comprise a downlink-or-joint-TCI-state-list parameter (e.g., higher layer parameter *dl-OrJointTCI-StateList)* and do not comprise a TCI-selection-present-in-DCI parameter (e.g., higher layer parameter *tciSelection-PresentInDCI*).

In a situation comprising two transmission occasions (e.g., two PDSCH transmission occasions), the redundancy versions to be used/applied may be derived, by the base station, for example, based on an RV table and a value (e.g., $n = 0,1$). For a first transmission occasion (e.g., a first PDSCH transmission occasion) of the two transmission occasions (e.g., two PDSCH transmission occasions), the base station may derive/determine a first redundancy version to be used/applied to the first TCI state or to the first joint/downlink TCI state based on an RV table and a value equal to zero (e.g., $n = 0$). For a second transmission occasion (e.g., a second PDSCH transmission occasion) of the two transmission occasions (e.g., two PDSCH transmission occasions), the base station may derive/determine a second redundancy version to be used/applied to the second TCI state or to the second joint/downlink TCI state based on the RV table and a value equal to one (e.g., $n = 1$). An RV field in the DCI may indicate an RV value in the RV table. For example, if the RV value is equal to zero, the first redundancy version is equal to zero and the second redundancy version is equal to two. For example, if the RV value is equal to two, the first redundancy version is equal to two and the second redundancy version is equal to three. For example, if the RV value is equal to three, the first redundancy version is equal to three and the second redundancy version is equal to one. For example, if the RV value is equal to one, the first redundancy version is equal to one and the second redundancy version is equal to zero. The base station may use/apply the first redundancy version to the first TCI state in the first transmission occasion (e.g., the first PDSCH transmission occasion). The base station may use/apply the second redundancy version to the second TCI state in the second transmission occasion (e.g., a second PDSCH transmission occasion).

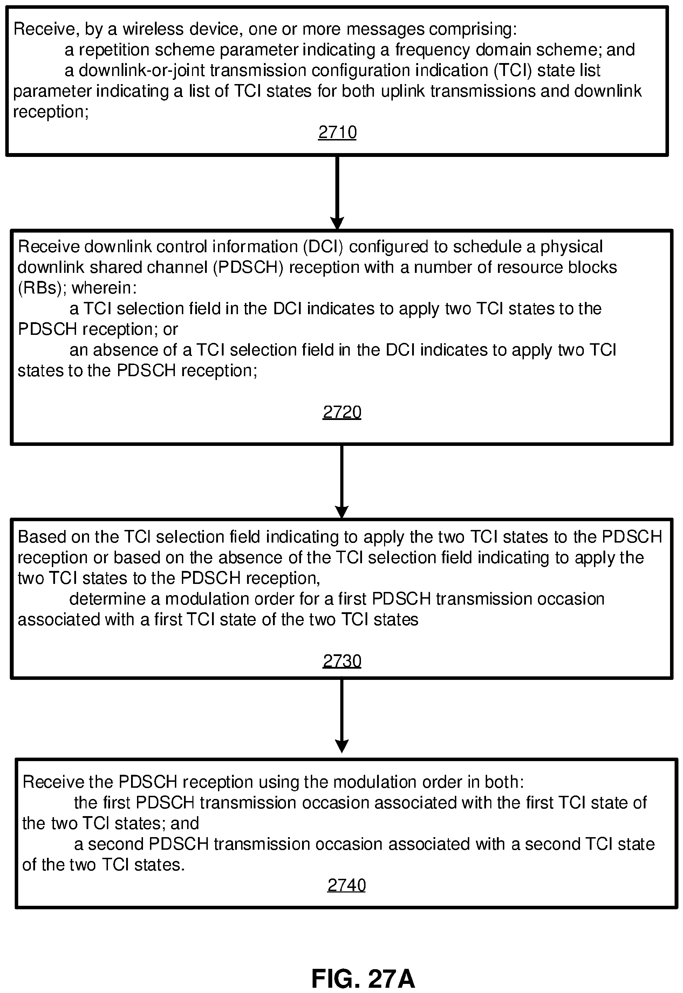

FIG. 27A shows an example method of scheduling communications using at least two TCI states. A wireless device may perform one or more operations based on one or more conditions. For example, the wireless device may perform the one or more operations based on a first condition of the wireless device being configured/indicated/provided, by a base station, with a higher layer parameter *repetitionScheme* set to 'fdmSchemeB' (e.g., receiving, by a wireless device, one or more messages comprising a repetition scheme parameter indicating a time domain scheme or a frequency domain scheme, as shown at step 2710 in FIG. 27A), and based on a second condition of the wireless device being indicated, by the base station, with DM-RS port(s) within one CDM group in/by '*Antenna Port(s)*' field in DCI scheduling/activating a PDSCH reception (e.g., receiving DCI configured to schedule a PDSCH reception, as shown at step 2720 in FIG. 27A). Additionally, the wireless device may perform the one or more operations based on one or more third conditions such as:

the wireless device being indicated with two TCI states in a codepoint of '*Transmission Configuration Indication*' field in the DCI, for example, if the wireless device is not configured/provided/indicated with a higher layer parameter *dl-OrJointTCI-StateList,* or

the wireless device being indicated with two joint/downlink TCI states in a codepoint of '*TCI selection*' field in the DCI (e.g., based on the TCI selection field in the DCI indicating to use two TCI states for the PDSCH reception, as shown at step 2730 in FIG. 27A), for example, if the wireless device is configured/indicated/provided with a higher layer parameter *dl-OrJointTCI-StateList* (e.g., receiving, by a wireless device, one or more messages comprising a downlink-or-joint TCI state list parameter, as shown at step 2710 in FIG. 27A) and with a higher layer parameter *tciSelection-PresentInDCI,* or

the wireless device being configured/indicated/provided with a higher layer parameter *dl-OrJointTCI-StateList* (e.g., receiving one or more messages comprising a downlink-or-joint TCI state list parameter, as shown at step 2710 in FIG. 27A) and being not configured/indicated/provided with a higher layer parameter *tciSelection-PresentInDCI* (e.g., based on the absence of the TCI selection field in the DCI, as shown at step 2730 in FIG. 27A).

Based on the first condition, the second condition, and the one or more third conditions being satisfied, the wireless device may determine a modulation order of/for a first PDSCH transmission occasion that may be associated with the first TCI state or the first joint/downlink TCI state (e.g., based on the TCI selection field indicating to use/apply the two TCI states to the PDSCH reception or based on the absence of the TCI selection field indicating to use/apply the two TCI states to the PDSCH reception, determine a modulation order for a first PDSCH transmission occasion associated with a first TCI state of the two TCI states, as shown at step 2730 in FIG. 27A). The wireless device may determine the modulation order of/for the first PDSCH transmission occasion that may be associated with the first TCI state or the first joint/downlink TCI state to use/apply for/to both the first PDSCH transmission occasion and to a second PDSCH transmission occasion that may be associated with the second TCI state or the second joint/downlink TCI state. The wireless device may use/apply the modulation order for/to both the first PDSCH transmission occasion and the second PDSCH transmission occasion that may be associated with the second TCI state or the second joint/downlink TCI state (e.g., receive the PDSCH reception using the modulation order in both: the first PDSCH transmission occasion associated with the first TCI state of the two TCI states; and a second PDSCH transmission occasion associated with a second TCI state of the two TCI states, as shown at step 2740 in FIG. 27A). The wireless device may receive, in the first PDSCH transmission occasion, the PDSCH reception, for example, based on the determined modulation order. The wireless device may receive, in the second PDSCH transmission occasion, the PDSCH reception, for example, based on the determined modulation order (e.g., receive the PDSCH reception using the modulation order in both: the first PDSCH transmission occasion associated with the first TCI state of the two TCI states; and a second PDSCH transmission occasion associated with a second TCI state of the two TCI states, as shown at step 2740 in FIG. 27A).

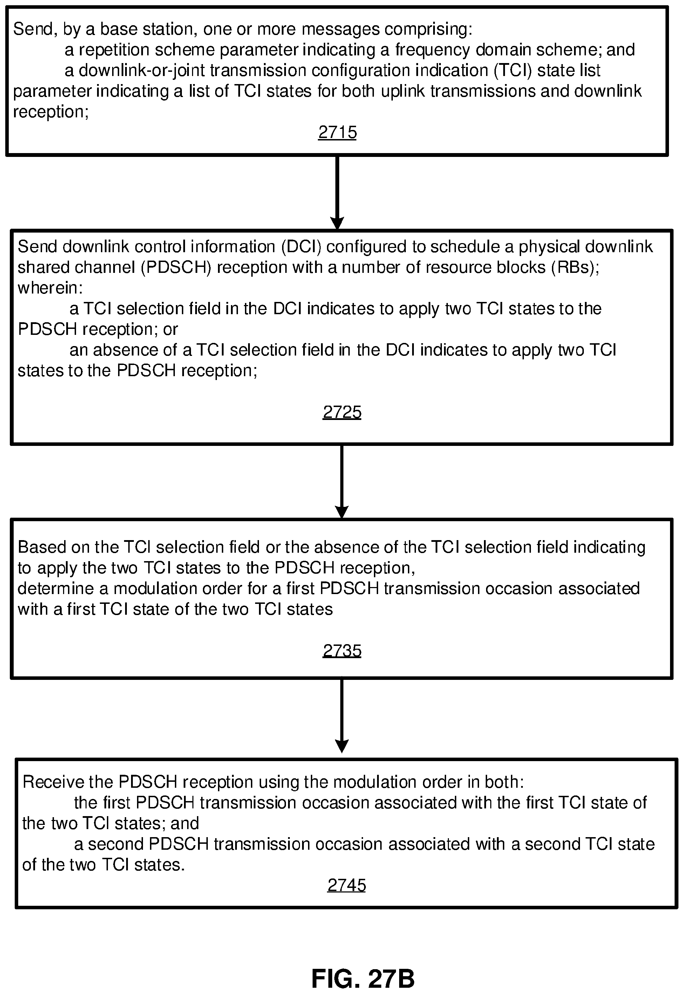

FIG. 27B shows an example method of scheduling communications using at least two TCI states. A base station may send (e.g., transmit), to a wireless device, one or more RRC messages comprising one or more configuration parameters. The base station may perform one or more operations based on one or more conditions. For example, the base station may perform the one or more operations based on a first condition of the one or more configuration parameters comprising a higher layer parameter *repetitionScheme* set to 'fdmSchemeB' (e.g., sending, by a base station, one or more messages comprising a repetition scheme parameter indicating a time domain scheme or a frequency domain scheme, as shown at step 2715 in FIG. 27B), based on a second condition of the base station sending (e.g., transmitting), to the wireless device, DCI scheduling/activating a PDSCH reception, and based on a third condition of *'Antenna Port(s)'* field in the DCI indicating DM-RS port(s) within one CDM group (e.g., sending DCI configured to schedule a PDSCH reception, as shown at step 2725 in FIG. 27B). Additionally, the base station may perform the one or more operations based on one or more fourth conditions such as:

a codepoint of *'Transmission Configuration Indication'* field in the DCI indicating two TCI states, for example, if the one or more configuration parameters do not comprise a higher layer parameter *dl-OrJointTCI-StateList,* or

a codepoint of *'TCI selection'* field in the DCI indicating two joint/downlink TCI states (e.g., based on the TCI selection field in the DCI indicating to use two TCI states for the PDSCH reception, as shown at step 2735 in FIG. 27B), for example, if the one or more configuration parameters comprise a higher layer parameter *dl-OrJointTCI-StateList* (e.g., sending, by a base station, one or more messages comprising a downlink-or-joint TCI state list parameter, as shown at step 2715 in FIG. 27B) and a higher layer parameter *tciSelection-PresentInDCI,* or

the one or more configuration parameters comprising a higher layer parameter *dl-OrJointTCI-StateList* and not comprising a higher layer parameter *tciSelection-PresentInDCI* (e.g., based on the absence of the TCI selection field in the DCI, as shown at step 2735 in FIG. 27B).

Based on the first condition, the second condition, the third condition, and the one or more fourth conditions being satisfied, the base station may perform the one or more operations. The one or more operations may comprise determining a modulation order of/for a first PDSCH transmission occasion. For example, the base station may determine a modulation order of/for a first PDSCH transmission occasion that may be associated with the first TCI state or the first joint/downlink TCI state (e.g., based on the TCI selection field indicating to use/apply the two TCI states to the PDSCH reception or based on the absence of the TCI selection field indicating to use/apply the two TCI states to the PDSCH reception, determine a modulation order for a first PDSCH transmission occasion associated with a first TCI state of the two TCI states, as shown at step 2735 in FIG. 27B). The base station may determine the modulation order of/for the first PDSCH transmission occasion that may be associated with the first TCI state or the first joint/downlink TCI state to use/apply for/to both the first PDSCH transmission occasion and to a second PDSCH transmission occasion that may be associated with the second TCI state or the second joint/downlink TCI state. The base station may use/apply the modulation order for/to both the first PDSCH transmission occasion and the second PDSCH transmission occasion that may be associated with the second TCI state or the second joint/downlink TCI state (e.g., receive the PDSCH reception using the modulation order in both: the first PDSCH transmission occasion associated with the first TCI state of the two TCI states; and a second PDSCH transmission occasion associated with a second TCI state of the two TCI states, as shown at step 2740 in FIG. 27B). The base station may send (e.g., transmit), to the wireless device and in the first PDSCH transmission occasion, the PDSCH reception based on the determined modulation order. The base station may send (e.g., transmit), to the wireless device and in the second PDSCH transmission occasion, the PDSCH reception based on the determined modulation order (e.g., receive the PDSCH reception using the modulation order in both: the first PDSCH transmission occasion associated with the first TCI state of the two TCI states; and a second PDSCH transmission occasion associated with a second TCI state of the two TCI states, as shown at step 2745 in FIG. 27B).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising receiving, by a wireless device, one or more messages comprising a repetition scheme parameter indicating a frequency domain scheme and a downlink-or-joint transmission configuration indicator (TCI) state list parameter indicating a list of TCI states for both uplink transmission and downlink reception.

Clause 2. The method of clause 1, further comprising receiving downlink control information (DCI) configured to schedule a physical downlink shared channel (PDSCH) reception with a number of resource blocks (RBs).

Clause 3. The method of any one of clause 1 to 2, further comprising receiving downlink control information (DCI) configured to activate a physical downlink shared channel (PDSCH) reception with a number of resource blocks (RBs).

Clause 4. The method of any one of clauses 1 to 3, further comprising, based on a TCI selection field in the DCI indicating to apply two TCI states to the PDSCH reception, receiving, using a first TCI state of the two TCI states, one or more first RBs of the number of the RBs of the PDSCH reception; and receiving, using a second TCI state of the two TCI states, one or more second RBs of the number of the RBs of the PDSCH reception.

Clause 5. The method of any one of clauses 1 to 4, wherein: the TCI selection field in the DCI indicates to apply the two TCI states to the PDSCH reception; or an absence of the TCI selection field in the DCI indicates to apply the two TCI states to the PDSCH reception.

Clause 6. The method of any one of clauses 1 to 5, wherein the receiving the PDSCH reception comprises receiving the PDSCH reception using a modulation order in both: a first PDSCH transmission occasion associated with the first TCI state of the two TCI states; and a second PDSCH transmission occasion associated with the second TCI state of the two TCI states.

Clause 7. The method of any one of clauses 1 to 6, wherein the modulation order is based on the TCI selection field, or the absence of the TCI selection field, indicating to apply the two TCI states to the PDSCH reception.

Clause 8. The method of any one of clauses 1 to 7, further comprising determining, based on assigned physical resource blocks (PRBs) for the first TCI state, a first mapping to resource elements for a first PDSCH transmission occasion; and

Clause 9. The method of any one of clauses 1 to 8, further comprising determining, based on assigned PRBs for the second TCI state, a second mapping to resource elements for a second PDSCH transmission occasion.

Clause 10. The method of any one of clauses 1 to 9, further comprising determining a first redundancy version (RV) to apply to a first PDSCH transmission occasion, wherein the determining the first RV is based on a first value being equal to zero.

Clause 11. The method of any one of clauses 1 to 10, further comprising determining a second RV to apply to a second PDSCH transmission occasion, wherein the determining the second RV is based on a second value being is equal to one.

Clause 12. The method of any one of clauses 1 to 11, wherein the receiving the one or more first RBs and the receiving the one or more second RBs is further based on precoding granularity in a frequency domain.

Clause 13. The method of any one of clauses 1 to 12, wherein the DCI comprises an antenna port field indicating one or more demodulation reference signal (DM-RS) ports within one code division multiplexing (CDM) group.

Clause 14. The method of any one of clauses 1 to 13, further comprising receiving a control message indicating the two TCI states in the list of TCI states.

Clause 15. The method of any one of clauses 1 to 14, wherein the DCI comprises a redundancy version (RV) field indicating an RV value in an RV table.

Clause 16. The method of any one of clauses 1 to 15, wherein the repetition scheme parameter indicates a frequency domain scheme that is a frequency domain multiplexing (FDM) scheme.

Clause 17. The method of any one of clauses 1 to 16, further comprising receiving one or more second messages comprising a second repetition scheme parameter indicating the frequency domain scheme.

Clause 18. The method of any one of clauses 1 to 17, wherein the one or more first RBs are even precoding resource block groups (PRBs); and wherein the one or more second RBs are odd PRBs.

Clause 19. The method of any one of clauses 1 to 18, the list of TCI states comprises the two TCI states.

Clause 20. The method of any one of clauses 1 to 19, wherein the receiving the PDSCH reception using the two TCI states is further based on the one or more messages comprising the TCI state parameter.

Clause 21. The method of any one of clauses 1 to 20, wherein the second DCI comprises a TCI selection field with a value indicating to apply the two TCI states to the PDSCH reception.

Clause 22. The method of any one of clauses 1 to 21, wherein the receiving the PDSCH reception using the two TCI states is further based on the value of the TCI selection field in the second DCI indicating to apply the two TCI states to the PDSCH reception.

Clause 23. The method of any one of clauses 1 to 22, wherein the one or more messages do not comprise a TCI selection parameter that indicates the presence of a TCI selection field in a DCI format, wherein the second DCI is with the DCI format.

Clause 24. The method of any one of clauses 1 to 23, wherein the receiving the PDSCH reception using the two TCI states is further based on the one or more messages not comprising the TCI selection parameter.

Clause 25. The method of any one of clauses 1 to 24, wherein the receiving the PDSCH reception is further based on the second DCI indicating the one or more DM-RS ports within one CDM group.

Clause 26. The method of any one of clauses 1 to 25, wherein the precoding granularity in the frequency band is wideband.

Clause 27. The method of any one of clauses 1 to 26, wherein the number of RBs is a total number of allocated physical resource blocks (PRBs) for the wireless device; the one or more first RBs are one or more first PRBs; and the one or more second RBs are one or more second PRBs.

Clause 28. The method of any one of clauses 1 to 27, wherein the one or more first PRBs are the starting half of the total number of allocated PRBs; and the one or more second PRBs are the remaining half of the total number of allocated PRBs.

Clause 29. The method of any one of clauses 1 to 28, wherein the precoding granularity in the frequency band is either two or four.

Clause 30. The method of any one of clauses 1 to 29, wherein the number of RBs is allocated frequency domain resources; the one or more first RBs are even precoding resource block groups (PRGs); and the one or more second RBs are odd PRGs, wherein PRGs are numbered continuously in increasing order with a starting PRG index equal to 0.

Clause 31. The method of any one of clauses 1 to 30, wherein in the first FDM scheme, the receiving the PDSCH reception is in a single PDSCH transmission occasion with the non-overlapping frequency domain resources, wherein each TCI state of the two TCI states is associated with a respective frequency domain resource of the non-overlapping frequency domain resources.

Clause 32. The method of any one of clauses 1 to 31, wherein in the second FDM scheme, the receiving the PDSCH reception is in two PDSCH transmission occasions with the non-overlapping frequency domain resources, wherein each TCI state of the two TCI states is associated with a respective PDSCH transmission occasion of the two PDSCH transmission occasions.

Clause 33. The method of any one of clauses 1 to 32, wherein the TCI state parameter is a downlink-or-joint TCI state list parameter.

Clause 34. The method of any one of clauses 1 to 33, further comprising receiving one or more second messages comprising a second repetition scheme parameter indicating the frequency domain scheme.

Clause 35. The method of any one of clauses 1 to 34, further comprising receiving a third DCI scheduling or activating a second PDSCH reception with a second number of RBs.

Clause 36. The method of any one of clauses 1 to 35, wherein the third DCI comprises: a second antenna port field indicating one or more second DM-RS ports within one CDM group; and a TCI field indicating second two TCI states for the second PDSCH reception.

Clause 37. The method of any one of clauses 1 to 36, further comprising, based on the third DCI indicating the second two TCI states for the second PDSCH reception and a second precoding granularity in the frequency band, receiving: one or more first RBs of the second number of the RBs of the second PDSCH reception using a first TCI state of the second two TCI states; and one or more second RBs of the second number of the RBs of the second PDSCH reception using a second TCI state of the second two TCI states.

Clause 38. The method of any one of clauses 1 to 37, wherein the one or more second messages do not comprise a TCI state parameter indicating a list of TCI states for both uplink transmissions and downlink receptions via the cell.

Clause 39. The method of any one of clauses 1 to 38, wherein the second DCI comprises a TCI field different from the TCI selection field.

Clause 40. A computing device comprising: one or more processors; and memory storing instructions that, when executed by the one or more processors, cause the computing device to perform the method of any one of clauses 1 to 39.

Clause 41. A system comprising: a wireless device configured to perform the method of any one of clauses 1 to 39; and a base station configured to send the one or more messages.

Clause 42. A computer-readable medium storing instructions that, when executed, cause performance of the method of any one of clauses 1 to 39.

Clause 43. A method comprising receiving, by a wireless device, one or more messages comprising: a repetition scheme parameter indicating a frequency domain scheme; and a downlink-or-joint transmission configuration indicator (TCI) state list parameter indicating a list of TCI states for both uplink transmission and downlink reception.

Clause 44. The method of clause 43, further comprising receiving downlink control information (DCI) configured to schedule a physical downlink shared channel (PDSCH) reception with a number of resource blocks (RBs), wherein the DCI comprises an antenna port field indicating one or more demodulation reference signal (DM-RS) ports within one code division multiplexing (CDM) group.

Clause 45. The method of any one of clauses 43 to 44, further comprising, based on a TCI selection field not being configured in the DCI: receiving, using a first TCI state of two TCI states, one or more first RBs of the number of the RBs of the PDSCH reception; and receiving, using a second TCI state of the two TCI states, one or more second RBs of the number of the RBs of the PDSCH reception.

Clause 46. The method of any one of clauses 43 to 45, further comprising, based on a TCI selection field being absent in the DCI: receiving, using a first TCI state of two TCI states, one or more first RBs of the number of the RBs of the PDSCH reception; and receiving, using a second TCI state of the two TCI states, one or more second RBs of the number of the RBs of the PDSCH reception.

Clause 47. The method of any one of clauses 43 to 46, further comprising determining, based on assigned physical resource blocks (PRBs) for the first TCI state, a first mapping to resource elements for a first PDSCH transmission occasion.

Clause 48. The method of any one of clauses 43 to 47, further comprising determining, based on assigned PRBs for the second TCI state, a second mapping to resource elements for a second PDSCH transmission occasion.

Clause 49. The method of any one of clauses 43 to 48, further comprising determining a first redundancy version (RV) to apply to a first PDSCH transmission occasion, wherein the determining the first RV is based on a first value being equal to zero.

Clause 50. The method of any one of clauses 43 to 49, further comprising determining a second RV to apply to a second PDSCH transmission occasion, wherein the determining the second RV is based on a second value being equal to one.

Clause 51. The method of any one of clauses 43 to 50, wherein the receiving the one or more first RBs and the receiving the one or more second RBs is further based on precoding granularity in a frequency domain.

Clause 52. The method of any one of clauses 43 to 51, wherein the DCI comprises an antenna port field indicating one or more demodulation reference signal (DM-RS) ports within one code division multiplexing (CDM) group.

Clause 53. The method of any one of clauses 43 to 52, wherein the DCI comprises a redundancy version (RV) field indicating an RV value.

Clause 54. The method of any one of clauses 43 to 53, wherein the repetition scheme parameter indicates a frequency domain scheme that is a frequency domain multiplexing (FDM) scheme.

Clause 55. A computing device comprising: one or more processors; and memory storing instructions that, when executed by the one or more processors, cause the computing device to perform the method of any one of clauses 43 to 54.

Clause 56. A system comprising: a wireless device configured to perform the method of any one of clauses 43 to 54; and a base station configured to send the one or more messages.

Clause 57. A computer-readable medium storing instructions that, when executed, cause performance of the method of any one of clauses 43 to 54.

Clause 58. A method comprising receiving, by a wireless device, one or more messages comprising: a repetition scheme parameter indicating a frequency domain scheme; and a downlink-or-joint transmission configuration indicator (TCI) state list parameter indicating a list of TCI states for both uplink transmission and downlink reception.

Clause 59. The method of clause 58, receiving downlink control information (DCI) configured to schedule a physical downlink shared channel (PDSCH) reception.

Clause 60. The method of any one of clauses 58 to 59, wherein a TCI selection field in the DCI indicates to apply two TCI states to the PDSCH reception; or an absence of a TCI selection field in the DCI indicates to apply two TCI states to the PDSCH reception.

Clause 61. The method of any one of clauses 58 to 60, further comprising, based on the TCI selection field or the absence of the TCI selection field indicating to apply the two TCI states to the PDSCH reception, determining a modulation order for a first PDSCH transmission occasion associated with a first TCI state of the two TCI states.

Clause 62. The method of any one of clauses 58 to 61, further comprising receiving the PDSCH reception using the modulation order in both: the first PDSCH transmission occasion associated with the first TCI state of the two TCI states; and a second PDSCH transmission occasion associated with a second TCI state of the two TCI states.

Clause 63. A method comprising receiving, by a wireless device, one or more messages comprising a repetition scheme parameter indicating a frequency domain scheme.

Clause 64. The method of clause 63, further comprising receiving a first downlink control information (DCI) indicating two transmission configuration indicator (TCI) states for both uplink transmissions and downlink receptions via a cell.

Clause 65. The method of any one of clauses 63 to 64, further comprising receiving a second DCI scheduling or activating a physical downlink shared channel (PDSCH) reception.

Clause 66. The method of any one of clauses 63 to 65, wherein a TCI selection field in the second DCI indicates to apply the two TCI states to the PDSCH reception; or an absence of a TCI selection field in the second DCI indicates to apply the two TCI states to the PDSCH reception.

Clause 67. The method of any one of clauses 63 to 66, further comprising, based on the TCI selection field or the absence of the TCI selection field indicating to apply the two TCI states to the PDSCH reception, determining a modulation order for a first PDSCH transmission occasion associated with a first TCI state of the two TCI states.

Clause 68. The method of any one of clauses 63 to 67, further comprising receiving the PDSCH reception using the modulation order in both: the first PDSCH transmission occasion; and a second PDSCH transmission occasion associated with a second TCI state of the two TCI states.

Clause 69. A method comprising receiving, by a wireless device, one or more messages comprising: a repetition scheme parameter indicating a frequency domain scheme; and a downlink-or-joint transmission configuration indicator (TCI) state list parameter indicating a list of TCI states for both uplink transmissions and downlink receptions.

Clause 70. The method of clause 69, receiving a downlink control information (DCI) scheduling or activating a physical downlink shared channel (PDSCH) reception.

Clause 71. The method of any one of clauses 69 to 70, wherein a TCI selection field in the DCI indicates to apply two TCI states to the PDSCH reception; or an absence of a TCI selection field in the DCI indicates to apply two TCI states to the PDSCH reception.

Clause 72. The method of any one of clauses 69 to 71, further comprising, based on the TCI selection field or the absence of the TCI selection field indicating to apply the two TCI states to the PDSCH reception, determining a modulation order for a first PDSCH transmission occasion associated with a first TCI state of the two TCI states.

Clause 73. The method of any one of clauses 69 to 72, further comprising receiving the PDSCH reception using the modulation order in both: the first PDSCH transmission occasion; and a second PDSCH transmission occasion associated with a second TCI state of the two TCI states.

Clause 74. The method of any one of clauses 58 to 73, wherein the repetition scheme parameter indicates a frequency domain scheme that is a frequency domain multiplexing (FDM) scheme.

Clause 75. The method of any one of clauses 58 to 74, further comprising determining, based on assigned physical resource blocks (PRBs) for the first TCI state, a first mapping to resource elements for a first PDSCH transmission occasion.

Clause 76. The method of any one of clauses 58 to 75, further comprising determining, based on assigned PRBs for the second TCI state, a second mapping to resource elements for a second PDSCH transmission occasion.

Clause 77. The method of any one of clauses 58 to 76, further comprising determining a first redundancy version (RV) to apply to the first PDSCH transmission occasion, wherein the determining the first RV is based on a first value being equal to zero.

Clause 78. The method of any one of clauses 58 to 77, further comprising determining a second RV to apply to the second PDSCH transmission occasion, wherein the determining the second RV is based on a second value being equal to one.

Clause 79. The method of any one of clauses 58 to 78, wherein the receiving the PDSCH reception using the modulation order is further based on precoding granularity in a frequency domain.

Clause 80. The method of any one of clauses 58 to 79, wherein the DCI comprises an antenna port field indicating one or more demodulation reference signal (DM-RS) ports within one code division multiplexing (CDM) group.

Clause 81. The method of any one of clauses 58 to 80, wherein in the FDM scheme, the receiving the PDSCH reception is in two PDSCH transmission occasions with the non-overlapping frequency domain resources

Clause 82. The method of any one of clauses 58 to 81, wherein each TCI state of the two TCI states is associated with a respective PDSCH transmission occasion of the two PDSCH transmission occasions; and the two PDSCH transmission occasions comprise the first PDSCH transmission and the second PDSCH transmission occasion.

Clause 83. The method of any one of clauses 58 to 82, wherein the TCI state parameter is a dl-OrJointTCI-StateList.

Clause 84. The method of any one of clauses 58 to 83, wherein the receiving the PDSCH reception using the two TCI states is further based on the one or more messages comprising the downlink-or-joint TCI state list parameter.

Clause 85. The method of any one of clauses 58 to 84, wherein the list of TCI states comprises the two TCI states.

Clause 86. The method of any one of clauses 58 to 85, wherein the second DCI comprises a TCI field different from the TCI selection field.

Clause 87. The method of any one of clauses 58 to 86, wherein the receiving the PDSCH reception is further based on the second DCI indicating the one or more DM-RS ports within one CDM group.

Clause 88. The method of any one of clauses 58 to 87, wherein the one or more messages do not comprise a TCI selection parameter that indicates the presence of a TCI selection field in a DCI format, wherein the second DCI is with the DCI format.

Clause 89. The method of any one of clauses 58 to 88, wherein the one or more messages not comprising the TCI selection parameter indicates to apply the two TCI states to the PDSCH reception.

Clause 90. The method of any one of clauses 58 to 89, wherein a value (e.g., '10') of the TCI selection field in the second DCI indicates to apply the two TCI states to the PDSCH reception.

Clause 91. The method of any one of clauses 58 to 90, wherein the receiving the PDSCH reception using the modulation order comprises applying the modulation order to both the first PDSCH transmission occasion and the second PDSCH transmission occasion.

Clause 92. The method of any one of clauses 58 to 91, further comprising receiving one or more second messages comprising a second repetition scheme parameter indicating the frequency domain scheme.

Clause 93. The method of any one of clauses 58 to 92, further comprising receiving a third DCI scheduling or activating a second PDSCH reception, wherein the third DCI comprises a TCI field indicating second two TCI states for the second PDSCH reception.

Clause 94. The method of any one of clauses 58 to 93, further comprising, based on the third DCI indicating the second two TCI states for the second PDSCH reception, determining a second modulation order for a third PDSCH transmission occasion associated with a first TCI state of the second two TCI states.

Clause 95. The method of any one of clauses 58 to 94, further comprising receiving the second PDSCH reception using the second modulation order in both: the third PDSCH transmission occasion; and a fourth PDSCH transmission occasion associated with a second TCI state of the second two TCI states.

Clause 96. The method of any one of clauses 58 to 95, wherein the one or more second messages do not comprise a TCI state parameter indicating a list of TCI states for both uplink transmissions and downlink receptions via the cell.

Clause 97. A computing device comprising: one or more processors; and memory storing instructions that, when executed by the one or more processors, cause the computing device to perform the method of any one of clauses 58 to 96.

Clause 98. A system comprising: a wireless device configured to perform the method of any one of clauses 58 to 96; and a base station configured to send the one or more messages.

Clause 99. A computer-readable medium storing instructions that, when executed, cause performance of the method of any one of clauses 58 to 96.

Clause 100. A method comprising: receiving, by a wireless device, one or more messages comprising one or more configuration parameters.

Clause 101. The method of clause 100, wherein the one or more configuration parameters indicate: at least two discontinuous transmission (DTX) configurations for a cell; a channel state information (CSI) report configuration indicating one or more CSI-RS; and which one of the at least two DTX configurations to apply to the CSI report configuration.

Clause 102. The method of clauses 100 to 101, further comprising determining, based on the one or more configuration parameters, whether to receive or not receive the one or more CSI-RSs during a non-active time of a first DTX configuration of the at least two DTX configurations.

Clause 103. A computing device comprising: one or more processors; and memory storing instructions that, when executed by the one or more processors, cause the computing device to perform the method of any one of clauses 100 to 102.

Clause 104. A system comprising: a wireless device configured to perform the method of any one of clauses 100 to 102; and a base station configured to send the one or more messages.

Clause 105. A computer-readable medium storing instructions that, when executed, cause performance of the method of any one of clauses 100 to 102.

Clause 106. A method comprising: receiving, by a wireless device, one or more messages comprising one or more configuration parameters.

Clause 107. The method of clause 106, wherein the one or more configuration parameters indicate: at least two discontinuous reception (DRX) configurations for a cell; not to follow a unified transmission configuration indicator (TCI) state for a sounding reference signal (SRS) resource set; and which one of the at least two DRX configurations to apply to the SRS resource set.

Clause 108. The method of clauses 106 to 107, further comprising determining, based on the one or more configuration parameters, whether to transmit or not transmit an SRS via an SRS resource in the SRS resource set during/in a non-active time/period/duration of a first DRX configuration of the at least two DRX configurations.

Clause 109. A computing device comprising: one or more processors; and memory storing instructions that, when executed by the one or more processors, cause the computing device to perform the method of any one of clauses 106 to 108.

Clause 110. A system comprising: a wireless device configured to perform the method of any one of clauses 106 to 108; and a base station configured to send the one or more messages.

Clause 111. A computer-readable medium storing instructions that, when executed, cause performance of the method of any one of clauses 106 to 108.

A wireless device may perform a method comprising multiple operations. The wireless device may receive one or more messages that may comprise a repetition scheme parameter indicating a frequency domain scheme and/or a downlink-or-joint transmission configuration indicator (TCI) state list parameter that may indicate a list of TCI states for both uplink transmission and downlink reception. The wireless device may receive downlink control information (DCI) that may be configured to schedule (or activate) a physical downlink shared channel (PDSCH) reception with a number of resource blocks (RBs). The wireless device may receive, using a first TCI state of the two TCI states, one or more first RBs of the number of the RBs of the PDSCH reception, for example, based on a TCI selection field in the DCI indicating to apply two TCI states to the PDSCH reception. The wireless device may receive, using a second TCI state of the two TCI states, one or more second RBs of the number of the RBs of the PDSCH reception, for example, based on a TCI selection field in the DCI indicating to apply two TCI states to the PDSCH reception. The TCI selection field in the DCI may indicate to use (e.g., apply) the two TCI states for the PDSCH reception. Additionally or alternatively, an absence of the TCI selection field in the DCI may indicate to use (e.g., apply) the two TCI states for the PDSCH reception. The wireless device may receive the PDSCH reception using a modulation order in both a first PDSCH transmission occasion that may be associated with the first TCI state of the two TCI states and a second PDSCH transmission occasion that may be associated with the

83

second TCI state of the two TCI states. The modulation order may be based on the TCI selection field. Additionally or alternatively, the absence of the TCI selection field may indicate to use (e.g., apply) the two TCI states for the PDSCH reception. The wireless device may determine a first mapping to resource elements for a first PDSCH transmission occasion, for example, based on assigned physical resource blocks (PRBs) for the first TCI state. The wireless device may determine a second mapping to resource elements for a second PDSCH transmission occasion, for example, based on assigned PRBs for the second TCI state. The wireless device may determine a first redundancy version (RV) to use (e.g., apply) to a first PDSCH transmission occasion. The wireless device may determine the first RV, for example, based on a first value being equal to zero. The wireless device may determine a second RV to use (e.g., apply) for a second PDSCH transmission occasion. The wireless device may determine the second RV, for example, based on a second value being is equal to one. The wireless device may receive the one or more first RBs and/or the one or more second RBs, for example, based on precoding granularity in a frequency domain. The DCI may comprise an antenna port field that may indicate one or more demodulation reference signal (DM-RS) ports within one code division multiplexing (CDM) group. The wireless device may receive a control message that may indicate the two TCI states in the list of TCI states. The DCI may comprise a redundancy version (RV) field that may indicate an RV value in an RV table. The repetition scheme parameter may indicate a frequency domain scheme that may be a frequency domain multiplexing (FDM) scheme. The wireless device may receive one or more second messages that may comprise a second repetition scheme parameter that may indicate the frequency domain scheme. The one or more first RBs may be even precoding resource block groups (PRBs) and the one or more second RBs may be odd PRBs. Alternatively, the one or more first RBs may be odd precoding resource block groups (PRBs) and the one or more second RBs may be even PRBs. The list of TCI states may comprise the two TCI states. The wireless device may receive the PDSCH reception using the two TCI states, for example, based on the one or more messages comprising the TCI state parameter. The second DCI may comprise a TCI selection field with a value that may indicate to use (e.g., apply) the two TCI states for the PDSCH reception. The wireless device may receive the PDSCH reception using the two TCI states, for example, based on the value of the TCI selection field in the second DCI that may indicate to use (e.g., apply) the two TCI states for the PDSCH reception. The one or more messages may not comprise a TCI selection parameter that may indicate the presence of a TCI selection field in a DCI format. The second DCI may be with the DCI format. The wireless device may receive the PDSCH reception using the two TCI states, for example, based on the one or more messages not comprising the TCI selection parameter. The wireless device may receive the PDSCH reception, for example, based on the second DCI that may indicate the one or more DM-RS ports within one CDM group. The precoding granularity in the frequency band may be wideband. The number of RBs may be a total number of allocated physical resource blocks (PRBs) for the wireless device. The one or more first RBs may be one or more first PRBs. The one or more second RBs may be one or more second PRBs. The one or more first PRBs may be the starting half of the total number of allocated PRBs. The one or more second PRBs may be the remaining half of the total number of allocated PRBs. The precoding granularity in the frequency band may be either two or four. The number of RBs may be allocated frequency domain resources. The one or more first RBs may be even precoding resource block groups (PRGs) and the one or more second RBs are odd PRGs. Alternatively, the one or more first RBs may be odd precoding resource block groups (PRGs) and the one or more second RBs are even PRGs. PRGs may be numbered continuously in increasing order with a starting PRG index equal to 0. For example, in the first FDM scheme, the receiving the PDSCH reception may be in a single PDSCH transmission occasion with the non-overlapping frequency domain resources, wherein each TCI state of the two TCI states may be associated with a respective frequency domain resource of the non-overlapping frequency domain resources. For example, in the second FDM scheme, the receiving the PDSCH reception may be in two PDSCH transmission occasions with the non-overlapping frequency domain resources, wherein each TCI state of the two TCI states may be associated with a respective PDSCH transmission occasion of the two PDSCH transmission occasions. The TCI state parameter may be a downlink-or-joint TCI state list parameter. The wireless device may receive one or more second messages that may comprise a second repetition scheme parameter that may indicate the frequency domain scheme. The wireless device may receive a third DCI that may schedule or activate a second PDSCH reception with a second number of RBs. The third DCI may comprise a second antenna port field that may indicate one or more second DM-RS ports within one CDM group and/or a TCI field that may indicate second two TCI states for the second PDSCH reception. The wireless device may receive one or more first RBs of the second number of the RBs of the second PDSCH reception using a first TCI state of the second two TCI states, for example, based on the third DCI indicating the second two TCI states for the second PDSCH reception and a second precoding granularity in the frequency band. The wireless device may receive one or more second RBs of the second number of the RBs of the second PDSCH reception using a second TCI state of the second two TCI states, for example, based on the third DCI indicating the second two TCI states for the second PDSCH reception and a second precoding granularity in the frequency band. The one or more second messages may not comprise a TCI state parameter that may indicate a list of TCI states for both uplink transmissions and downlink receptions via the cell. The second DCI may comprise a TCI field that may be different from the TCI selection field. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more messages. A computer-readable medium may store instructions that, when executed, cause performance of the described method, additional operations, and/or include the additional elements.

A wireless device may perform a method comprising multiple operations. The wireless device may receive one or more messages that may comprise a repetition scheme parameter indicating a frequency domain scheme and/or a downlink-or-joint transmission configuration indicator (TCI) state list parameter that may indicate a list of TCI states for both uplink transmission and downlink reception. The wireless device may receive downlink control information (DCI) that may be configured to schedule (or activate) a physical downlink shared channel (PDSCH) reception with a number of resource blocks (RBs). The DCI may comprise an antenna port field that may indicate one or more demodulation reference signal (DM-RS) ports within one code division multiplexing (CDM) group. The wireless device may receive one or more first RBs of the number of the RBs of the PDSCH reception by using a first TCI state of two TCI states, for example, based on a TCI selection field not being configured in the DCI. The wireless device may receive one or more second RBs of the number of the RBs of the PDSCH reception by using a second TCI state of the two TCI states, for example, based on a TCI selection field not being configured in the DCI. The wireless device may receive one or more first RBs of the number of the RBs of the PDSCH reception by using a first TCI state of two TCI states, for example, based on a TCI selection field being absent in the DCI. The wireless device may receive one or more second RBs of the number of the RBs of the PDSCH reception by using a second TCI state of two TCI states, for example, based on a TCI selection field being absent in the DCI. The wireless device may determine a first mapping to resource elements for a first PDSCH transmission occasion, for example, based on assigned physical resource blocks (PRBs) for the first TCI state. The wireless device may determine a second mapping to resource elements for a second PDSCH transmission occasion, for example, based on assigned PRBs for the second TCI state. The wireless device may determine a first redundancy version (RV) to use (e.g., apply) for a first PDSCH transmission occasion. The first RV may be determined, for example, based on a first value being equal to zero. The wireless device may determine a second RV to use (e.g., apply) for a second PDSCH transmission occasion. The second RV may be determined, for example, based on a second value being equal to one. The wireless device may receive the one or more first RBs and/or the one or more second RBs, for example, based on precoding granularity in a frequency domain. The DCI may comprise an antenna port field that may indicate one or more demodulation reference signal (DM-RS) ports within one code division multiplexing (CDM) group. The DCI may comprise a redundancy version (RV) field that may indicate an RV value. The repetition scheme parameter may indicate a frequency domain scheme that is a frequency domain multiplexing (FDM) scheme. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more messages. A computer-readable medium may store instructions that, when executed, cause performance of the described method, additional operations, and/or include the additional elements.

A wireless device may perform a method comprising multiple operations. The wireless device may receive one or more messages that may comprise a repetition scheme parameter indicating a frequency domain scheme and/or a downlink-or-joint transmission configuration indicator (TCI) state list parameter that may indicate a list of TCI states for both uplink transmission and downlink reception. The wireless device may receive downlink control information (DCI) that may be configured to schedule (or activate) a physical downlink shared channel (PDSCH) reception. A TCI selection field in the DCI may indicate to use (e.g., apply) two TCI states for the PDSCH reception. Additionally or alternatively, an absence of a TCI selection field in the DCI may indicate to use (e.g., apply) two TCI states for the PDSCH reception. The wireless device may determine a modulation order for a first PDSCH transmission occasion that may be associated with a first TCI state of the two TCI states, for example, based on the TCI selection field or the absence of the TCI selection field that may indicate to use (e.g., apply) the two TCI states for the PDSCH reception. The wireless device may receive the PDSCH reception using the modulation order in both the first PDSCH transmission occasion associated with the first TCI state of the two TCI states and a second PDSCH transmission occasion associated with a second TCI state of the two TCI states. A wireless device may receive one or more messages that may comprise a repetition scheme parameter that may indicate a frequency domain scheme. The wireless device may receive a first downlink control information (DCI) that may indicate two transmission configuration indicator (TCI) states for both uplink transmissions and downlink receptions via a cell. The wireless device may receive a second DCI that may schedule or activate a physical downlink shared channel (PDSCH) reception. A TCI selection field in the second DCI may indicate to use (e.g., apply) the two TCI states for the PDSCH reception. Additionally or alternatively, an absence of a TCI selection field in the second DCI may indicate to use (e.g., apply) the two TCI states for the PDSCH reception. The wireless device may determine a modulation order for a first PDSCH transmission occasion that may be associated with a first TCI state of the two TCI states, for example, based on the TCI selection field or the absence of the TCI selection field indicating to apply the two TCI states to the PDSCH reception. The wireless device may receive the PDSCH reception using the modulation order in both the first PDSCH transmission occasion and a second PDSCH transmission occasion associated with a second TCI state of the two TCI states. A wireless device may receive one or more messages that may comprise a repetition scheme parameter indicating a frequency domain scheme and/or a downlink-or-joint transmission configuration indicator (TCI) state list parameter that may indicate list of TCI states for both uplink transmissions and downlink receptions. The wireless device may receive a downlink control information (DCI) that may schedule or activate a physical downlink shared channel (PDSCH) reception. A TCI selection field in the DCI may indicate to use (e.g., apply) two TCI states for the PDSCH reception. Additionally or alternatively, an absence of a TCI selection field in the DCI may indicate to use (e.g., apply) two TCI states for the PDSCH reception. The wireless device may determine a modulation order for a first PDSCH transmission occasion that may be associated with a first TCI state of the two TCI states, for example, based on the TCI selection field or the absence of the TCI selection field indicating to use (e.g., apply) the two TCI states to the PDSCH reception. The wireless device may receive the PDSCH reception using the modulation order in both the first PDSCH transmission occasion and a second PDSCH transmission occasion associated with a second TCI state of the two TCI states. The repetition scheme parameter may indicate a frequency domain scheme that may be a frequency domain multiplexing (FDM) scheme. The wireless device may determine a first mapping to resource elements for a first PDSCH transmission occasion, for example, based on assigned physical resource blocks (PRBs) for the first TCI state. The wireless device may determine a second mapping to resource elements for a second PDSCH transmission occasion, for example, based on assigned PRBs for the second TCI state. The wireless device may determine a first redundancy version (RV) to use (e.g., apply) for the first PDSCH transmission occasion. The first RV may be determined, for example, based on a first value being equal to zero. The wireless device may determine a second RV to use (e.g., apply) for the second PDSCH transmission occasion. The second RV may be determined, for example, based on a second value being equal to one. The wireless device may receive the PDSCH reception using the modulation order, for example, based on precoding granularity in a frequency domain. The DCI may comprise an antenna port field that may indicate one or more demodulation reference signal (DM-RS) ports within one code division multiplexing (CDM) group. For example, in the FDM scheme, the wireless device may receive the PDSCH reception in two PDSCH transmission occasions with the non-overlapping frequency domain resources. Each TCI state of the two TCI states may be associated with a respective PDSCH transmission occasion of the two PDSCH transmission occasions. The two PDSCH transmission occasions may comprise the first PDSCH transmission and/or the second PDSCH transmission occasion. The TCI state parameter may comprise a dl-OrJointTCI-StateList. The wireless device may receive the PDSCH reception using the two TCI states, for example, based on the one or more messages comprising the downlink-or-joint TCI state list parameter. The list of TCI states may comprise the two TCI states. The second DCI may comprise a TCI field that may be different from the TCI selection field. The wireless device may receive the PDSCH reception, for example, based on the second DCI that may indicate the one or more DM-RS ports within one CDM group. The one or more messages may not comprise a TCI selection parameter that may indicate the presence of a TCI selection field in a DCI format. The second DCI may be with the DCI format. The one or more messages that may not comprise the TCI selection parameter may indicate to use (e.g., apply) the two TCI states to the PDSCH reception. A value (e.g., '10') of the TCI selection field in the second DCI may indicate to use (e.g., apply) the two TCI states for the PDSCH reception. The receiving the PDSCH reception using the modulation order may comprise using (e.g., applying) the modulation order for both the first PDSCH transmission occasion and the second PDSCH transmission occasion. The wireless device may receive one or more second messages that may comprise a second repetition scheme parameter that may indicate the frequency domain scheme. The wireless device may receive a third DCI that may schedule or activate a second PDSCH reception. The third DCI may comprise a TCI field that may indicate second two TCI states for the second PDSCH reception. The wireless device may determine a second modulation order for a third PDSCH transmission occasion associated with a first TCI state of the second two TCI states, for example, based on the third DCI indicating the second two TCI states for the second PDSCH reception. The wireless device may receive the second PDSCH reception using the second modulation order in both the third PDSCH transmission occasion and a fourth PDSCH transmission occasion associated with a second TCI state of the second two TCI states. The one or more second messages may not comprise a TCI state parameter indicating a list of TCI states for both uplink transmissions and downlink receptions via the cell. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more messages. A computer-readable medium may store instructions that, when executed, cause performance of the described method, additional operations, and/or include the additional elements.

A method comprising: receiving, by a wireless device, one or more messages comprising one or more configuration parameters. The one or more configuration parameters may indicate at least two discontinuous transmission (DTX) configurations for a cell, a channel state information (CSI) report configuration indicating one or more CSI-RS, and/or which one of the at least two DTX configurations to use (e.g., apply) to the CSI report configuration. The wireless device may determine whether to receive or not receive the one or more CSI-RSs during/in a non-active time/period/duration of a first DTX configuration of the at least two DTX configurations, for example, based on the one or more configuration parameters. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more messages. A computer-readable medium may store instructions that, when executed, cause performance of the described method, additional operations, and/or include the additional elements.

A method comprising: receiving, by wireless device, one or more messages comprising one or more configuration parameters. The one or more configuration parameters may indicate at least two discontinuous reception (DRX) configurations for a cell, not to follow a unified transmission configuration indicator (TCI) state for a sounding reference signal (SRS) resource set, and/or which one of the at least two DRX configurations to use (e.g., apply) for the SRS resource set. The wireless device may determine whether to send (e.g., transmit) or not send (e.g., transmit) an SRS via an SRS resource in the SRS resource set during/in a non-active time/period/duration of a first DRX configuration of the at least two DRX configurations, for example, based on the one or more configuration parameters. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more messages. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1.   A method comprising:

    receiving, by a wireless device, one or more messages comprising:

        a repetition scheme parameter indicating a frequency domain scheme; and
        a downlink-or-joint transmission configuration indicator (TCI) state list parameter indicating a list of TCI states for both uplink transmission and downlink reception;

    receiving downlink control information (DCI) configured to schedule a physical downlink shared channel (PDSCH) reception with a number of resource blocks (RBs); and
    based on a TCI selection field in the DCI indicating to apply two TCI states to the PDSCH reception:

        receiving, using a first TCI state of the two TCI states, one or more first RBs of the number of the RBs of the PDSCH reception; and
        receiving, using a second TCI state of the two TCI states, one or more second RBs of the number of the RBs of the PDSCH reception.

2.   The method of claim 1, wherein:

    the TCI selection field in the DCI indicates to apply the two TCI states to the PDSCH reception; or
    an absence of the TCI selection field in the DCI indicates to apply the two TCI states to the PDSCH reception; and
    wherein the receiving the PDSCH reception comprises receiving the PDSCH reception using a modulation order in both:

        a first PDSCH transmission occasion associated with the first TCI state of the two TCI states; and
        a second PDSCH transmission occasion associated with the second TCI state of the two TCI states; and

    wherein the modulation order is based on the TCI selection field, or the absence of the TCI selection field,



**EP 4 531 321 A1**

indicating to apply the two TCI states to the PDSCH reception.

3. The method of any one of claims 1-2, further comprising:

determining, based on assigned physical resource blocks (PRBs) for the first TCI state, a first mapping to resource elements for a first PDSCH transmission occasion; and
determining, based on assigned PRBs for the second TCI state, a second mapping to resource elements for a second PDSCH transmission occasion.

4. The method of any one of claims 1-3, further comprising:

determining a first redundancy version (RV) to apply to a first PDSCH transmission occasion, wherein the determining the first RV is based on a first value being equal to zero; and
determining a second RV to apply to a second PDSCH transmission occasion, wherein the determining the second RV is based on a second value being is equal to one.

5. The method of any one of claims 1-4, wherein the receiving the one or more first RBs and the receiving the one or more second RBs is further based on precoding granularity in a frequency domain.

6. The method of any one of claims 1-5, wherein the DCI comprises an antenna port field indicating one or more demodulation reference signal (DM-RS) ports within one code division multiplexing (CDM) group.

7. The method of any one of claims 1-6, further comprising receiving a control message indicating the two TCI states in the list of TCI states.

8. The method of any one of claims 1-7, wherein the DCI comprises a redundancy version (RV) field indicating an RV value in an RV table.

9. The method of any one of claims 1-8, wherein the repetition scheme parameter indicates a frequency domain scheme that is a frequency domain multiplexing (FDM) scheme.

10. The method of any one of claims 1-9, further comprising receiving one or more second messages comprising a second repetition scheme parameter indicating the frequency domain scheme

11. The method of any one of claims 1-10, wherein the one or more first RBs are even precoding resource block groups (PRBs); and wherein the one or more second RBs are odd PRBs.

12. The method of any one of claims 1-11, the list of TCI states comprises the two TCI states.

13. A computing device comprising:

one or more processors; and
memory storing instructions that, when executed by the one or more processors, cause the computing device to perform the method of any one of claims 1 to 12.

14. A system comprising:

a wireless device configured to perform the method of any one of claims 1 to 12; and
a base station configured to send the one or more messages.

15. A computer-readable medium storing instructions that, when executed, cause performance of the method of any one of claims 1 to 12.

**FIG. 1A**

**FIG. 1B**

EP 4 531 321 A1

FIG. 2A

FIG. 2B

**IP Packets**

FIG. 3

FIG. 4A

FIG. 4B

**FIG. 5A**

Downlink

**FIG. 5B**

Uplink

EP 4 531 321 A1

FIG. 6

EP 4 531 321 A1

**1 Frame (10 ms)**

| 0 | 1 | 2 | 3 | 4 | 5 | 6 | 7 | 8 | 9 |

**1 Subframe (1 ms)**

Subcarrier spacing = 15 kHz
1 slot per subframe

**1 Slot (1 ms, 14 OFDM Symbols)**

Subcarrier spacing = 30 kHz
2 slots per subframe

**1 Slot (0.5 ms, 14 OFDM Symbols)**

Subcarrier spacing = 60 kHz
4 slots per subframe

**1 Slot (0.25 ms, 14 OFDM Symbols)**

Subcarrier spacing = 120 kHz
8 slots per subframe

**1 Slot (0.0125 ms, 14 OFDM Symbols)**

**FIG. 7**

FIG. 8

Frequency

Time

NR Carrier Bandwidth (Up to 3300 Subcarriers)

Resource Element (RE) 1 Symbol x 1 Subcarrier

Resource Block (RB) 12 Subcarriers

One Slot (14 Symbols)

EP 4 531 321 A1

**FIG. 9**

EP 4 531 321 A1

**FIG. 10A**

**FIG. 10B**

**FIG. 11A**

**FIG. 11B**

FIG. 12A

FIG. 12B

**Wireless Device 1301**     **Base Station 1302**

Configuration 1310

Msg 1 1311

Msg 2 1312

Msg 3 1313

Msg 4 1314

**FIG. 13A**

**Wireless Device 1301**     **Base Station 1302**

Configuration 1320

Msg 1 1321

Msg 2 1322

**FIG. 13B**

**Wireless Device 1301**     **Base Station 1302**

Configuration 1330

Msg A 1331

Preamble 1341

1342 Transport block

Msg B 1332

**FIG. 13C**

EP 4 531 321 A1

CORESET
1404

CORESET
1403

CORESET
1402

CORESET
1401

Bandwidth

One slot

**FIG. 14A**

EP 4 531 321 A1

| CORESET | → | CCE-to-REG mapping | → | Search Space | → PDCCH candidate<br>→ PDCCH candidate<br>→ PDCCH candidate |

**FIG. 14B**

Base Station 1504

Peripheral(s) 1516

Memory 1514

GPS Chipset 1517

TX Processing System 1510

Processing System 1508

RX Processing System 1512

Air Interface 1506

Wireless Device 1502

TX Processing System 1520

Processing System 1518

RX Processing System 1522

Peripheral(s) 1526

Memory 1524

GPS Chipset 1527

FIG. 15A

**FIG. 15B**

FIG. 16A

FIG. 16B

FIG. 16D

FIG. 16C

FIG. 17

| R 1807 | Serving Cell ID 1801 | BWP ID 1802 | Octet 1 |
|---|---|---|---|
| R 1808 | TCI state $ID_{0,1}$ 1803 | | Octet 2 |
| R 1809 | TCI state $ID_{0,2}$ 1804 | | Octet 3 |

...

| R 1810 | TCI state $ID_{N,1}$ 1805 | Octet M-1 |
|---|---|---|
| R 1811 | TCI state $ID_{N,2}$ 1806 | Octet M |

**FIG. 18**

EP 4 531 321 A1

| Block 1 1910 | Block 2 1920 | Block 3 1930 | ... | Block N-1 1940 | Block N 1950 |

| DTX 1 1911 | DRX 1 1912 | DTX 2 1913 | DRX 2 1914 | | DTX 1 1931 | DTX 2 1933 | | DTX 1 1941 | DRX 1 1942 | DRX 2 1944 | | DTX 1 1951 | DRX 1 1952 | DTX 2 1953 |

**FIG. 19A**

| Block 1 1910 | Block 2 1920 | Block 3 1930 | ... | Block N-1 1940 | Block N 1950 |

| DTX 1 1911 | DRX 1 1912 | 0 |

| DTX 2 1933 | DRX 2 1934 | 1 |

| DTX 1 1941 | 0 |

| DRX 2 1954 | 1 |

**FIG. 19B**

```
CSI-ReportConfig ::=          SEQUENCE {
   reportConfigId                          CSI-ReportConfigId,
   carrier                                 ServCellIndex
   resourcesForChannelMeasurement          CSI-ResourceConfigId,
   csi-IM-ResourcesForInterference         CSI-ResourceConfigId
   nzp-CSI-RS-ResourcesForInterference     CSI-ResourceConfigId
   DTX Index/Indicator                     INTEGER (0..1)
   Apply-DTX                               ENUMERATED {first, second}
   reportQuantity    CHOICE {
      none              NULL,
      cri-RI-PMI-CQI    NULL,
      cri-RI-i1         NULL,
      cri-RI-i1-CQI
      cri-RI-CQI        NULL,
      cri-RSRP          NULL,
      ssb-Index-RSRP    NULL,
      cri-RI-LI-PMI-CQI NULL
   }}

CSI-ResourceConfig ::=    SEQUENCE {
   csi-ResourceConfigId         CSI-ResourceConfigId,
   nzp-CSI-RS-ResourceSetList   SEQUENCE (SIZE (1..maxNrofNZP-CSI-RS-ResourceSetsPerConfig))
                                            OF NZP-CSI-RS-ResourceSetId
   resourceType                 ENUMERATED {aperiodic, semiPersistent, periodic}
   }
```

FIG. 20

```
SRS-ResourceSet ::=            SEQUENCE {
   srs-ResourceSetId              SRS-ResourceSetId,
   srs-ResourceIdList             SEQUENCE (SIZE(1..maxNrofSRS-ResourcesPerSet)) OF
   SRS-ResourceId
   resourceType                   CHOICE {
      aperiodic
      semi-persistent
      periodic

      ...
   }
   usage                    ENUMERATED {beamManagement, codebook, nonCodebook, antennaSwitching}

   followUnifiedTCI-StateSRS      ENUMERATED {enabled}
   applyIndicatedTCI-State        ENUMERATED {first, second}
   DRX Index/Indicator            INTEGER (0..1)
   Apply-DRX                      ENUMERATED {first, second}
}
```

FIG. 21

EP 4 531 321 A1

TRP 1 TRP 2
2210   2220

DL/UL
RX/TX 1 2201

First DTX /DRX
active time

DL/UL
RX/TX 2 2202

DL/UL
RX/TX 3 2203

DL/UL
RX/TX 4 2204

First DTX /DRX
active time

First DTX /DRX non-active time

**FIG. 22A**

TRP 1 TRP 2
2210 2220

DL/UL
RX/TX 1 2201

DL/UL
RX/TX 2 2202

DL/UL
RX/TX 3 2203

DL/UL
RX/TX 4 2204

Second DTX /DRX
active time

Second DTX /DRX non-active time

Second DTX /DRX
active time

FIG. 22B

EP 4 531 321 A1

TRP 1  TRP 2
2310   2320

DL/UL RX/TX 1 2301

DL/UL RX/TX 2 2302

DL/UL RX/TX 3 2303

DL/UL RX/TX 4 2304

Second DTX /DRX active time

Second DTX /DRX non-active time

Second DTX /DRX active time

**FIG. 23A**

EP 4 531 321 A1

EP 4 531 321 A1

TRP 1 TRP 2
2310    2320

DL/UL
RX/TX 1 2301

DL/UL
RX/TX 2 2302

DL/UL
RX/TX 3 2303

DL/UL
RX/TX 4 2304

First DTX /DRX
active time

First DTX /DRX non-active time

First DTX /DRX
active time

FIG. 23B

Receive configuration parameter(s) indicating:
- at least two DTXs for a cell,
- which one of the at least two DTXs to apply to a CSI-RS (or to a CSI-RS resource set, or to a CSI report configuration)
2410

Receive a control command indicating activation of a first DTX of the at least two DTXs
2420

YES

The configuration parameters indicate the first DTX to use the CSI-RS?
2430

NO

Not receive the CSI-RS coreset during a non-active time/duration/period of the first DTX
2440

Receive the CSI-RS during a non-active time/duration/period of the first DTX
2450

**FIG. 24A**

Send configuration parameter(s) indicating:
- at least two DTXs for a cell,
- which one of the at least two DTXs to apply to a CSI-RS (or to a CSI-RS resource set, or to a CSI report configuration)

2415

Send a control command indicating activation of a first DTX of the at least two DTXs

2425

The configuration parameters indicate the first DTX to use the CSI-RS?

2430

YES

NO

Not send the CSI-RS during a non-active time/duration/period of the first DTX

2445

Send the CSI-RS during a non-active time/duration/period of the first DTX

2455

**FIG. 24B**

Receive configuration parameter(s) indicating:
- at least two DRXs for a cell,
- which one of the at least two DRXs to use for an SRS resource set (or for a SRS resource)

2510

Receive a control command indicating activation of a first DRX of the at least two DRXs
2520

The configuration parameters indicate the first DRX to use the SRS resource set?
2530

YES

NO

Not send an SRS in the SRS resource set during a non-active time/duration/ period of the first DRX
2540

Send an SRS in the SRS resource set during a non-active time/ duration/period of the first DRX
2550

**FIG. 25A**

Send configuration parameter(s) indicating:
- at least two DRXs for a cell,
- which one of the at least two DRXs to use for an SRS resource set (or for a SRS resource)

2515

Send a control command indicating activation of a first DRX of the at least two DRXs
2525

YES ⟨ The configuration parameters indicate the first DRX to use the SRS resource set?
2530 ⟩ NO

Not receive an SRS in the SRS resource set during a non-active time/duration/period of the first DRX
2545

Receive an SRS in the SRS resource set during a non-active time/duration/period of the first DRX
2555

FIG. 25B

Receive, by a wireless device, one or more messages comprising:
    a repetition scheme parameter indicating a frequency domain scheme; and
    a downlink-or-joint transmission configuration indication (TCI) state list parameter indicating a list of TCI states for both uplink transmissions and downlink reception;

2610

Receive downlink control information (DCI) configured to schedule a physical downlink shared channel (PDSCH) reception with a number of resource blocks (RBs);

2620

Based on a TCI selection field in the DCI indicating to use two TCI states for the PDSCH reception or based on a TCI selection field not being configured in the DCI:
    receive, using a first TCI state of the two TCI states, one or more first RBs of the number of the RBs of the PDSCH reception; and
    receive, using a second TCI state of the two TCI states, one or more second RBs of the number of the RBs of the PDSCH reception.

2630

# FIG. 26A

Send, by a base station, one or more messages comprising:
    a repetition scheme parameter indicating a frequency domain scheme; and
    a downlink-or-joint transmission configuration indication (TCI) state list
parameter indicating a list of TCI states for both uplink transmissions and downlink
reception;

<u>2615</u>

Send downlink control information (DCI) configured to schedule a physical downlink
shared channel (PDSCH) reception with a number of resource blocks (RBs);

<u>2625</u>

Based on a TCI selection field in the DCI indicating to use two TCI states for the
PDSCH reception or based on a TCI selection field not being configured in the DCI:
    send, using a first TCI state of the two TCI states, one or more first RBs of the
number of the RBs of the PDSCH reception; and
    send, using a second TCI state of the two TCI states, one or more second
RBs of the number of the RBs of the PDSCH reception.

<u>2635</u>

# FIG. 26B

Receive, by a wireless device, one or more messages comprising:
      a repetition scheme parameter indicating a frequency domain scheme; and
      a downlink-or-joint transmission configuration indication (TCI) state list parameter indicating a list of TCI states for both uplink transmissions and downlink reception;

2710

Receive downlink control information (DCI) configured to schedule a physical downlink shared channel (PDSCH) reception with a number of resource blocks (RBs); wherein:
      a TCI selection field in the DCI indicates to apply two TCI states to the PDSCH reception; or
      an absence of a TCI selection field in the DCI indicates to apply two TCI states to the PDSCH reception;

2720

Based on the TCI selection field indicating to apply the two TCI states to the PDSCH reception or based on the absence of the TCI selection field indicating to apply the two TCI states to the PDSCH reception,
      determine a modulation order for a first PDSCH transmission occasion associated with a first TCI state of the two TCI states

2730

Receive the PDSCH reception using the modulation order in both:
      the first PDSCH transmission occasion associated with the first TCI state of the two TCI states; and
      a second PDSCH transmission occasion associated with a second TCI state of the two TCI states.

2740

# FIG. 27A

Send, by a base station, one or more messages comprising:
     a repetition scheme parameter indicating a frequency domain scheme; and
     a downlink-or-joint transmission configuration indication (TCI) state list parameter indicating a list of TCI states for both uplink transmissions and downlink reception;

2715

Send downlink control information (DCI) configured to schedule a physical downlink shared channel (PDSCH) reception with a number of resource blocks (RBs); wherein:
     a TCI selection field in the DCI indicates to apply two TCI states to the PDSCH reception; or
     an absence of a TCI selection field in the DCI indicates to apply two TCI states to the PDSCH reception;

2725

Based on the TCI selection field or the absence of the TCI selection field indicating to apply the two TCI states to the PDSCH reception,
determine a modulation order for a first PDSCH transmission occasion associated with a first TCI state of the two TCI states

2735

Receive the PDSCH reception using the modulation order in both:
     the first PDSCH transmission occasion associated with the first TCI state of the two TCI states; and
     a second PDSCH transmission occasion associated with a second TCI state of the two TCI states.
2745

**FIG. 27B**

Europäisches
Patentamt

European
Patent Office

Office européen
des brevets

# EUROPEAN SEARCH REPORT

Application Number

EP 24 20 2966

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/022602 A1 (ZHU DALIN [US] ET AL) 26 January 2023 (2023-01-26) <br> * paragraph [0067] * <br> * paragraph [0101] * <br> * paragraph [0106] * <br> * paragraph [0683] - paragraph [0690]; figure 15 * <br> - - - - - | 1-15 | INV. <br> H04L5/00 <br> H04L1/08 |
| X | US 2023/199764 A1 (ZHU DALIN [US] ET AL) 22 June 2023 (2023-06-22) <br> * paragraph [0482] - paragraph [0485] * <br> - - - - - | 1-15 | |
| X | US 2022/224482 A1 (KIM KYUSEOK [KR] ET AL) 14 July 2022 (2022-07-14) <br> * paragraph [0197] * <br> * paragraph [0230] * <br> * paragraph [0288] * <br> * paragraph [0303] * <br> * paragraph [0307] * <br> * paragraph [0403] * <br> * claims 1, 7 * <br> - - - - - | 1-15 | |
| A | US 2022/304028 A1 (BAGHERI HOSSEIN [US] ET AL) 22 September 2022 (2022-09-22) <br> * claim 3 * <br> - - - - - | 1-15 | TECHNICAL FIELDS SEARCHED (IPC) <br><br> H04L |

The present search report has been drawn up for all claims

| Place of search | Date of completion of the search | Examiner |
|---|---|---|
| The Hague | 22 January 2025 | Devillers, Bertrand |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 24 20 2966

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2025

| Patent document cited in search report | Publication date | Patent family member(s) | | Publication date |
|---|---|---|---|---|
| US 2023022602 A1 | 26-01-2023 | EP | 4356672 A1 | 24-04-2024 |
| | | KR | 20240035479 A | 15-03-2024 |
| | | US | 2023022602 A1 | 26-01-2023 |
| | | WO | 2023003358 A1 | 26-01-2023 |
| US 2023199764 A1 | 22-06-2023 | CN | 118435687 A | 02-08-2024 |
| | | EP | 4434285 A1 | 25-09-2024 |
| | | KR | 20240122788 A | 13-08-2024 |
| | | US | 2023199764 A1 | 22-06-2023 |
| | | WO | 2023121240 A1 | 29-06-2023 |
| US 2022224482 A1 | 14-07-2022 | KR | 20220039745 A | 29-03-2022 |
| | | US | 2022224482 A1 | 14-07-2022 |
| | | US | 2023074690 A1 | 09-03-2023 |
| | | WO | 2021066630 A1 | 08-04-2021 |
| US 2022304028 A1 | 22-09-2022 | CN | 113574825 A | 29-10-2021 |
| | | CN | 117914457 A | 19-04-2024 |
| | | EP | 3949226 A1 | 09-02-2022 |
| | | US | 2020314881 A1 | 01-10-2020 |
| | | US | 2022304028 A1 | 22-09-2022 |
| | | WO | 2020194269 A1 | 01-10-2020 |

EPO FORM P0459

For more details about this annex : see Official Journal of the European Patent Office, No. 12/82

**EP 4 531 321 A1**

**Patent documents cited in the description**

- US 63540418